(19) Europäisches Patentamt
European Patent Office
Office européen des brevets

(11) EP 2 716 719 A1

# (12) EUROPÄISCHE PATENTANMELDUNG

(43) Veröffentlichungstag:
**09.04.2014 Patentblatt 2014/15**

(51) Int Cl.:
***C09C 1/44*** *(2006.01)* ***C01B 31/04*** *(2006.01)*

(21) Anmeldenummer: **12190142.5**

(22) Anmeldetag: **26.10.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **02.10.2012 DE 102012109404**

(71) Anmelder:
- **Eckart GmbH
91235 Hartenstein (DE)**
- **BYK-Chemie GmbH
46483 Wesel (DE)**

(72) Erfinder:
- **Wolfrum, Christian
91052 Erlangen (DE)**
- **Berger, Angela
91052 Erlangen (DE)**
- **Schneider, Alexandra
91099 Poxdorf (DE)**
- **Göbelt, Bernd
46487 Wesel (DE)**

(74) Vertreter: **Louis Pöhlau Lohrentz
Patentanwälte
Postfach 30 55
90014 Nürnberg (DE)**

## (54) Graphen-haltige Suspension, Verfahren zu deren Herstellung, Graphenplättchen und Verwendung

(57) Die Erfindung betrifft eine Suspension, umfassend ein wassermischbares, vorzugsweise wässriges, Lösungsmittel, Graphenplättchen und mindestens 1 Additiv gemäß Formel I

$$cR(\text{-}Sp\text{-}W)_x \qquad (I),$$

mit den Strukturelementen cR, Sp und W. Die Erfindung betrifft ferner ein Verfahren zur Herstellung der Suspension, Graphenplättchen und deren Verwendung.

EP 2 716 719 A1

## Beschreibung

Die vorliegende Erfindung betrifft eine Graphenplättchen und ein wassermischbares Lösungsmittel umfassende Suspension, ein Verfahren zu deren Herstellung, Graphenplättchen sowie deren Verwendung.

US 7,892,514 B2 offenbart ein Verfahren zur Herstellung eines Graphenmaterials mittels Interkalation von Halogen in Graphitstrukturen. Hierbei wird das Graphit gegenüber Halogenverbindungen bei einer Temperatur, die über dem Schmelzpunkt oder Sublimationspunkt der Halogenverbindungen, liegt, ausgesetzt, so dass Halogenverbindungen in die Graphitstruktur interkalieren. Hierauf folgt das Erhitzen über die Siedetemperatur des Halogens, so dass es zu einer Delaminierung von Graphen-haltigen Plättchen kommt.

Die US 2009/0028777 A1 offenbart ein Verfahren zur Herstellung von delaminiertem Graphit, flexiblem Graphit und nanoskaliertem Graphenplättchen. Das Herstellungsverfahren beruht auf einem Interkalationsschritt, worunter eine chemische Oxidation mittels einer Carbonsäure und Wasserstoffperoxid verstanden wird. Zur Delamination wird das Interkalationsprodukt, gegebenenfalls unter Einwirkung von mechanischen Kräften, erwärmt.

Die US 7,914,844 B2 offenbart ein Verfahren zur Herstellung einer Dispersion von reduzierten Graphenoxidnanoplättchen, wobei isozyanatbehandelte Graphenoxidnanoplättchen in Gegenwart eines Reduktionsmittels und eines Polymer behandelt werden. Als Reduktionsmittel kann beispielsweise Hydrazinhydrat in Wasser oder N,N-Dimethylhydrazin in organischem Lösungsmittel eingesetzt werden.

Derartige Verfahren weisen verschiedene Probleme auf. Beispielsweise ist die Herstellung von Graphen mittels Sublimation äußerst aufwendig und energieintensiv. Eine Oxidation von Graphit wiederum beeinträchtigt stark die elektronischen Eigenschaften des erhaltenen Graphenoxids, wobei eine ausreichende nachträgliche Reduktion zu Graphen nicht nur sehr aufwendig, sondern unter technischen Bedingungen auch nur partiell zu realisieren ist. Die Verwendung von interkalierenden Verbindungen, die nach einer Erwärmung über den Siedepunkt aufgrund von Dampfbildung die Schichten trennen, ist sehr zeitaufwendig und infolge der Prozessführung nur unter großem Aufwand in einen technischen Maßstab umzusetzen.

Die US 7,824,651 B2 offenbart ein Verfahren zur Herstellung von Graphen, wobei Graphitmaterial zunächst in einem flüssigen Medium, das ein Tensid oder Dispersionsmittel enthält, dispergiert und nachfolgend unter Einwirkung von Ultraschall zerkleinert wird.

Die WO 2011/070026 A2 offenbart ein Kohlenstoffpartikelgranulat, welches aus Primärpartikeln auf Kohlenstoffbasis und einem Additiv gebildet ist. Die Primärpartikel umfassen Graphitmaterial und/oder vereinzelbare Kohlenstoffnanoröhren (CNT) und/oder Kohlenstoffnanofasern (CNF) und/oder Kohlenstoffnanopartikel mit hohem Aspektverhältnis und/oder einzelne Graphenschichten und/oder dünne Graphenschichtpakete. Das Additiv kann als Tensid und/oder Polymer und/oder Monomer und/oder Polyelektrolyt ausgebildet sein.

In der US 2010/0022422 A1 wird ein Verfahren zur Nassvermahlung von Graphit unter Einsatz von Lösungsmittel und Dispergierungsmittel beschrieben. Das Dispergierungsmittel kann eine lipophile Kohlenwasserstoffgruppe und eine polare hydrophile Gruppe enthalten. Es werden die typischerweise in der Automobilindustrie verwendete Dispergierungsmittel eingesetzt, welche universell zur Herstellung von Kohlenstoffnanoröhren, Graphitflakes, Kohlenstofffasern und Kohlenstoffpartikeln einsetzbar sein sollen.

Es besteht ein Bedarf an großen Mengen an Graphenplättchen sowie einem Verfahren zur Herstellung von Graphenplättchen, wobei vorteilhafterweise die Graphenplättchen direkt in einem für viele Anwendungen geeignetem Lösungsmittel erhalten und eine sinnvolle Kombination aus preiswerter Herstellungsmöglichkeit und dennoch ausreichend ausgeprägten vorteilhaften Eigenschaften des monolagigen Graphens erzielt werden.

Die der vorliegenden Erfindung zugrunde liegende Aufgabe wird gelöst durch Bereitstellung einer Suspension, umfassend ein wassermischbares, vorzugsweise wässriges, Lösungsmittel, Graphenplättchen und mindestens 1 Additiv gemäß Formel (I)

$$cR(\text{-}Sp\text{-}W)_x \qquad (I),$$

mit den Strukturelementen cR, Sp und W,
wobei
das Strukturelement cR ein 2 bis 7 aromatische Ringe umfassendes, kondensiertes, polycyclisches Ringsystem ist,
das Strukturelement Sp ein eine lineare Kette aufweisender Abstandshalter ist, bei dem in der linearen Kette 2 bis 10 Atome angeordnet sind und wenigstens eine Einfachbindung in der linearen Kette enthalten ist,
und das Strukturelement W die Löslichkeit des Additivs in Wasser erhöht,
wobei,
wenn kein Strukturelement W wenigstens eine Gruppe, die aus der Gruppe, die aus Polyoxyalkylengruppe mit wenigstens 3 Alkylenoxideinheiten, Monosaccharidgruppen, Disaccharidgruppen, Oligosaccharidgruppen mit 3 bis 10 Saccharideinheiten, Polyoxazolingruppen mit 3 bis 10 Oxazolineinheiten, - $S(=O)_2OH$, $-S(=O)_2NH_2$, $-O-P(=O)(OR^{cR})(OH)$, $-O-P(=O)(OH)_2$, $-P(=O)(OR^{cR})(OH)$, $-P(=O)(OH)_2$, $-O-S(=O)_2OH$ und $-S(=O)_2OH$, besteht, ausgewählt wird, aufweist, die

Strukturelemente W insgesamt dann mindestens zwei identische oder unterschiedliche funktionelle protonierbare, protonierte, deprotonierbare oder deprotonierte Gruppen aufweist, wobei $R^{cR}$ jeweils unabhängig voneinander eine unsubstituierte, verzweigte oder unverzweigte C1 bis C3 Alkylgruppe, vorzugsweise Methyl, Ethyl, Prop-1-yl oder Prop-2-yl, bedeutet,

und

wobei x eine ganze Zahl aus einem Bereich von 1 bis 4 ist.

Die vorgenannten Bestandteile des Additivs können, soweit nicht anders angegeben, jeweils unabhängig voneinander gewählt werden. Beispiele für diese Gruppen sind die vorgenannten Einheiten (-Sp-W) und W. Naturgemäß umfasst sind hiervon auch nachfolgend eingeführte Gruppen. Die Begriffe "C1-C8" im Sinne der vorliegenden Erfindung bedeuten, dass die betreffende Einheit, beispielsweise eine Alkylkette, eine Anzahl von Kohlenstoffatomen im Bereich von 1 bis 8 aufweist. Analoges gilt für andere Zahlenbereiche wie "C1-C6" für entsprechende Einheiten mit einer Anzahl von Kohlenstoffatomen im Bereich von 1 bis 6. Beispiele von Alkylgruppen mit 1 bis 6 Kohlenstoffatomen sind Methyl, Ethyl, n-Propyl, Isopropyl, n-Butyl, sec-Butyl, Isobutyl, tert-Butyl, 1-Methylpropyl, n-Pentyl, 3-Methylbutyl, 2-Methylbutyl, 1-Methylbutyl, 2,2-Dimethylpropyl, 1,2-Dimethylpropyl, 1,1-Dimethylpropyl, 1-Ethylpropyl, n-Hexyl, 4-Methylpentyl, 3-Methylpentyl, 2-Methylpentyl, 1-Methylpentyl, 3,3-Dimethylbutyl, 2,3-Dimethylbutyl, 1,3-Dimethylbutyl, 2,2-Dimethylbutyl, 1,2-Dimethylbutyl, 1,1-Dimethylbutyl, 1,2,2-Trimethylpropyl, 1,1,2-Trimethylpropyl, 2-Ethylbutyl, 1-Ethylbutyl, sowie analoge Struktureinheiten mit mindestens 1 Doppelbindung und/oder Dreifachbindung.

Bevorzugte Weiterbildungen der erfindungsgemäßen Suspension sind in den Unteransprüchen 2 bis 12 angegeben.

Die der Erfindung zugrunde liegende Aufgabe wird auch durch Bereitstellung eines Verfahrens zur Herstellung der erfindungsgemäßen Suspension gelöst, wobei das Verfahren die folgenden Schritte umfasst:

a) Bereitstellen einer Suspension von Graphit in einem wassermischbaren, vorzugsweise wässrigen, Lösungsmittel, und

b) Zerkleinern des Graphits unter Eintragen von Energie in die Suspension mittels Ultraschall, Kugelmühle, Rührwerkskugelmühle, Rotor-Stator-System, Homogenisator oder Kombinationen davon unter Erhalt von Graphenplättchen,

wobei in Schritt a) und/oder b) ein Additiv gemäß Formel (I)

$$cR(\text{-Sp-W})_x \qquad (I)$$

zugegeben wird.

Eine bevorzugte Weiterbildung des erfindungsgemäßen Verfahrens ist im Unteranspruch 14 angegeben.

Die der Erfindung zugrunde liegende Aufgabe wird ferner durch die Bereitstellung von Graphenplättchen, die gemäß dem erfindungsgemäßen Verfahren hergestellt sind, gelöst. Vorzugsweise liegen die Graphenplättchen als Suspension vor.

Ferner wird die der Erfindung zugrunde liegende Aufgabe durch die Verwendung eines Additivs gemäß Formel (I)

$$cR(\text{-Sp-W})_x \qquad (I),$$

bei der Stabilisierung und/oder Herstellung von Graphenplättchen, vorzugsweise in einer Suspension, wobei das Additiv gemäß Formel (I) eine Struktur, wie in einem der Ansprüche 1 bis 12 angegeben, aufweist, gelöst.

Vorzugsweise können die erfindungsgemäßen Graphenplättchen, vorzugsweise als Suspension, bei der Herstellung von elektronischen Materialien, elektronischen Gegenständen, wie elektronischen Schaltungen und Kondensatoren wie Supercaps (Superkondensatoren), elektrisch leitfähigen Filmen, chemischen Sensoren, optischen Materialien und Kompositmaterialien, wie verstärkten und/oder elektrisch leitfähigen Kunststoffen, Batterien und Membranen, verwendet werden.

Erfindungsgemäß werden unter dem Begriff "Graphenplättchen" Strukturen verstanden, die sowohl eine einzelne Graphenmonolage als auch mehrere übereinanderliegende Graphenlagen umfassen. Bei einer Graphenmonolage handelt es sich um eine zweidimensionale Kohlenstoffstruktur, bei der die Kohlenstoffatome bienenwabenförmig, mithin in einer Sechseckstruktur, angeordnet sind. Bei dieser bienenwabenförmigen Struktur ist, abgesehen von den Randbereichen, jedes Kohlenstoffatom von drei weiteren Kohlenstoffatomen umgeben. Im Unterschied zu Fulleren und Kohlenstoffnanoröhren weist Graphen keine sphärische bzw. röhrenförmige Struktur, sondern eine im Wesentlichen flächige Struktur auf. Erfindungsgemäß werden unter dem Begriff Graphenplättchen auch im Wesentlichen flächige Strukturen verstanden, die durch eine geringe Anzahl an übereinander angeordneten Graphenmonolagen gekennzeichnet sind. Dies ist beispielsweise ersichtlich aus einem Intensitätsverhältnis des 2D-Peaks zum G-Peak im Ramanspektrum, welches bei den erfindungsgemäßen Graphenplättchen in einem Bereich von 0,5 bis 2 liegt. Besonders bevorzugt liegt das Intensitätsverhältnis des 2D-Peaks zum G-Peak im Ramanspektrum der erfindungsgemäßen Graphenplättchen in einem Bereich von 0,65 bis 1,9.

Die graphentypischen vorteilhaften Eigenschaften, wie beispielsweise die elektrische Leitfähigkeit oder die mechanische Stabilität hieraus gefertigter Objekte wie beispielsweise Membranen, sind bei monolagigem Graphenplättchen am stärksten ausgeprägt. Demgemäß kann es bevorzugt sein, Suspensionen bereitzustellen, die weitgehend monolagige Graphenplättchen enthalten. Für viele Anwendungen ist dies jedoch nicht erforderlich. Es hat sich überraschenderweise gezeigt, dass auch mit einer Suspension von erfindungsgemäßen Graphenplättchen, die ein Gemisch aus Graphenplättchen mit einer unterschiedlichen Anzahl an Graphenmonolagen enthält, gute Ergebnisse, beispielsweise hinsichtlich der elektrischen Leitfähigkeit oder mechanischen Stabilität, erzielt werden. Diese Suspensionen können einfach hergestellt werden und ermöglichen mithin einen Einsatz im technischen Maßstab.

Erfindungsgemäß wird mit dem Begriff "Strukturelement cR" ein kondensiertes polycyclisches Ringsystem umfassend mindestens zwei und maximal sieben aromatischen Ringen verstanden. Der Begriff "aromatisch" im Sinne der vorliegenden Erfindung bezeichnet, dass die Zahl der delokalisierten $\pi$-Elektronen der einzelnen Ringe der Hückel-Regel entspricht und beispielsweise 2, 6 oder 10 ist. Vorzugsweise bezeichnet der Begriff "aromatisch" im Zusammenhang mit dem kondensierten Ringsystem des erfindungsgemäß zu verwendenden Additivs gemäß Formel (I) Ringe mit 6 oder 10 delokalisierten Elektronen, insbesondere mit 6 delokalisierten Elektronen. Beispiele des Strukturelements cR sind Naphthalen, Phenalen, Anthracen, Phenanthren, Tetracen, Chrysen, Pyren, Perylen, Pentacen, Pentaphen, Hexacen, Heptaphen, Heptacen, Benzo[a]pyren, sowie deren Kondensationsprodukte mit nichtaromatischen Carbocyclen, nichtaromatischen Heterocyclen und/oder aromatischen Heterocyclen.

Bei einer Weiterbildung der Erfindung ist es bevorzugt, dass das kondensierte polycyclische Ringsystem des Strukturelements cR mindestens 2 kondensierte aromatische Ringe mit formal jeweils 6 $\pi$-Elektronen, vorzugsweise mindestens 3 aromatische Ringe mit formal jeweils 6 $\pi$-Elektronen, und noch mehr bevorzugt mindestens 4 aromatische Ringe mit formal jeweils 6 $\pi$-Elektronen, umfasst. Hierbei ist die Gesamtzahl der $\pi$-Elektronen des kondensierten Ringsystems naturgemäß geringer als die formale Summe der kondensierten Einzelringe, da einzelne $\pi$-Elektronen von mehreren Ringen genutzt werden. Insbesondere ist es bevorzugt, dass die vorgenannte Mindestanzahl an kondensierten Ringen Carbocyclen, insbesondere Phenylringe, darstellen. Die Begriffe "Carbocyclus" oder "carbocyclischer Ring" bezeichnet im Sinne der vorliegenden Erfindung Ringsysteme, deren ringbildende Atome lediglich Kohlenstoffatome sind, wie beispielsweise Benzol, Anilin, Cyclohexan, Naphthalen oder Naphthol.

Ferner ist es bevorzugt, dass das kondensierte, polycyclische Ringsystem höchstens 6, vorzugsweise höchstens 5, weiter bevorzugt höchstens 4 aromatische Ringe aufweist.

Weiter bevorzugt ist das Strukturelement cR des mindestens einen Additivs ein kondensiertes, polycyclisches Ringsystem mit 2 bis 7 aromatischen Ringen und 0 bis 4 nichtaromatischen Heterocyclen, vorzugsweise ein kondensiertes, polycyclisches Ringsystem mit 3 bis 6 aromatischen Ringen und 0 bis 2 nichtaromatischen Heterocyclen, weiter bevorzugt ein kondensiertes, polycyclisches Ringsystem mit 3 bis 5 aromatischen Ringen und 0 bis 2 nichtaromatischen Heterocyclen.

Es hat sich überraschenderweise gezeigt, dass das Strukturelement cR sehr geeignet ist, um im Rahmen der Verwendung des erfindungsgemäßen Additivs zur Delaminierung von Graphit an Kohlenstoffoberflächen von Graphit anzuhaften. Einerseits ist die Stärke der Anhaftung ausreichend, um eine ausreichende Zugwirkung auf die Graphenplättchen zu ermöglichen, während diese vom Graphit abgelöst werden. Andererseits ist die Anhaftung des Additivs an die Graphenoberfläche nicht so stark, um nach dem Delaminierungsvorgang ein etwaig gewünschtes Ablösen des Additivs, d.h. ein Trennen von Additiv und Graphenplättchen zu ermöglichen.

Neben den vorgenannten aromatischen Ringen können im kondensierten Ringsystem auch nichtaromatische carbocyclische und nichtaromatische heterocyclische Ringe enthalten sein. Die Bindung zum Strukturelement Sp kann hierbei auch über diese nichtaromatischen Ringe erfolgen. Insbesondere ist es hierbei bevorzugt, dass die nichtaromatischen Ringe planar sind, beispielsweise durch $sp^2$- oder sp-Hybridisierung in den Ringen enthaltener Kohlenstoffatome. Die Begriffe "heterocyclischer Ring" oder "Heterocyclus" bezeichnen im Sinne der vorliegenden Erfindung Ringsysteme, deren ringbildende Atome nicht lediglich auf Kohlenstoff beschränkt sind, sondern auch Heteroatome wie beispielsweise Stickstoff, Sauerstoff, Phosphor und/oder Schwefel umfassen. Beispiele von Heterocyclen sind Furan, Pyrrol, Oxazol, Tetrahydropyran, Piperidin, Pyridin und Pyrimidin.

So hat es sich bei einer erfindungsgemäßen Variante als vorteilhaft erwiesen, wenn das kondensierte, polycyclische Ringsystem mindestens ein Heteroaryl, vorzugsweise mindestens zwei Heteroaryle umfasst, wobei das mindestens eine Heteroatom ausgewählt wird aus der Gruppe, die aus Stickstoff, Sauerstoff, Schwefel und Phosphor besteht, und vorzugsweise aus der Gruppe, die aus Stickstoff und Sauerstoff besteht.

Der Begriff "unsubstituiert" im Sinne der vorliegenden Erfindung bedeutet, dass an ein Atom oder eine Struktur außer Wasserstoff keine weiteren Gruppen gebunden sind.

Unter "funktionellen protonierbaren, protonierten, deprotonierbaren oder deprotonierten Gruppen" werden Substituenten verstanden, die in eine ionische Form beispielsweise durch Zugabe von Säure bzw. Base in eine Salzform

überführt werden können oder überführt wurden. Diese protonierbaren, protonierten, deprotonierbaren oder deprotonierten Gruppen, die auch als ionisierbare oder ionisierte Gruppen bezeichnet werden können, erhöhen in Wasser oder einem wässrigen Medium die Löslichkeit des Additivs signifikant. Beispiele funktioneller protonierbarer, protonierter, deprotonierbarer oder deprotonierter Gruppen sind $-NR^{cR}$, =NH, -OH, $-N(R^{cR})_2$, $-NHR^{cR}$, $-NH_2$, -COOH, - $(N(R^{cR})_3)^+$, $-O-P(=O)(OR^{cR})(OH)$, $-O-P(=O)(OH)_2$, $-P(=O)(OR^{cR})(OH)$, $-P(=O)(OH)_2$, $-O-S(=O)_2OH$ und $-S(=O)_2OH$, wobei $R^{cR}$ eine unsubstituierte, verzweigte oder unverzweigte C1-C3 Alkylgruppe wie Methyl, Ethyl, n-Propyl und iso-Propyl ist.

Gemäß einer Variante der Erfindung ist es bevorzugt, dass das kondensierte Ringsystem neben dem wenigstens einen Rest (-Sp-W) keine weiteren sterisch anspruchsvollen Substituenten trägt, sondern vorzugsweise unsubstituiert ist oder wenigstens einen Substituenten, der aus der Gruppe, die aus =O, $-NR^{cR}$, =NH, - $OR^{cR}$, -OH, $-R^{cR}$, $-NR^{cR}_2$, $-NHR^{cR}$, $-NH_2$, $-(N(R^{cR})_3)^+$, $-C(=O)-OR^{cR}$, $-O-C(=O)-R^{cR}$ und -CN besteht, ausgewählt wird, aufweist, wobei $R^{cR}$ für unsubstituierte, verzweigte oder unverzweigte C1-C3 Alkylgruppe(n) wie Methyl, Ethyl, n-Propyl und iso-Propyl, vorzugsweise für unsubstituierte C1-C2 Alkylgruppen wie Methyl und Ethyl, steht.

Weiter bevorzugt ist das kondensierte Ringsystems cR neben dem wenigstens einen Rest (-Sp-W) unsubstituiert. Gemäß einer weiteren bevorzugten Ausführungsform werden etwaige Substituenten des Ringsystems cR aus der Gruppe, die aus unsubstituierten, verzweigten und unverzweigten C1-C3 Alkylgruppen wie Methyl, Ethyl, n-Propyl und iso-Propyl, vorzugsweise aus unsubstituierten C1-C2 Alkylgruppen wie Methyl und Ethyl, besteht, ausgewählt. Geeignete unsubstituierte, verzweigte oder unverzweigte C1-C3 Alkylgruppen sind Methyl, Ethyl, Prop-1-yl oder Prop-2-yl.

Ohne dass es als Einschränkung der Erfindung verstanden werden darf, ist es die Ansicht der Erfinder, dass ein erfindungsgemäß zu verwendendes Additiv in den Graphit zwischen die Graphenschichten vordringt und dort ähnlich einem Spalteisen beim Holzspalten die Schichten auseinanderdrückt, wodurch wiederum Graphenplättchen leichter und schonender abgelöst werden können. Der eigentliche Ablösevorgang kann nachfolgend vermutlich mit dem Ablösen eines Klettverschlusses beschrieben werden. Beginnend vom bereits aufgeweiteten Randbereich, bei dem die Bindungen bereits aufgebrochen oder gelöst sind, erfolgt ein schrittweises Aufbrechen der Graphen-Graphen-Wechselwirkungen, vermutlich auch durch die Zugwirkung von auf der Oberfläche des obersten Graphenplättchens gebundenen Additivmolekülen.

Eine zu große Anzahl an Substituenten des Typs (-Sp-W) an dem Strukturelement cR hat sich als nachteilig erwiesen. Erfindungsgemäß ist in der Formel (I) x eine ganze Zahl aus einem Bereich von 1 bis 4. Überraschenderweise ist die Wirkung des Additivs gemäß Formel (I) am besten, wenn das Additiv höchstens 4, vorzugsweise höchstens 3, weiter bevorzugt höchstens 2, noch weiter bevorzugt höchstens 1 Substituenten des Typs (-Sp-W) aufweist. Es wird vermutet, dass das vorgenannte Eindringen zwischen die Graphenschichten des Graphits während des Delaminierungsvorganges aufgrund sterischer Hinderung erschwert wird, wenn die Anzahl der Substituenten des Typs (-Sp-W) zunimmt. Insoweit ist die Verwendung eines Additivs mit der Formel cR(-Sp-W) bevorzugt, bei der das Strukturelement cR nur einen Substituenten (-Sp-W) aufweist.

Ferner kann es zur Erleichterung des Eindringens zwischen die Graphenschichten des Graphits bevorzugt sein, dass eine Kante des kondensierten Ringsystems keine sterisch anspruchsvollen Substituenten trägt. Bei einer weiteren Ausführungsform ist es daher bevorzugt, dass mindestens eine Kante des Strukturelements cR unsubsituiert ist oder gegebenenfalls vorhandene Substituenten ausgewählt werden aus der Gruppe bestehend aus C1-C2 Alkylgruppen und unsubstituierten Phenylgruppen, vorzugsweise C1-C2 Alkylgruppen wie Methyl und Ethyl. Besonders bevorzugt ist es, wenn die Kante unsubsituiert ist. Die vorgenannte Kante wird gebildet aus mindestens 5, vorzugsweise mindestens 7 und noch mehr bevorzugt mindestens 9 benachbarten Atomen am Rand des kondensierten Ringsystems des Strukturelements cR.

Gemäß einer bevorzugten Weiterbildung der Suspension ist das Strukturelement cR des mindestens einen Additivs ein kondensiertes, polycyclisches Ringsystem mit 2 bis 7 aromatischen Ringen und 0 bis 4 nichtaromatischen Heterocyclen, vorzugsweise ein kondensiertes, polycyclisches Ringsystem mit 3 bis 6 aromatischen Ringen und 0 bis 2 nichtaromatischen Heterocyclen, mehr bevorzugt ein kondensiertes, polycyclisches Ringsystem mit 3 bis 5 aromatischen Ringen und 0 bis 2 nichtaromatischen Heterocyclen.

Damit sich das kondensierte Ringsystem besonders gut an die Oberfläche der Graphenplättchen anlagern kann, ist es gemäß einer Ausführungsform der Erfindung bevorzugt, dass das kondensierte Ringsystem cR sowohl in struktureller wie auch elektronischer Hinsicht den im Graphit vorliegenden Graphenschichten ähnlich ist. Es wird vermutet, dass eine Ähnlichkeit zwischen dem kondensierten Ringsystem cR und einer Graphenplättchenoberfläche die flächige Bindung des kondensierten Ringsystems und der Graphenplättchenoberfläche stark begünstigt.

Erfindungsgemäß weist das kondensierte Ringsystem cR mindestens 2 kondensierte Ringe, vorzugsweise mindestens 3 kondensierte Ringe, noch weiter bevorzugt mindestens 4 kondensierte Ringe mit delokalisierten $\pi$-Elektronen auf. Hierbei ist es insbesondere bevorzugt, dass das kondensierte Ringsystem cR mindestens 1, vorzugsweise mindestens 2 und noch weiter bevorzugt mindestens 3 Phenylringe, noch weiter bevorzugt mindestens 4 Phenylringe umfasst. Generell scheint es aus elektronischen Gründen vorteilhaft zu sein, dass das kondensierte Ringsystem mindestens 2, vorzugsweise mindestens 3, noch mehr bevorzugt mindestens 4 Carbocyclen umfasst.

Gemäß einer bevorzugten Weiterbildung der Suspension umfasst das kondensierte, polycyclische Ringsystem des Strukturelements cR von mindestens einem Additiv mindestens einen Heterocyclus, wobei der Heterocyclus vorzugsweise mindestens 1 Atom, das aus der Gruppe, die aus Stickstoff, Sauerstoff, Schwefel und Phosphor besteht, enthält.

Gemäß einer bevorzugten Weiterbildung der Suspension umfasst das Strukturelement cR vier aromatische Ringe, vorzugsweise Pyren.

Die Pyrenstruktur hat sich überraschenderweise als sehr geeignet zur Verwendung als kondensiertes Ringsystem cR gezeigt. Es wird vermutet, dass die an sich hydrophobe Pyrenstruktur flächig sehr gut mit der Graphenplättchenoberfläche wechselwirken kann. Gleichzeitig sind die durch das Strukturelement W vermittelten hydrophilen Eigenschaften ausreichend, um die Graphenplättchen in der erfindungsgemäßen Suspension stabil dispergiert zu halten.

Gemäß einer bevorzugten Weiterbildung der Suspension werden die 2 bis 10 Atome der linearen Kette des Strukturelements Sp aus der Gruppe, die aus C, O, N, S, Si und P, vorzugsweise aus C, O, N und S, besteht, ausgewählt, mit der Maßgabe, dass in der linearen Kette, abgesehen von Kohlenstoffatomen, keine identischen Atome direkt zueinander benachbart angeordnet sind.

Gemäß einer weiteren bevorzugten Weiterbildung der Suspension weist das Strukturelement W eine Struktur gemäß Formel (II) auf:

$$-R_k((-E^{bo})_w-E^{th}-O-R^{th})_y(-F)_z \qquad (II)$$

wobei

R aus der Gruppe, die aus verzweigten und unverzweigten C1-C6 Alkylresten wie Methyl, Ethyl, n-Propyl, iso-Propyl, n-Butyl, n-Pentyl und n-Hexyl, verzweigten und unverzweigten C2-C6 Alkenylresten, verzweigten und unverzweigten C2-C6 Alkinylresten, Phenylresten, Heteroarylresten mit 4 bis 5 Kohlenstoffatomen, C5-C7 Cycloalkylresten, nichtaromatischen heterocyclischen Resten mit 4 bis 6 Kohlenstoffatomen und Mischungen davon besteht, ausgewählt wird, wobei vorgenannte Reste substituiert und unsubstituiert sein können, und wobei k 0 oder 1 ist,

$E^{bo}$ eine aus 1 bis 3 Atomen bestehende lineare Kette ist, wobei die Atome aus der Gruppe, die aus C, N und O besteht, ausgewählt werden, mit der Maßgabe, dass die Kette maximal nur 1 O oder N enthält, und wobei w 0 oder 1 ist,

$E^{th}$ eine Polyalkylenoxidkette mit 3 bis 100 Alkylenoxideinheiten, vorzugsweise 5 bis 75 Alkylenoxideinheiten, wobei die Alkylenoxideinheiten aus der Gruppe, die aus Ethoxyeinheiten, Propoxyeinheiten und Mischungen davon besteht, ausgewählt wird, ist,

$R^{th}$ aus der Gruppe, die aus H, unsubstituiertem, verzweigten und unverzweigten C1-C4 Alkyl wie Methyl, Ethyl, n-Propyl, iso-Propyl und n-Butyl und unsubstituiertem -C(=O)C1-C4-Alkyl besteht, ausgewählt wird,

F aus der Gruppe, die aus -COOH, $-(N(R^{cR})_3)^+$, $-O-P(=O)(OR^{cR})(OH)$, $-O-P(=O)(OH)_2$, $-P(=O)(OR^{cR})(OH)$, $-P(=O)(OH)_2$, $-O-S(=O)_2OH$, $-S(=O)_2OH$, Monosaccharidresten, Disaccharidresten, Oligosaccharidresten mit 3 bis 10 Saccharideinheiten und Polyoxazolinresten mit 3 bis 10 Oxazolineinheiten, ausgewählt wird,

$R^{cR}$ eine unsubstituierte, verzweigte oder unverzweigte C1 bis C3 Alkylgruppe, vorzugsweise Methyl, Ethyl, Prop-1-yl oder Prop-2-yl, ist,

und

wobei y und z jeweils unabhängig voneinander eine ganze Zahl von 0 bis 3 bedeuten, mit der Maßgabe, dass y + z mindestens 1 ist.

Vorzugsweise werden die mindestens zwei identischen oder unterschiedlichen funktionellen protonierbaren, protonierten, deprotonierbaren oder deprotonierten Gruppen ausgewählt aus der Gruppe bestehend aus -COOH, $-NH_2$, $-NHR^{cR}$, $-N(R^{cR})_2$, $-(N(R^{cR})_3)^+$, $-O-P(=O)(OR^{cR})(OH)$, $-O-P(=O)(OH)_2$, $-P(=O)(OR^{cR})(OH)$, $-P(=O)(OH)_2$, $-O-S(=O)_2OH$ und $-S(=O)_2OH$.

Bei einer erfindungsgemäß bevorzugten Ausführungsform weist F eine oder mehrere ionisierte oder ionisierbare Gruppen auf. Bei weiteren Ausführungsformen der Erfindung ist es bevorzugt, dass F ausgewählt wird aus der Gruppe bestehend aus -COOH, $-(N(R^{cR})_3)^+$, $-O-P(=O)(OR^{cR})(OH)$, $-O-P(=O)(OH)_2$, $-P(=O)(OR^{cR})(OH)$,- $P(=O)(OH)_2$, $-O-S(=O)_2OH$ und $-S(=O)_2OH$, wobei $R^{cR}$ eine unsubstituierte, verzweigte oder unverzweigte C1-C3 Alkylgruppe ist wie Methyl, Ethyl, n-Propyl und iso-Propyl.

Gemäß einer bevorzugten Weiterbildung der Suspension ist F ein Mono- oder Polyglycosid mit 2 bis 10 Pyranose- oder Furanoseresten oder ein Alkylglycosid oder Alkylpolyglycosid mit 2 bis 10 Pyranose- oder Furanoseresten, wobei das Alkyl ein verzweigtes oder unverzweigtes C1-C4 Alkyl wie Methyl, Ethyl, n-Propyl, iso-Propyl und n-Butyl ist.

Bei einer weiteren Ausführungsform der Erfindung wird F ausgewählt aus der Gruppe bestehend aus $-(NR^{cR}_3)^+$, $-O-S(=O)_2OH$, $-S(=O)_2OH$, $-O-P(=O)(OH)_2$, - $P(=O)(OH)_2$ oder Mischungen davon, wobei $R^{cR}$ eine unsubstituierte, verzweigte oder unverzweigte C1-C3 Alkylgruppe wie Methyl, Ethyl, n-Propyl und iso-Propyl ist. Derartige Additive

scheinen besonders gut geeignet zu sein, um hochqualitative Graphenplättchensuspensionen bereitszustellen, bei denen das Lösungsmittel einen sehr hohen Wasseranteil aufweist. Mithin sind diese Additive besonders gut geeignet, um wässrige Graphenplättchensuspensionen mit einer hohen Graphenplättchenkonzentration herzustellen. Der Wasseranteil des Lösungsmittels von wässrigen Graphenplättchensuspensionen beträgt vorzugsweise mindestens 90 Gew.-%, vorzugsweise mindestens 95 Gew.-%, weiter bevorzugt mindestens 98 Gew.-%, jeweils bezogen auf das Gesamtgewicht des Lösungsmittels.

Bei einer weiter bevorzugten Ausführungsform umfasst das Strukturelement W wenigstens eine ionisierte Gruppe, vorzugsweise $-(N(R^{cR})_3)^+$, wobei $R^{cR}$ eine unsubstituierte, verzweigte oder unverzweigte C1-C3 Alkylgruppe wie Methyl, Ethyl, n-Propyl und iso-Propyl ist und jedes $R^{cR}$ unabhängig voneinander gewählt werden kann.

Für den industriellen Einsatz ist es jedoch insbesondere bevorzugt, weniger komplexe Systeme einzusetzen, die sich insbesondere einfach herstellen lassen und in großer Menge kostengünstig zugänglich sind. Daher ist es bevorzugt, dass höchstens 3, vorzugsweise höchstens 2, unterschiedliche Strukturelemente W am jeweiligen Additiv vorhanden sind. Insbesondere ist es bevorzugt, dass höchstens 3, vorzugsweise höchstens 2, unterschiedliche Strukturelemente des Typs (-Sp-W) am jeweiligen Additiv vorhanden sind.

Gemäß einer sehr bevorzugten Ausführungsform weist das aromatische Ringsystem cR höchstens 4 identische, vorzugsweise höchstens 3 identische, weiter bevorzugt höchstens 2 identische Substituenten des Typs (-Sp-W) auf. Vorzugsweise weist das aromatische Ringsystem cR nur einen Substituenten des Typs (-Sp-W) auf.

Gemäß einer bevorzugten Weiterbildung der Suspension beträgt der molare Anteil an Ethoxyeinheiten in Kettenstrukturen, die aus mindestens 3 Einheiten bestehen, welche ausgewählt werden aus der Gruppe bestehend aus Ethylenoxideinheiten und Propylenoxideinheiten, in den Strukturelementen Sp und W mindestens 50 mol-%, vorzugsweise mindestens 60 mol-%.

Gemäß einer bevorzugten Weiterbildung der Suspension wird die Polyoxazolingruppe aus der Gruppe, die aus Monohydroxy- oder Monoaminoterminierten Poly-2-alkyl-2-oxazolinen oder Poly-2-alkyl-2-oxazinen, wobei Alkyl für lineare und verzweigte C1- bis C24-Alkylgruppen steht, besteht, ausgewählt. Vorzugsweise weist die lineare oder verzweigte Alkylgruppe 2 bis 12, weiter bevorzugt 2 bis 6, Kohlenstoffatome auf.

Poly-2-alkyl-2-oxazoline oder Poly-2-alkyl-2-oxazine werden durch kationische, ringöffnende Polymerisation von 2-Alkyl-2-oxazolinen oder 2-Alkyl-2-oxazinen mit Initiatoren, wie para-Toluolsulfonsäure, Methyltosylat oder Methyltriflat, erhalten. Die durch den lebenden kationischen Polymerisationsmechanismus resultierenden Oxazolinium- oder Oxaziniumendgruppen können durch alkalische Hydrolyse über Aminoesterendgruppen in die stabileren Hydroxyamide überführt werden. Ein alternativer Weg zur Herstellung von monohydroxyfunktionellen Poly-2-alkyl-2-oxazolinen oder Poly-2-alkyl-2-oxazinen ist die Polymerisation mit 2-(4-hydroxyphenyl)-N-methyl-2-oxazolinium trifluormethansulfonat als initiierender Spezies. Die Synthese von aminoterminierten Polyoxazolinen ist beispielsweise in US 6,444,776 beschrieben, deren Inhalt hiermit unter Bezugnahme aufgenommen wird. Durch Wahl des Alkylsubstituenten lässt sich die Verträglichkeit steuern. So ist beispielsweise Poly-2-ethyl-2-oxazolin durch seine Wasserlöslichkeit für hochpolare Systeme geeignet, während beispielsweise Poly-2-lauryl-2-oxazolin in unpolaren Systemen verträglich ist. Werden Blockcopolymere aus 2-Ethyl-2-oxazolin und 2-Lauryl-2-oxazolin gebildet, so zeichnen sich die Polymere durch eine besonders breite Verträglichkeit aus. Solche Poly-2-alkyl-2-oxazoline oder Poly-2-alkyl-2-oxazine besitzen meist ein zahlenmittleres Molekulargewicht Mn von 300 bis 20000 g/mol, bevorzugt von 500 bis 10000 g/mol. Einsetzbar sind unter anderem verschiedenartige 2-Oxazoline, welche eventuell zusätzliche funktionelle Gruppen aufweisen können. Derartige Spezies sind beispielsweise entsprechende fettsäurebasierte 2-Oxazoline.

Gemäß einer bevorzugten Weiterbildung der Suspension sind R und/oder die lineare Kette des Strukturelements Sp unabhängig voneinander mit Substituenten substituiert, wobei die Substituenten von R und Sp unabhängig voneinander aus der Gruppe, die aus =O, $=NR^{cR}$ =NH, -CN, -SH, $-OR^{cR}$ -OH, $-R^{cR}$ $-N(R^{cR})_2$, $-NHR^{cR}$, $-NH_2$, $-(N(R^{cR})_3)^+$, $-C(=O)OR^{cR}$, $-O-C(=O)-R^{cR}$, $-O-P(=O)(O(R^{cR})_2$, $-P(=O)(O(R^{cR})_2$, $-O-S(=O)_2-OR^{Et}$, $-S(=O)_2-OR^{Et}$, $-S(=O)_2R^{Et}$ und $-S(=O)_2N(R^{cR})_2$ besteht, ausgewählt werden, und $R^{cR}$ eine unsubstituierte, verzweigte oder unverzweigte C1 bis C3 Alkylgruppe wie Methyl, Ethyl, n-Propyl und iso-Propyl ist, wobei $R^{Et}$ eine verzweigte oder unverzweigte C1-C12 Alkylgruppe wie Methyl, Ethyl, n-Propyl, iso-Propyl, sec-Butyl, n-Butyl, iso-Butyl, tert-Butyl, n-Pentyl, n-Hexyl, n-Heptyl, n-Octyl, n-Nonyl und n-Decyl, verzweigte oder unverzweigte C2-C12 Alkenylgruppe, verzweigte oder unverzweigte C2-C12 Alkinylgruppe, C6-C10 Arylgruppe, Heteroarylgruppe mit 4-9 Kohlenstoffatomen, C5-C12 Cycloalkylgruppe oder nichtaromatische heterocyclische Gruppe mit 4-11 Kohlenstoffatomen ist, wobei die vorgenannten Gruppen substituiert oder unsubstituiert sein können, und die Substituenten von $R^{Et}$ unabhängig voneinander aus der Gruppe, die aus -COOH, -OH, $-N(R^{cR})_2$, $-O-P(=O)(OR^{cR})(OH)$, $-O-P(=O)(OH)_2$, $-P(=O)(OR^{cR})(OH)$, $-P(=O)(OH)_2$, $-O-S(=O)_2OH$ und $-S(=O)_2OH$ besteht, ausgewählt werden.

Erfindungsgemäß weist das zu verwendende Additiv gemäß Formel (I) in der linearen Kette der Struktureinheit Sp mindestens 2 Atome auf, die über eine Einfachbindung miteinander verbunden sind., d.h. zwei Atome, die weder dauerhaft noch temporär, beispielsweise infolge einer Keto-Enol-Tautomerie, über eine Doppel- oder Dreifachbindung miteinander verbunden sind. Ein Beispiel für diese Atome sind $sp^3$-hybridisierte Kohlenstoffatome. Es hat sich gezeigt, dass derartige Additive besonders gute Ergebnisse erzielen. Es wird vermutet, dass das Strukturelement W, welches

hydrophil ist, um diese Einfachbindung rotieren kann und mithin sterische Einflüsse zwischen der Graphitoberfläche bzw. der Graphenplättchenoberfläche minimiert werden. Mithin wird durch das um die Einfachbindung in dem Strukturelement Sp rotier- bzw. drehbar angeordnete Strukturelement W die Bindung des Additivs an die Graphitoberfläche bzw. der Graphenplättchenoberfläche erleichtert.

Gemäß einer bevorzugten Weiterbildung der Suspension weisen mindestens 3 Atome der linearen Kette des Strukturelementes Sp, vorzugsweise mindestens 4 Atome der linearen Kette des Strukturelementes Sp, keine Doppelbindung oder Dreifachbindung, sondern eine Einfachbindung in der linearen Kette auf, wobei auch die verknüpfenden Bindungen an cR sowie W umfasst sind. Um eine Einfachbindung können Rotationen im Additivmolekül stattfinden. Diese Rotationsfähigkeit verringert sterische Wechselwirkungen zwischen dem erfindungsgemäß zu verwendenden Additiv der Formel (I) und Graphitpartikeln bzw. Graphenplättchen. Hierbei sind auch Atome umfasst, welche endständig in der Kettenstruktur angeordnet sind und nur eine Einfachbindung in Richtung des Strukturelements cR bzw. W aufweisen

Die lineare Kette des Strukturelements Sp kann durch beliebige Atome gebildet werden. Insbesondere ist es bevorzugt, dass die Atome der Kette aus der Gruppe, die aus Kohlenstoff, Stickstoff, Sauerstoff, Schwefel, Phosphor und Silicium besteht und vorzugsweise aus der Gruppe, die aus Kohlenstoff, Stickstoff, Sauerstoff und Phosphor besteht, ausgewählt werden.

Gemäß einer bevorzugten Ausführungsform der Erfindung ist die Anzahl der Heteroatome in der linearen Kette des Strukturelements Sp gering. Es ist die Ansicht der Erfinder, dass eine zu große Anzahl an Heteroatomen sich auf die elektronischen Eigenschaften des kondensierten Ringsystems auswirkt und hierdurch die Anbindung an die Oberfläche der Graphenplättchen verschlechtert werden kann. Vorzugsweise weist die lineare Kette des Strukturelements Sp höchstens 4, vorzugsweise höchstens 3 und weiter bevorzugt höchstens 2 Heteroatome auf. Gemäß einer bevorzugten Weiterbildung der Erfindung werden die Heteroatome der linearen Kette des Strukturelementes Sp aus der Gruppe, die aus Stickstoff, Sauerstoff, Schwefel, Phosphor und Silicium besteht, und weiter bevorzugt aus der Gruppe, die aus Stickstoff, Sauerstoff und Silicium besteht, ausgewählt.

Gemäß einer weiteren bevorzugten Ausführungsform der Erfindung weist das Strukturelement Sp in der Kettenstruktur keine Heteroatome auf. Vorzugsweise ist die Kettenstruktur des Strukturelements Sp eine lineare Alkylgruppe mit 2 bis 10 C-Atomen wie Methyl, Ethyl, n-Propyl, n-Butyl, n-Pentyl, n-Hexyl, n-Heptyl, n-Octyl, n-Nonyl und n-Decyl, weiter bevorzugt von 2 bis 8 C-Atomen, noch weiter bevorzugt von 3 bis 7 C-Atomen.

Gemäß einer weiteren bevorzugten Ausführungsform der Erfindung ist die lineare Kette des Strukturelements Sp substituiert. Als vorteilhaft hat es sich erwiesen, wenn das Strukturelement Sp mindestens eine stickstoffhaltige Gruppe, insbesondere $-(N(R^{cR})_3)^+$, $-N(R^{cR})_2$, $-NHR^{cR}$, $-NH_2$, und/oder $=NR^{cR}$ aufweist, wobei $R^{cR}$ eine unsubstituierte, verzweigte oder unverzweigte C1-C3 Alkylgruppe wie Methyl, Ethyl, n-Propyl und iso-Propyl ist und jedes $R^{cR}$ unabhängig voneinander gewählt werden kann.

Gemäß einer weiteren bevorzugten Ausführungsform der Erfindung sind die Substituenten des Strukturelements Sp unpolar. Vorzugsweise werden die unpolaren Substituenten aus der Gruppe, die aus Methyl, Ethyl, n-Propyl und Isopropyl besteht, ausgewählt.

Gemäß einer weiteren bevorzugten Ausführungsform sind etwaig vorhandene Substituenten des Strukturelements Sp am mit Bezug auf das Strukturelement cR ersten rotationsfähigen Atom der linearen Kette sterisch wenig anspruchvoll. Beispiele für diese sterisch wenig anspruchsvollen Substituenten werden vorzugsweise aus der Gruppe, die aus -OH, -SH, $-NH_2$, Isopropyl, Ethyl, Methyl, methylsubstituierten quartären Ammoniumgruppen, ethylsubstituierten quartären Ammoniumgruppen und methylethylsubstituierten quartären Ammoniumgruppen besteht, ausgewählt. Insbesondere ist es bevorzugt, dass die Substituenten am ersten rotationsfähigen Atom der linearen Kette des Strukturelementes Sp aus der Gruppe, die aus Isopropyl, Ethyl und Methyl besteht, ausgewählt werden.

Bei einer weiteren bevorzugten Ausführungsform sind am zweiten rotationsfähigen Atom, wie am ersten rotationsfähigen Atom, etwaig vorhandene Substituenten sterisch wenig anspruchsvoll. So ist es beispielsweise bevorzugt, dass die Substituenten der linearen Kette des Strukturelements Sp bis zum zweiten rotationsfähigen Atom der Kette, einschließlich der Substituenten am zweiten Atom aus der Gruppe, die aus Ethyl und Methyl besteht, ausgewählt werden.

Bei einer weiteren bevorzugten Ausführungsform ist das in Bezug auf das Strukturelement cR erste rotationsfähige Atom der linearen Kette des Strukturelements Sp unsubstituiert. Das erste unsubstituierte, rotationsfähige Atom der linearen Kette wird vorzugsweise aus der Gruppe, die aus O, N und C besteht, weiter bevorzugt aus der Gruppe, die aus N und C besteht, ausgewählt. Das Stickstoffatom trägt dabei ein Wasserstoffatom (-NH-) und das Kohlenstoffatom zwei Wasserstoffatome ($-CH_2-$).

Gemäß einer bevorzugten Ausführungsform der Erfindung ist das erste unsubstituierte, rotationsfähige Atom ein Kohlenstoffatom.

Die Gesamtlänge der linearen Kette des Strukturelements Sp beträgt vorzugsweise höchstens 7, mehr bevorzugt höchstens 6 und am meisten bevorzugt höchstens 5 Atome.

Bei weiteren Ausführungsformen beträgt die Gesamtlänge der linearen Kette des Strukturelements Sp vorzugsweise mindestens 3, mehr bevorzugt mindestens 4 Atome.

Ferner beträgt die Gesamtlänge der linearen Kette des Strukturelements Sp bei weiter bevorzugten Weiterbildungen der Erfindung 2 bis 7 Atome, vorzugsweise 2 bis 6, mehr bevorzugt 3 bis 6 und noch mehr bevorzugt 3 bis 5 Atome.

Gemäß einer bevorzugten Weiterbildung der Suspension umfasst das Strukturelement Sp in der linearen Kette 2 bis 8 Kohlenstoffatome, vorzugsweise 3 bis 7 Kohlenstoffatome.

Gemäß einer bevorzugten Weiterbildung der Suspension weisen die Strukturelemente (-Sp-W) zusammengenommen die Struktur $-(CH_2)_m(-C(=O))p-O-E^{AO}-CH_3$ auf, wobei m in einem Bereich von 2 bis 10 liegt, p = 0 oder 1 ist, $E^{AO}$ aus n Ethoxyeinheiten und q Propoxyeinheiten besteht, n in einem Bereich von 3 bis 100 und q in einem Bereich von 0 bis 97 liegt, wobei n+q in einem Bereich von 3 bis 100 liegt. Bei bestimmten bevorzugten Weiterbildungen liegt n in einem Bereich von 4 bis 85, q in einem Bereich von 0 bis 81 und n+q in einem Bereich von 4 bis 85, weiter bevorzugt n in einem Bereich von 4 bis 72, q in einem Bereich von 0 bis 68 und n+q in einem Bereich von 4 bis 72 und noch weiter bevorzugt n in einem Bereich von 5 bis 48, q in einem Bereich von 0 bis 43 und n+q in einem Bereich von 5 bis 48.

Gemäß einer bevorzugten Weiterbildung der Suspension ist x 1 oder 2.

Gemäß einer bevorzugten Weiterbildung der Suspension ist y+z eine ganze Zahl und mindestens 2, vorzugsweise mindestens 3.

Ferner hat sich überraschend gezeigt, dass es zur Erzielung einer besonders hohen Langzeitstabilität der Graphenplättchen in der Suspension vorteilhaft ist, wenn die Kombination aus den Strukturelementen Sp und W eine Kettenstruktur von einer gewissen Mindestlänge bildet. Unter Langzeitstabilität im Sinne der vorliegenden Erfindung wird verstanden, dass beispielsweise keine merklichen Beeinträchtigungen der Eigenschaften der Suspension über einen Zeitraum von 60 Tagen beobachtet werden. Insbesondere kommt es bei einer langzeitstabilen Suspension über einen Zeitraum von 60 Tagen zu keiner Sedimentbildung, mithin zu keiner Agglomeration von Graphenplättchen.

Es wird vermutet, dass die Struktureinheiten (-Sp-W) weit in das Lösungsmittel hineinragen und dadurch einen nicht unbeträchtlichen Trägheitswiderstand in dem Lösungsmittel bzw. der Suspension gegenüber plötzlichen Bewegungen aufweisen. Hierdurch werden abrupte Krafteinwirkungen auf den Verankerungspunkt der Kombination der Strukturelemente Sp und W am kondensierten Ringsystem vermindert, die zu einer Ablösung des Additivs von der Oberfläche des Graphenplättchens führen könnten. In Folge einer Trennung von Additiv und Graphenplättchen kann es zu einer unerwünschten Agglomeration der Graphenplättchen kommen.

Bei einer bevorzugten Weiterbildung der Erfindung weist die durch die Strukturelemente Sp und W gebildete Kette eine Länge von mindestens 20, vorzugsweise von mindestens 25 und noch weiter bevorzugt von mindestens 30 Atomen auf. Bei einer erfindungsgemäßen Weiterbildung der Erfindung weist vorzugsweise das Strukturelement W die vorgenannte Länge auf.

Gemäß einer sehr bevorzugten Ausführungsform der Erfindung weist das Strukturelement W Ethoxyketten auf oder besteht daraus.

Erfindungsgemäß hat es sich als vorteilhaft erwiesen, wenn die erste deutlich hydrophile Gruppe deutlichen Abstand zum Strukturelement cR aufweist, da hierdurch abstoßende Effekte vermieden zu werden scheinen. Gemäß einer bevorzugten Ausführungsform ist es daher bevorzugt, dass die erste hydrophile Gruppe wie beispielsweise Carboxylgruppe, Sulfonylgruppe oder quartäre Ammoniumgruppe, sofern vorhanden, mindestens 4, vorzugsweise mindestens 5 Atome Abstand zum Strukturelement cR aufweist, sofern die hydrophilen Gruppe nicht ausgewählt wird aus der Gruppe, die aus Hydroxylgruppe, Thionylgruppe, Ethoxykette, Estergruppen und Ethergruppen besteht.

Gemäß einer bevorzugten Weiterbildung der Suspension weist das Additiv folgende Struktur auf:

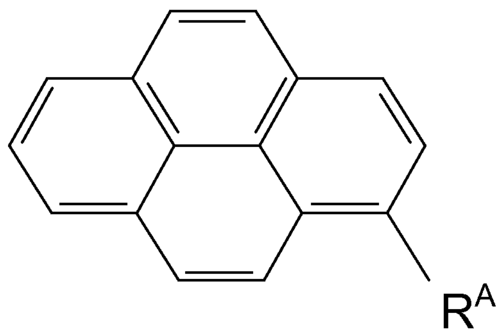

wobei $R^A$ ein Rest der allgemeinen Formel $-(CH_2)_m(-C(=O))p-O-E^{AO}-CH_3$ bedeutet wobei m eine ganze Zahl von 2 bis 10 ist, p 0 oder 1 ist, $E^{AO}$ aus n Ethoxyeinheiten und q Propoxyeinheiten besteht, wobei n in einem Bereich von 5 bis 48 und q in einem Bereich von 0 bis 45 liegt, mit der Maßgabe, dass n+q in einem Bereich von 5 bis 48 liegt.

Die erfindungsgemäßen, eingesetzten Additive können auf verschiedene Weisen, wie sie beispielsweise in Standardnachschlagewerken der organischen Chemie beschrieben sind, hergestellt werden. Beispielsweise kann ausgehend von aminsubstituierten kondensierten Aromaten eine Diazogruppe erzeugt werden, welche in weiteren Schritten

in den gesuchten Substituenten umgewandelt wird. Hierbei kann als Edukt z.B. 1-Aminopyren (CAS: 1606-67-3 erhältlich von Sigma-Aldrich und Acros) eingesetzt werden. Alternativ kann beispielsweise eine Halogengruppe an einem kondensierten, aromatischen System unter Einsatz metallorganischer Verbindungen wie Grignardreagenzien substituiert werden. Als Edukt kann hierbei z.B. 9-Bromphenanthren (CAS: 573-17-1, Sigma-Aldrich) dienen. Ferner sind dem Fachmann verschiedenste katalysierte Verfahren zur Herstellung derartiger Verbindungen bekannt, wobei beispielsweise die palladiumkatalysierten Syntheseverfahren besonders herauszustellen wären. Alternativ oder zusätzlich zu den vorgenannten Verfahren können beispielsweise Standardverfahren wie die Veresterung eingesetzt werden, um in einer Kondensationsreaktion die gesuchten Strukturen herzustellen. Beispielsweise kann dies an eine der vorgenannten Synthesen angeschlossen sein, um ausgehend von einer entschützten Hydroxylgruppe oder Carboxylgruppe die gesuchte Struktur aufzubauen. Zudem kann beispielsweise direkt ausgehend von einer kommerziell erhältlichen Substanz wie der Pyrenbuttersäure (CAS: 3443-45-6, Sigma-Aldrich) mittels einer Veresterung das gewünschte Additv aufgebaut werden. Detaillierte Informationen zu den vorgenannten Verfahren, Alternativen hierzu, Kombinationsmöglichkeiten, etc. können beispielsweise Standardwerken der Chemie wie Advanced Organic Chemistry, F. Carey, R. Sundberg, Springer Verlag, 5th ed. 2007. Corr. 2nd printing, sowie der einschlägigen Fachliteratur entnommen werden.

Da die erfindungsgemäße Suspension mit Graphenplättchen und die erfindungsgemäßen Graphenplättchen nicht mittels einer vorgelagerten Kombination aus Oxidation und Reduktion hergestellt werden, weisen die Graphenplättchen nur einen geringen Oxidgehalt auf. Dieser geringe Oxidgehalt kann beispielsweise mit dem Herstellungsverfahren gemäß Hummer oder Verfahrensvarianten davon nicht erreicht werden, da die jeweilige Reduktion immer unvollständig ist.

Vorzugsweise beträgt der Sauerstoffgehalt in den Graphenplättchen unter 1,5 Gew.-%, weiter bevorzugt unter 1,2 Gew.-% und noch weiter bevorzugt unter 0,9 Gew.-%, jeweils bezogen auf das Gesamtgewicht der trockenen Graphenplättchen ohne Additive. Die Bestimmung des Sauerstoffgehalts des Graphens kann beispielsweise mittels Elementaranalyse und/oder Röntgenphotoelektronenspektroskopie (XPS) erfolgen, wobei XPS bevorzugt ist.

Die Bestimmung des Sauerstoffgehaltes der Proben mittels XPS kann beispielsweise mit einem PHI 5600 ESCA Systems erfolgen. Zur Anregung der Photoelektronen wird hierbei monochromatische Röntgenstrahlung (Al K$\alpha$ = 1486,6 eV, 300 W) genutzt. Die Spektren werden mit einer Auflösung von 0,1 eV und einer Passenergie von 10 eV aufgenommen. Für die Bestimmung des Sauerstoffgehaltes in unterschiedlichen Tiefen werden die Proben mittels eines $Ar^+$-Ionenstrahl bei einer Beschleunigungsspannung von beispielsweise 3,5 kV gesputtert. Hierbei wird typischerweise bei einem Druck von $10^{-9}$ und $10^{-8}$ Torr gearbeitet.

Graphit zeigt im Ramanspektrum drei starke Banden bei etwa 1580 $cm^{-1}$ (G-Bande), bei etwa 1350 $cm^{-1}$ (D-Bande) und bei etwa 2700 $cm^{-1}$ (2D-Bande). Es wird in der Fachwelt angenommen, dass die Raman-Streuung ein Maß für das Vorliegen von Graphenmonolagen und Graphenplättchen ist. Zum einen erlaubt die Form der 2D-Bande eine Differenzierung in Bezug auf die Anzahl an Graphenmonolagen in einem Graphenplättchen. Des Weiteren ändert sich das Verhältnis der Intensität des 2D-Peaks zum G-Peak mit Zunahme der Zahl an Graphenmonolagen im Graphenplättchen. Ergänzend wird in diesem Zusammenhang auf Anindya Das et al., "Raman spectroscopy of graphene on different substrates and influence of defects", Bull. Mater. Sci. Bd. 31, Nr. 3, Juni 2008, Seiten 579-584 verwiesen.

Eine zusätzliche Messgröße, die unter anderem auf die geringe Dicke der erfindungsgemäßen Graphenplättchen und allgemein auf die hohe Qualität der erfindungsgemäßen Graphenplättchen zurückschließen lässt, ist die Halbwertsbreite. Die Halbwertsbreite wird mittels Ramanspektroskopie analog zum vorgenannten Peakverhältnis bestimmt. Die Halbwertsbreite gibt die Breite des 2D-Peaks, der üblicherweise bei 2698 $cm^{-1} \pm 50$ $cm^{-1}$ liegt, an, bei dem die Kurve auf die Hälfte des Maximums abgesunken ist. Vorzugsweise beträgt die Halbwertsbreite höchstens 75 $cm^{-1}$, weiter bevorzugt höchstens 65 $cm^{-1}$ und noch weiter bevorzugt höchstens 55 $cm^{-1}$. Erfindungsgemäß ist es insbesondere bevorzugt, dass die Halbwertsbreite des 2D-Peaks in einem Bereich von 35 bis 65 $cm^{-1}$, weiter bevorzugt im Bereich von 38 bis 60 $cm^{-1}$ und noch weiter bevorzugt im Bereich von 41 bis 56 $cm^{-1}$ liegt.

Bei einer weiteren Ausführungsform haben sich sowohl erfindungsgemäße Suspensionen mit Graphenplättchen als auch erfindungsgemäße Graphenplättchen als vorteilhaft erwiesen, die ein besonderes Verhältnis des 2D-Peaks, der üblicherweise bei 2698 $cm^{-1} \pm 50$ $cm^{-1}$ liegt, zum G-Peak, der üblicherweise bei 1587 $cm^{-1} \pm 50$ $cm^{-1}$ liegt, im Ramanspektrum aufweisen. Erfindungsgemäß ist es bevorzugt, dass das Intensitätsverhältnis des 2D-Peaks zum G-Peak im Bereich von 0,5 bis 2, vorzugsweise im Bereich von 0,6 bis 1,5 und noch weiter bevorzugt im Bereich von 0,7 bis 1 liegt, vorzugsweise bei einer Anregungswellenlänge von 532 nm. Das vorgenannte Intensitätsverhältnis erlaubt beispielsweise Rückschlüsse auf die Defekte der Graphenplättchen und damit beispielsweise die besondere Eignung für Verwendungen, in denen die elektrische Leitfähigkeit eine besondere Rolle spielt.

Insbesondere ist es bei einer weiteren Weiterbildung der Erfindung bevorzugt, dass das Intensitätsverhältnis des 2D-Peaks zum G-Peak im Ramanspektrum in einem Bereich von 0,5 bis 2 und die Halbwertsbreite des 2D-Peaks in einem Bereich von 35 bis 75 $cm^{-1}$, vorzugsweise das Intensitätsverhältnis des 2D-Peaks zum G-Peak im Bereich von 0,6 bis 1,5 und die Halbwertsbreite des 2D-Peaks im Bereich von 38 bis 65 $cm^{-1}$ und weiter bevorzugt das Intensitätsverhältnis des 2D-Peaks zum G-Peak im Bereich von 0,7 bis 1 und die Halbwertsbreite des 2D-Peaks im Bereich von 41 bis 55 $cm^{-1}$ liegt.

Die Ramanmessung erfolgt vorzugsweise mittels eines konfokalen Ramanspektroskopes der Firma Horiba Jobin Yvon LabRAM Aramis. Die Anregungswellenlänge liegt bei 532 nm. Die erfindungsgemäße Suspension wird nach einem Zentrifugationsschritt mittels Spincoating auf $SiO_2$-Wafern aufgebracht. Die Werte der Intensitätsverhältnisse und die Halbwertsbreite werden aus einer statistisch aussagekräftigen Zahl an Einzelmessungen gemittelt. Hierbei wird aus mindestens 50 zufällig ausgewählten Graphenplättchen, vorzugsweise 50 zufällig ausgewählten Graphenplättchen, das arithmetische Mittel der Werte gebildet. Die Zentrifugation wird mittels der Zentrifuge MIKRO 200 der Firma Hettich durchgeführt. Die Suspension wird für 10 Minuten bei 15000 rpm zentrifugiert, bevor der Überstand vermessen wird.

Die 2D-Bande liefert einen charakteristischen Hinweis auf das $sp^2$-Netzwerk in der Graphenebene. Die Symmetrie und die Halbwertsbreite der 2D-Bande geben Hinweise auf den Delaminierungsgrad der Graphenplättchen. So ist die 2D-Bande einer Graphenmonolage hochsymmetrisch, lässt sich mit einer Analysesoftware wie beispielsweise Origin der Firma OriginLab mittels einer einzelnen Lorentzfunktion bei einem Korrelationsfaktor $R^2$ von mindestens 0,995 im Bereich des Maximums $\pm$ zweifacher Halbwertsbreite beschreiben und weist eine Halbwertsbreite von < 35 $cm^{-1}$ auf. Für die Beschreibung von Material umfassend mehrere Graphenlagen sind hingegen mehrere Lorentzfunktionen zur Darstellung der 2D-Bande erforderlich, um einen Korrelationsfaktor $R^2$ von mindestens 0,995 im Bereich des Maximums $\pm$ zweifache Halbwertsbreite zu erreichen. Zudem weisen derartige Materialien eine größere Halbwertsbreite der 2D-Bande auf. Für Graphit wird gemäß Literaturangaben eine Halbwertsbreite von 70 - 80 $cm^{-1}$ erwartet.

Das I(D)/I(G)-Verhältnis (Intensitätsverhältnis des 2D-Peaks zum G-Peak) entspricht dem $sp^3/sp^2$-Verhältnis und beschreibt somit die Defektdichte des Materials innerhalb der Graphenebene. Je höher das I(D)/I(G)-Verhältnis ist, desto weniger intakt ist das $sp^2$-Netzwerk und desto mehr Defekte liegen in der Ebene vor. Bei kleinen Graphenplättchen kann ein hohes I(D)/I(G)-Verhältnis zudem auf Kanteneffekte zurückzuführen sein.

Messungen wie Raman und AFM (AFM: Atomic Force Microscopy) erfolgen vorzugsweise an der identischen Stelle einer auf dem $SiO_2$-Wafer aufgebrachten Probe.

Erfindungsgemäß ist es ferner bevorzugt, dass die in den erfindungsgemäßen Suspensionen enthaltenen Graphenplättchen eine mittlere Größe von mindestens 3 $\mu$m, vorzugsweise von mindestens 4 $\mu$m, weiter bevorzugt von mindestens 5 $\mu$m, aufweisen. Die mittlere Größe der in der erfindungsgemäßen Suspension enthaltenen Graphenplättchen wird bestimmt durch Auftragung der Graphenplättchen auf einen Träger und Bestimmung der Größe der Graphenplättchen mittels TEM (TEM: Transmission Electron Microscopy). Hierbei wird aus mindestens 100 zufällig ausgewählten Graphenplättchen, vorzugsweise 100 zufällig ausgewählten Graphenplättchen, das arithmetische Mittel des längsten Durchmessers und des hierzu senkrechten Durchmessers gebildet.

Die erfindungsgemäßen Graphenplättchen stellen üblicherweise ein Gemisch von Graphenplättchen mit unterschiedlichen Dicken dar. Die erfindungsgemäßen graphenplättchenhaltigen Suspensionen können in einem geringen Umfang auch Graphitpartikel mit 50 und mehr Schichten enthalten.

Die mittlere Dicke der in der erfindungsgemäßen Suspension enthaltenen Graphenplättchen liegt vorzugsweise in einem Bereich von 0,5 bis 5 nm, weiter bevorzugt von 0,55 bis 4 nm, noch weiter bevorzugt von 0,6 bis 3 nm und noch weiter bevorzugt von 0,65 bis 2 nm. Die Bestimmung der mittleren Dicke der in der erfindungsgemäßen Suspension enthaltenen Graphenplättchen kann beispielsweise mittels Rasterkraftmikroskopie erfolgen, wobei das arithmetische Mittel der Dicke der Kohlenstoffschichten von vorzugsweise mindestens 50 Graphenplättchen bestimmt wird.

Überraschenderweise wurde gefunden, dass die in den erfindungsgemäßen Suspensionen enthaltenen Graphenplättchen eine hervorragende Kombination aus einfacher Herstellbarkeit, guter Handhabbarkeit und hervorragenden Produkteigenschaften bieten.

Bezogen auf das erfindungsgemäß zu verwendende Additiv gemäß Formel (I) hat sich ferner gezeigt, dass eine definierte Untergrenze der Wasserlöslichkeit zur Erzielung einer besonders guten Stabilisierung der Graphenplättchen vorteilhaft ist. Besonders bevorzugt weist das erfindungsgemäß zu verwendende Additiv gemäß Formel (I) eine Wasserlöslichkeit von mindestens 0,05 g/l, vorzugsweise von mindestens 0,1 g/l, und weiter bevorzugt von mindestens 1 g/l auf. Die vorgenannte Wasserlöslichkeit gibt an, wieviel Gramm des Additivs bei 20 °C in Wasser ohne Modifikation des pH-Wertes löslich sind.

Ferner hat sich überraschenderweise gezeigt, dass begrenzt wasserlösliche Additive eine kontinuierliche Reaktionsführung ermöglichen. Gemäß einer bevorzugten Ausführungsform der Erfindung beträgt die Wasserlöslichkeit des Additivs gemäß Formel (I) höchstens 200 g/l, vorzugsweise höchstens 150 g/l und weiter bevorzugt höchstens 125 g/l.

Vorzugsweise weist das erfindungsgemäß zu verwendende Additiv eine Wasserlöslichkeit aus einem Bereich von 0,05 g/l bis 200 g/l, vorzugsweise im Bereich von 0,1 g/l bis 150 g/l und weiter bevorzugt im Bereich von 1 g/l bis 125 g/l auf.

Das erfindungsgemäß zu verwendende wenigstens eine Additiv gemäß Formel (I) wird vorzugsweise in einer Gesamtmenge eingesetzt, die mindestens 1 Gew.-%, weiter bevorzugt mindestens 2 Gew.-% und noch weiter bevorzugt mindestens 5 Gew.-% an Additiv, beträgt, jeweils bezogen auf das Gewicht der Graphenplättchen. Bei Verwendung von mehr als einem Additiv gemäß Formel (I), beispielsweise von zwei oder drei Additiven, können diese jeweils in den vorstehend angegebenen Mengen vorliegen.

Die Untersuchungen zeigten, dass bereits bei Verwendung von geringen Mengen an Additiv gemäß Formel

(I) eine gute Delamination des Graphits und eine gute Stabilisierung bzw. Dispergierung der erhaltenen Graphenplättchen erreicht werden kann.

Erfindungsgemäß ist es bevorzugt, dass die Gesamtmenge des Additivs oder der Additive in der Suspension gemäß Formel (I) höchstens 1000 Gew.-%, weiter bevorzugt höchstens 700 Gew.-% und noch weiter bevorzugt höchstens 500 Gew.-% beträgt, jeweils bezogen auf das Gewicht der Graphenplättchen. Überraschenderweise zeigte sich, dass größere Mengen an Additiv gemäß Formel (I) nur verhältnismäßig geringe Verbesserungen beispielsweise hinsichtlich der Stabilität der Suspension erzielen, so dass eine zusätzliche Menge an Additiv nicht erforderlich ist.

Erfindungsgemäß ist es bevorzugt, dass die Gesamtmenge des Additivs oder der Additive in der Suspension gemäß Formel (I) zwischen 1 und 1000 Gew.-%, weiter bevorzugt zwischen 2 und 700 Gew.-% und weiter mehr bevorzugt zwischen 5 und 500 Gew.-% liegt, jeweils bezogen auf das Gewicht der Graphenplättchen.

Die Bestimmung der Menge an erfindungsgemäß verwendetem Additiv erfolgt gemäß dem Fachmann bekannter Verfahren wie NMR-Spektroskopie, IR-Spektroskopie, Ramanspektroskopie und Gaschromatografie gekoppelt beispielsweise mit Massenspektrometrie und/oder Flammenionisationsdetektor. Hierbei wird die Probe gemäß Herstellerangaben vorbehandelt und beispielsweise eine separate Bestimmung der an den Graphenplättchen anhaftenden Additivmoleküle und der in der Suspensionslösung vorliegenden Additivmoleküle vorgenommen. Auch kann beispielsweise ein gezieltes Herunterwaschen des erfindungsgemäß zu verwendenden Additivs von den Graphenplättchen als Bestandteil erfolgen.

Die Bestimmung der in der Suspension enthaltenen Additivmenge kann beispielsweise auch gravimetrisch erfolgen. So wurde gefunden, dass sich die erfindungsgemäß zu verwendenden Additive typischerweise bei erhöhten Temperaturen schneller zersetzen als Graphenplättchen und daher thermogravimetrisch die Menge an Additiv bestimmt werden kann. Vor der Bestimmung muss naturgemäß das Lösungsmittel der Suspension entfernt werden, beispielsweise mittels destillativen Verfahren.

Gemäß einer bevorzugten Weiterbildung der Suspension liegen die Graphenplättchen in der Suspension in einer Konzentration von mindestens 0,04 g/l, weiter bevorzugt von mindestens 0,045 g/l, noch weiter bevorzugt von mindestens 0,55 g/l, weiter vorzugsweise von mindestens 0,7 g/l, noch weiter bevorzugt von mindestens 0,1 g/l, vor.

Hochkonzentrierte Graphenplättchensuspensionen sind im Hinblick auf Transport und Lagerung erwünscht. Des Weiteren sind hochkonzentrierte Graphenplättchensuspension auch in der Anwendung von Vorteil, da geringere Mengen an Lösungsmittel gehandhabt und durch Trocknung entfernt werden müssen.

Völlig überraschend wurde ferner festgestellt, dass der Einsatz eines Hilfsstoffes bei der Herstellung der Graphenplättchen unter Einsatz des erfindungsgemäßen Additivs sehr vorteilhaft ist und die Delamination erleichtert. Es wird vermutet, dass der Hilfsstoff zumindest teilweise in den Graphit und zwischen die Graphenschichten eindringt und zu einer Schwächung der Intergraphenbindungen führt.

Gemäß einer bevorzugten Weiterbildung der Suspension umfasst die Suspension mindestens 1 Hilfsstoff gemäß Formel H1:

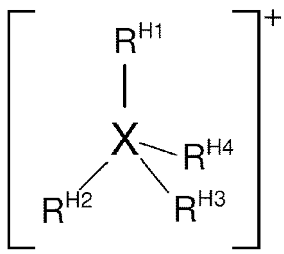

Formel H1,

wobei X aus der Gruppe, die aus N und P besteht, ausgewählt wird,

wobei $R^{H1}$, $R^{H2}$ , $R^{H3}$, $R^{H4}$ unabhängig voneinander gleich oder verschieden sind und aus der Gruppe, die aus verzweigten und unverzweigten C1-C8 Alkylgruppen wie Methyl, Ethyl, n-Propyl, iso-Propyl, n-Butyl, n-Pentyl, n-Hexyl, n-Heptyl und n-Octyl, verzweigten und unverzweigten C2-C8 Alkenylgruppen, verzweigten und unverzweigten C2-C8 Alkinylgruppen, C5-C10 Arylgruppen, Heteroarylen mit 4 bis 9 Kohlenstoffatomen, C5-C12 Cycloalkylgruppen, nichtaromatischen Heterocyclen mit 3 bis 11 Kohlenstoffatomen, wobei die vorgenannten Gruppen substituiert und unsubstituiert sein können, $-N(R^{cR})_2$, $-NHR^{cR}$, $-NH_2$, $-(N(R^{cR})_3)^+$, -H, -OH, $-OR^{H*}$, - CN besteht, ausgewählt wird,

wobei $R^{H*}$ aus der Gruppe, die aus verzweigten und unverzweigten C1-C8 Alkylgruppen wie Methyl, Ethyl, n-Propyl, iso-Propyl, n-Butyl, n-Pentyl, n-Hexyl, n-Heptyl und n-Octyl, verzweigten und unverzweigten C2-C8 Alkenylgruppen, verzweigten und unverzweigten C2-C8 Alkinylgruppen, C5-C10 Arylgruppen, Heteroarylen mit 4 bis 9 Kohlenstoffatomen, C5-C12 Cycloalkylgruppen, nichtaromatischen Heterocyclen mit 3 bis 11 Kohlenstoffatomen besteht, wobei die vorgenannten Gruppen substituiert und unsubstituiert sein können, ausgewählt wird,

und wobei, sofern wenigstens eines von $R^{H1}$, $R^{H2}$ , $R^{H3}$, $R^{H4}$ unabhängig voneinander aus der Gruppe, die aus substituierter und nichtsubstituierter Arylgruppe, Heteroarylgruppe, nichtaromatischer Cycloalkylgruppe und nichtaromatischer Heterocycloalkylgruppe besteht, ausgewählt wird, die Substituenten der substituierten Gruppe aus der Gruppe, die aus verzweigten und unverzweigten C1-C8 Alkylgruppen wie Methyl, Ethyl, n-Propyl, iso-Propyl, n-Butyl, n-Pentyl, n-Hexyl, n-Heptyl und n-Octyl, verzweigten und unverzweigten C2-C8 Alkenylgruppen und verzweigten und unverzweigten C2-C8 Alkinylgruppen besteht, wobei die vorgenannten Gruppen substituiert und unsubstituiert sein können, ausgewählt werden,

wobei die Substituenten aus der Gruppe, die aus =O, $=NR^{cR}$, =NH, -CN, -SH, - $OR^{cR}$, -OH, $-R^{cR}$, $-N(R^{cR})_2$, $-NHR^{cR}$, $-NH_2$, $-(N(R^{cR})_3)^+$, $-C(=O)-OR^{cR}$, $-O-C(=O)-R^{cR}$, $-O-P(=O)(OR^{cR})_2$, $-P(=O)(OR^{cR})_2$, $-O-S(=O)_2-OR^{Et}$, $-S(=O)_2-OR^{Et}$, $-S(=O)_2R^{Et}$ und - $S(=O)_2N(R^{cR})_2$, besteht, ausgewählt werden,

wobei $R^{Et}$ eine verzweigte oder unverzweigte C1-C12 Alkylgruppe wie Methyl, Ethyl, n-Propyl, iso-Propyl, n-Butyl, sec-Butyl, iso-Butyl, tert-Butyl, n-Pentyl, n-Hexyl, n-Heptyl, n-Octyl, n-Nonyl und n-Decyl, verzweigte oder unverzweigte C2-C12 Alkenylgruppe, verzweigte oder unverzweigte C2-C12 Alkinylgruppe, C6-C10 Arylgruppe, Heteroarylgruppe mit 4 bis 9 Kohlenstoffatomen, C5-C12 Cycloalkylgruppe oder nichtaromatische heterocyclische Gruppe mit 4 bis 11 Kohlenstoffatomen ist, wobei die vorgenannten Gruppen substituiert oder unsubstituiert sein können,

und wobei $R^{cR}$ eine unsubstituierte, verzweigte oder unverzweigte C1-C3 Alkylgruppe, vorzugsweise Methyl, Ethyl, Prop-1-yl oder Prop-2-yl, ist.

Die vorgenannten Bestandteile des Hilfsstoffes gemäß Formel (H1) können, soweit nicht anders angegeben, unabhängig voneinander gewählt werden. Beispiele für diese Gruppen sind die vorgenannten Einheiten $R^{H1}$, $R^{H2}$, $R^{cR}$, $R^{H*}$, etc.. Naturgemäß umfasst sind hiervon auch nachfolgend eingeführte Gruppen.

Bei den Alkylresten, Alkenylresten und Alkinylresten kann es sich um geradkettige oder verzweigte Alkyreste, Alkenylreste bzw. Alkinylreste wie Methyl, Ethyl, n-Propyl, Isopropyl, n-Butyl, sec-Butyl, Isobutyl, tert-Butyl, 1-Methylpropyl, n-Pentyl, 3-Methylbutyl, 2-Methylbutyl, 1-Methylbutyl, 2,2-Dimethylpropyl, 1,2-Dimethylpropyl, 1,1-Dimethylpropyl, 1-Ethylpropyl, n-Hexyl, 4-Methylpentyl, 3-Methylpentyl, 2-Methylpentyl, 1-Methylpentyl, 3,3-Dimethylbutyl, 2,3-Dimethylbutyl, 1,3-Dimethylbutyl, 2,2-Dimethylbutyl, 1,2-Dimethylbutyl, 1,1-Dimethylbutyl, 1,2,2-Trimethylpropyl, 1,1,2-Trimethylpropyl, 2-Ethylbutyl, 1-Ethylbutyl, sowie analoge Struktureinheiten mit mindestens 1 Doppelbindung und/oder Dreifachbindung.handeln

Gemäß einer bevorzugten Weiterbildung der Suspension umfasst die Suspension wenigstens zwei Hilfsstoffe gemäß Formel H1, wobei die beiden Hilfsstoffe voneinander verschieden sind.

Gemäß einer bevorzugten Weiterbildung der Suspension enthält die Suspension wenigstens einen Hilfsstoff gemäß Formel H1, wobei X= N ist und wobei $R^{H1}$, $R^{H2}$, $R^{H3}$, $R^{H4}$ unabhängig voneinander gleich oder verschieden sind und aus der Gruppe, die aus substituierten und nichtsubstituierten, verzweigten und unverzweigten C1-C8 Alkylgruppen wie Methyl, Ethyl, n-Propyl, iso-Propyl, n-Butyl, n-Pentyl, n-Hexyl, n-Heptyl, n-Octyl besteht, ausgewählt werden, wobei die Substituenten vorzugsweise aus der Gruppe, die aus =O, $=NR^{cR}$, =NH, -CN, -SH, - $OR^{cR}$, -OH, $-R^{cR}$, $-N(R^{cR})_2$, $-NHR^{cR}$, $-NH_2$, $-(N(R^{cR})_3)^+$, $-C(=O)-OR^{cR}$, $-O-C(=O)-R^{cR}$, $-O-P(=O)(OR^{cR})_2$, $-P(=O)(OR^{cR})_2$, $-O-S(=O)_2-OR^{Et}$, $-S(=O)_2-OR^{Et}$, $-S(=O)_2R^{Et}$ und - $S(=O)_2N(R^{cR})_2$, besteht, ausgewählt werden.

Gemäß einer bevorzugten Weiterbildung der Suspension enthält die Suspension wenigstens einen Hilfsstoff gemäß Formel H1, wobei X= N ist und wobei $R^{H1}$, $R^{H2}$, $R^{H3}$, $R^{H4}$ gleich oder verschieden sind und aus der Gruppe, die aus substituierten und nichtsubstituierten, vorzugsweise nichtsubstituierten, verzweigten und unverzweigten C1-C6 Alkylgruppen wie Methyl, Ethyl, n-Propyl, iso-Propyl, n-Butyl, n-Pentyl und n-Hexyl, vorzugsweise C1-C4 Alkylgruppen wie Methyl, Ethyl, n-Propyl, iso-Propyl, n-Butyl, besteht, ausgewählt werden.

Hierbei kann beispielsweise durch die Verwendung einer Kombination aus Additiv gemäß Formel (I) und wenigstens einem Hilfsstoff gemäß Formel H1 die Herstellung hochwertiger Graphenplättchen auch unter sehr viel milderen Reaktionsbedingungen durchgeführt werden. Es wird vermutet, dass die schonende Ablösung der Graphenschichten unter milden Reaktionsbedingungen ein Grund für die Hochwertigkeit der erfindungsgemäß bereitgestellten Suspension sowie der erfindungsgemäßen Graphenplättchen ist.

Es hat sich überraschenderweise gezeigt, dass keine komplexen Moleküle als Hilfsstoff erforderlich sind, um den erfindungsgemäßen Effekt der Schwächung der Intergraphenbindungen zu erzielen. Vorteilhafterweise bieten Hilfsstoffe mit einer einfachen Struktur eine leichtere Zugänglichkeit.

Gemäß einer weiteren bevorzugten Ausführungsform der Erfindung sind bei dem Hilfsstoff gemäß Formel H1 mindestens 2, vorzugsweise mindestens 3, der Strukturelemente $R^{H1}$, $R^{H2}$, $R^{H3}$ und $R^{H4}$ identisch.

Weiter bevorzugt sind $R^{H1}$, $R^{H2}$ und $R^{H3}$ identisch, wobei $R^{H4}$ identisch oder verschieden zu $R^{H1}$ bis $R^{H3}$ sein kann.

Es ist bei weiteren Ausführungsformen bevorzugt, dass $R^{H1}$, $R^{H2}$, $R^{H3}$ und $R^{H4}$ identisch sind.

Obgleich die erfindungsgemäße Suspension bzw. die erfindungsgemäßen Graphenplättchen auch ohne Hilfsstoff gemäß Formel H1 herstellbar sind, wird vorzugsweise von der synergetischen Wirkung einer Kombination von Additiv gemäß Formel (I) und Hilfsstoff gemäß Formel H1 Gebrauch gemacht, um die hochqualitativen Graphenplättchen unter vorzugsweise äußerst schonenden Bedingungen herzustellen. Vorzugsweise wird hierbei eine Menge an Hilfsstoff gemäß Formel H1 zugegeben, wie nachstehend aufgeführt, um eine optimale synergetische Wirkung zwischen Hilfsstoff

gemäß Formel H1 und Additiv gemäß Formel (I) zu erzielen und die Herstellung hochqualitativer Graphenplättchen unter mildesten Bedingungen zu ermöglichen.

Bei einer bevorzugten Ausführungsform der Erfindung beträgt die Menge des Hilfsstoffes gemäß Formel H1 mindestens 30 Gew.-%, weiter bevorzugt mindestens 50 Gew.-% und noch weiter bevorzugt mindestens 70 Gew.-%, jeweils bezogen auf die Menge des eingesetzten Graphits. Diese Mindestmengen haben sich als vorteilhaft erwiesen, damit das Additiv zur Delamination in die Graphenschichten des Graphits leichter eindringen kann.

Bei einer weiteren Ausführungsform der Erfindung beträgt die Menge des Hilfsstoffes gemäß Formel H1 höchstens 300 Gew.-%, weiter bevorzugt höchstens 250 Gew.-% und noch weiter bevorzugt höchstens 200 Gew.-%, jeweils bezogen auf die Menge des eingesetzten Graphits.

Gemäß einer bevorzugten Variante der Erfindung weist der Hilfsstoff die Struktur $N(R^{HB})_4^+$ und/oder $P(R^{HB})_4^+$auf, wobei $R^{HB}$ eine unsubstituierte, verzweigte oder unverzweigte C1-C4 Alkylgruppe wie Methyl, Ethyl, n-Propyl, iso-Propyl und n-Butyl, ist und jedes $R^{HB}$ unabhängig voneinander gewählt werden kann. Insbesondere ist es bevorzugt, dass die vier $R^{HB}$-Substituenten identisch sind und eine verzweigte oder unverzweigte C2-C3 Alkylgruppe wie Ethyl, n-Propyl und iso-Propyl darstellen, vorzugsweise dass der Hilfsstoff $NEt_4^+$ ist.

Als Gegenionen der erfindungsgemäß als Hilfsstoff eingesetzten Ammoniumionen und/oder Phosphoniumionen können dem Fachmann bekannte Gegenionen eingesetzt werden. Beispiele hierfür sind $F^-$, $Cl^-$, $Br^-$, $I^-$, $OH^-$, $BF_4^-$, $SO_4^{2-}$, $CO_3^{2-}$, $PO_4^{3-}$, $NO_3^-$ , $CrO_4^{2-}$, $MnO_4^-$ und Carboxylationen wie Citrationen und Acetationen. Insbesondere bevorzugt sind beispielsweise $OH^-$, $SO_4^{2-}$, $CO_3^{2-}$, $PO_4^{3-}$, $NO_3^-$ , Citrationen und Acetationen.

Durch den Einsatz des erfindungsgemäßen Hilfsstoffes kann die benötigte Menge an Additiv weiter gesenkt werden, so dass bei einer bevorzugten Ausführungsform die Gesamtmenge des Additivs oder der Additive mindestens 0,3 Gew.-%, mehr bevorzugt mindestens 0,5 Gew.-% und noch mehr bevorzugt mindestens 0,6 Gew.-% vorliegt, jeweils bezogen auf das Gewicht der Graphenplättchen. Gemäß einer weiteren bevorzugten Ausführungsform liegt die Gesamtmenge des Additivs oder der Additive gemäß Formel (I) mithin in einem Bereich von 0,3 bis 500 Gew.-%, weiter bevorzugt von 0,5 bis 200 Gew.-% und noch weiter bevorzugt von 0,6 bis 80 Gew.-%, jeweils bezogen auf das Gewicht der Graphenplättchen.

Bei einer weiteren Ausführungsform betrifft die vorliegende Erfindung eine Suspension, umfassend ein wassermischbares Lösungsmittel, Graphenplättchen und mindestens 1 Additiv gemäß Formel I

$$cR(\text{-}Sp\text{-}W)_x \qquad (I),$$

mit den Strukturelementen cR, Sp und W, wobei das Strukturelement cR ein kondensiertes, polycyclisches Ringsystem 3 bis 6 aromatischen Ringen und 0 bis 2 nichtaromatischen Heterocyclen ist,

das Strukturelement Sp ein eine lineare Kette aufweisender Abstandshalter ist, bei dem in der linearen Kette 2 bis 7 Atome angeordnet sind und wenigstens eine Einfachbindung in der linearen Kette enthalten ist,

und das Strukturelement W die Löslichkeit des Additivs in Wasser erhöht und Strukturelement W eine Struktur gemäß Formel (II) darstellt

$$\text{-}R_k((\text{-}E^{bo})_w\text{-}E^{th}\text{-}O\text{-}R^{th})_y(\text{-}F)_z \qquad (II)$$

wobei R aus der Gruppe, die aus verzweigten und unverzweigten C1-C6 Alkylresten wie Methyl, Ethyl, n-Propyl, iso-Propyl, n-Butyl, n-Pentyl und n-Hexyl, verzweigten und unverzweigten C2-C6 Alkenylresten, verzweigten und unverzweigten C2-C6 Alkinylresten, Phenylresten, Heteroarylresten mit 4 bis 5 Kohlenstoffatomen, C5-C7 Cycloalkylresten, nichtaromatischen heterocyclischen Resten mit 4 bis 6 Kohlenstoffatomen und Mischungen davon besteht, ausgewählt wird, wobei vorgenannte Reste substituiert und unsubstituiert sein können, und wobei k 0 oder 1 ist,

$E^{bo}$ eine aus 1 bis 3 Atomen bestehende lineare Kette ist, wobei die Atome aus der Gruppe, die aus C, N und O besteht, ausgewählt werden, mit der Maßgabe, dass die Kette maximal nur 1 O oder N enthält, und wobei w 0 oder 1 ist,

$E^{th}$ eine Polyalkylenoxidkette mit 5 bis 75 Alkylenoxideinheiten, wobei die Alkylenoxideinheiten aus der Gruppe, die aus Ethoxyeinheiten, Propoxyeinheiten und Mischungen davon besteht, ausgewählt wird, ist,

$R^{th}$ aus der Gruppe, die aus H, unsubstituiertem, verzweigtem und unverzweigtem C1-C4 Alkyl wie wie Methyl, Ethyl, n-Propyl, iso-Propyl und n-Butyl und unsubstituiertem -C(=O)C1-C4-Alkyl besteht, ausgewählt wird,

F aus der Gruppe, die aus -COOH, $\text{-}(N(R^{cR})_3)^+$, $\text{-}O\text{-}P(=O)(OR^{cR})(OH)$, $\text{-}O\text{-}P(=O)(OH)_2$, $\text{-}P(=O)(OR^{cR})(OH)$, $\text{-}P(=O)(OH)_2$, $\text{-}O\text{-}S(=O)_2OH$, $\text{-}S(=O)_2OH$, Monosaccharidresten, Disaccharidresten, Oligosaccharidresten mit 3 bis 10 Saccharideinheiten und Polyoxazolinresten mit 3 bis 10 Oxazolineinheiten, ausgewählt wird,

$R^{cR}$ eine unsubstituierte, verzweigte oder unverzweigte C1 bis C3 Alkylgruppe, vorzugsweise Methyl, Ethyl, Prop-1-yl oder Prop-2-yl, ist, und wobei y und z jeweils unabhängig voneinander eine ganze Zahl von 0 bis 3 bedeuten, mit der Maßgabe, dass y + z mindestens 1 ist, wobei,

wenn keines der Strukturelemente W wenigstens eine Gruppe, die aus der Gruppe, die aus Polyoxyalkylengruppen mit wenigstens 3 Alkylenoxideinheiten, $-S(=O)_2OH$, $-S(=O)_2NH_2$, $-O-P(=O)(OR^{cR})(OH)$, $-O-P(=O)(OH)_2$, $-P(=O)(OR^{cR})(OH)$, $-P(=O)(OH)_2$, $-O-S(=O)_2OH$ und $-S(=O)_2OH$ besteht, ausgewählt wird, aufweist, die Strukturelemente W insgesamt mindestens zwei identische oder unterschiedliche funktionelle protonierbare, protonierte, deprotonierbare oder deprotonierte Gruppen aufweisen, und
wobei x eine ganze Zahl aus einem Bereich von 1 bis 4 ist.

Bei einer weiteren Ausführungsform betrifft die vorliegende Erfindung eine Suspension, umfassend ein wassermischbares Lösungsmittel, Graphenplättchen und mindestens 1 Additiv gemäß Formel I

$$cR(-Sp-W)_x \qquad (I),$$

mit den Strukturelementen cR, Sp und W, das Strukturelement cR ein 2 bis 4 aromatische Ringe umfassendes, kondensiertes, polycyclisches Ringsystem ist, wobei neben (-Sp-W) optional vorhandene weitere Substituenten ausgewählt werden aus der Gruppe bestehend aus =O, $-NR^{cR}$, =NH, $-OR^{cR}$, -OH, $-R^{cR}$, $-NR^{cR}_2$, $-NHR^{cR}$, $-NH_2$, $-(N(R^{cR})_3)^+$, $-C(=O)-OR^{cR}$, $-O-C(=O)-R^{cR}$ und -CN, vorzugsweise aus der Gruppe bestehend aus unsubstituierten, verzweigten und unverzweigten C1-C3 Alkylgruppen wie Methyl, Ethyl, n-Propyl und iso-Propyl,
das Strukturelement Sp ein eine lineare Kette aufweisender Abstandshalter ist, bei dem in der linearen Kette 2 bis 5 Atome angeordnet sind, wobei die 2 bis 5 Atome ausgewählt werden aus der Gruppe bestehend aus Kohlenstoff, Sauerstoff, Stickstoff und Silicium und wenigstens eine Einfachbindung in der linearen Kette enthalten ist, wobei neben cR und W optional vorhandene weitere Substituenten von Sp ausgewählt werden aus der Gruppe bestehend aus =O, $=NR^{cR}$, =NH, -CN, -SH, $-OR^{cR}$, -OH, $-R^{cR}$, $-N(R^{cR})_2$, $-NHR^{cR}$, $-NH_2$, $-(N(R^{cR})_3)^+$, $-C(=O)OR^{cR}$, $-O-C(=O)-R^{cR}$, $-O-P(=O)(O(R^{cR})_2$, $-P(=O)(O(R^{cR})_2$, $-O-S(=O)_2-OR^{Et}$, $-S(=O)_2-OR^{Et}$, $-S(=O)_2R^{Et}$ und $-S(=O)_2N(R^{cR})_2$,
und das Strukturelement W die Löslichkeit des Additivs in Wasser erhöht und Strukturelement W eine Struktur gemäß Formel (II) darstellt

$$-R_k((-E^{bo})_w-E^{th}-O-R^{th})_y(-F)_z \qquad (II)$$

wobei R aus der Gruppe, die aus verzweigten und unverzweigten C1-C6 Alkylresten wie Methyl, Ethyl, n-Propyl, iso-Propyl, n-Butyl, n-Pentyl und n-Hexyl, verzweigten und unverzweigten C2-C6 Alkenylresten, verzweigten und unverzweigten C2-C6 Alkinylresten, Phenylresten, Heteroarylresten mit 4 bis 5 Kohlenstoffatomen, C5-C7 Cycloalkylresten, nichtaromatischen heterocyclischen Resten mit 4 bis 6 Kohlenstoffatomen und Mischungen davon besteht, ausgewählt wird, wobei vorgenannte Reste substituiert und unsubstituiert sein können, und
wobei k 0 oder 1 ist,

$E^{bo}$ eine aus 1 bis 3 Atomen bestehende lineare Kette ist, wobei die Atome aus der Gruppe, die aus C, N und O besteht, ausgewählt werden, mit der Maßgabe, dass die Kette maximal nur 1 O oder N enthält, und wobei w 0 oder 1 ist,
$E^{th}$ eine Polyalkylenoxidkette mit 5 bis 48 Alkylenoxideinheiten, wobei die Alkylenoxideinheiten aus der Gruppe, die aus Ethoxyeinheiten, Propoxyeinheiten und Mischungen davon besteht, ausgewählt wird, ist,
$R^{th}$ aus der Gruppe, die aus H, unsubstituiertem, verzweigtem und unverzweigtem C1-C4 Alkyl wie Methyl, Ethyl, n-Propyl, iso-Propyl und n-Butyl und unsubstituiertem -C(=O)C1-C4-Alkyl besteht, ausgewählt wird,
F aus der Gruppe, die aus -COOH, $-(N(R^{cR})_3)^+$, $-O-P(=O)(OR^{cR})(OH)$, $-O-P(=O)(OH)_2$, $-P(=O)(OR^{cR})(OH)$, $-P(=O)(OH)_2$, $-O-S(=O)_2OH$, $-S(=O)_2OH$, besteht, ausgewählt wird,
$R^{cR}$ eine unsubstituierte, verzweigte oder unverzweigte C1 bis C3 Alkylgruppe, vorzugsweise Methyl, Ethyl, Prop-1-yl oder Prop-2-yl, ist, und wobei y und z jeweils unabhängig voneinander eine ganze Zahl von 0 bis 3 bedeuten, mit der Maßgabe, dass y + z mindestens 1 ist, wobei,
wenn keines der Strukturelemente W wenigstens eine Gruppe, die aus der Gruppe, die aus Polyoxyalkylengruppen mit wenigstens 3 Alkylenoxideinheiten, $-S(=O)_2OH$, $-S(=O)_2NH_2$, $-O-P(=O)(OR^{cR})(OH)$, $-O-P(=O)(OH)_2$, $-P(=O)(OR^{cR})(OH)$, $-P(=O)(OH)_2$, $-O-S(=O)_2OH$ und $-S(=O)_2OH$ besteht, ausgewählt wird, aufweist, die Strukturelemente W insgesamt mindestens zwei identische oder unterschiedliche funktionelle protonierbare, protonierte, deprotonierbare oder deprotonierte Gruppen aufweisen, welche ausgewählt werden aus der Gruppe bestehend aus -COOH, $-NH_2$, $-NHR^{cR}$, $-N(R^{cR})_2$, $-(N(R^{cR})_3)^+$, $-O-P(=O)(OR^{cR})(OH)$, $-O-P(=O)(OH)_2$, $-P(=O)(OR^{cR})(OH)$, $-P(=O)(OH)_2$, $-O-S(=O)_2OH$ und $-S(=O)_2OH$ und

wobei x eine ganze Zahl aus einem Bereich von 1 bis 4 ist. Insbesondere umfasst die Suspension bei einer bestimmten Weiterbildung vorzugsweise mindestens 1 Hilfsstoff gemäß Formel H1:

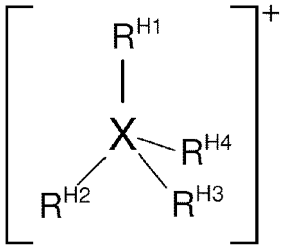

Formel H1,

wobei X N ist und wobei $R^{H1}$, $R^{H2}$ , $R^{H3}$, $R^{H4}$ unabhängig voneinander gleich oder verschieden sind und aus der Gruppe, die aus substituierten und nichtsubstituierten, verzweigten und unverzweigten C1-C8 Alkylgruppen wie Methyl, Ethyl, n-Propyl, iso-Propyl, n-Butyl, n-Pentyl, n-Hexyl, n-Heptyl und n-Octyl besteht, ausgewählt werden, wobei die Substituenten vorzugsweise aus der Gruppe, die aus =O, $=NR^{cR}$ =NH, -CN, -SH, $-OR^{cR}$ -OH, $-R^{cR}$, $-N(R^{CR})_2$ $-NHR^{cR}$ - $NH_2$, $-(N(R^{cR})_3)^+$, $-C(=O)-OR^{cR}$, $-O-C(=O)-R^{cR}$, $-O-P(=O)(OR^{cR})_2$, $-P(=O)(OR^{cR})_2$, - $O-S(=O)_2-OR^{Et}$, $-S(=O)_2-OR^{Et}$, $-S(=O)_2R^{Et}$ und $-S(=O)_2N(R^{cR})_2$, besteht, ausgewählt werden,
wobei $R^{Et}$ eine verzweigte oder unverzweigte C1-C12 Alkylgruppe wie Methyl, Ethyl, n-Propyl, iso-Propyl, sec-Butyl, n-Butyl, tert-Butyl, n-Pentyl, n-Hexyl, n-Heptyl, n-Octyl, n-Nonyl und n-Decyl, verzweigte oder unverzweigte C2-C12 Alkenylgruppe, verzweigte oder unverzweigte C2-C12 Alkinylgruppe, C6-C10 Arylgruppe, Heteroarylgruppe mit 4 bis 9 Kohlenstoffatomen, C5-C12 Cycloalkylgruppe oder nichtaromatische heterocyclische Gruppe mit 4 bis 11 Kohlenstoffatomen ist, wobei die vorgenannten Gruppen substituiert oder unsubstituiert sein können,
und wobei $R^{cR}$ eine unsubstituierte, verzweigte oder unverzweigte C1-C3 Alkylgruppe, vorzugsweise Methyl, Ethyl, Prop-1-yl oder Prop-2-yl, ist.

Gemäß einer bevorzugten Weiterbildung der Suspension weist das Additiv folgende Struktur auf:

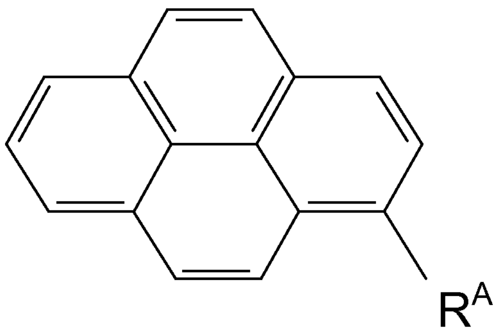

wobei $R^A$ ein Rest der allgemeinen Formel $-(CH_2)_m(-C(=O))_p-O-E^{AO}-CH_3$ bedeutet, wobei m eine ganze Zahl von 2 bis 10 ist, p 0 oder 1 ist, $E^{AO}$ aus n Ethoxyeinheiten und q Propoxyeinheiten besteht, wobei n in einem Bereich von 3 bis 100 und q in einem Bereich von 0 bis 97 liegt, wobei n+q in einem Bereich von 3 bis 100 liegt, und
wobei die Suspension ferner wenigstens einen Hilfsstoff H1 enthält, wobei X N bedeutet und wobei $R^{H1}$, $R^{H2}$ , $R^{H3}$, $R^{H4}$ gleich sind und aus der Gruppe, die aus substituierten und nichtsubstituierten, verzweigten und unverzweigten C1-C8 Alkylgruppen wie Methyl, Ethyl, n-Propyl, iso-Propyl, n-Butyl, n-Pentyl, n-Hexyl, n-Heptyl und n-Octyl, vorzugsweise C2-C3 Alkylgruppen wie Ethyl, n-Propyl und iso-Propyl, besteht, ausgewählt werden.

Gemäß einer weiter bevorzugten Ausführungsform der Erfindung weist das Additiv gemäß Formel (I) die folgende Struktur auf:

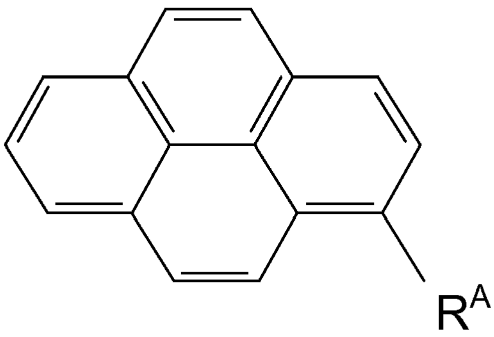

,

wobei $R^A$ ein Rest der allgemeinen Formel $-(CH_2)_3-C(=O)-O-(CH_2-CH_2-O)_n-CH_3$ ist, und wobei n im Bereich von 8 bis 16 liegt. Gemäß einer weiteren bevorzugten Ausführungsform der Erfindung wird das vorstehend genannte Additiv zusammen mit einem Hilfsstoff H1 verwendet, wobei der Hilfsstoff H1 ein Tetraalkylammoniumion, wobei Alkyl unabhängig voneinander für Methyl, Ethyl, Isopropyl oder n-Propyl steht, ist. Äußerst bevorzugt wird das vorstehend genannte Additiv gemäß Formel (I) zusammen mit Tetraethylammoniumionen verwendet, welche beispielsweise als Hydroxide, Halogenide und Carboxylate, insbesondere als Hydroxide und Carboxylate wie Citrate und Acetate eingesetzt werden können.

Das in dem erfindungsgemäßen Verfahren verwendete und in den erfindungsgemäßen Suspensionen enthaltene Lösungsmittel ist mit Wasser mischbar. Unter einem "wassermischbaren Lösungsmittel" im Sinne der vorliegenden Erfindung wird verstanden, dass mindestens 100 g des betreffenden Lösungsmittel bei 20 °C in 1 l Wasser gelöst werden können, vorzugsweise dass bei 20 °C das Lösungsmittel unbegrenzt mit Wasser mischbar ist. Unter "mischbar" wird im Sinne der vorliegenden Erfindung verstanden, dass keine Phasentrennung auftritt. Insbesondere ist es bevorzugt, dass jeder Bestandteil des Lösungsmittels, der in einer Menge von mindestens 5 Gew.-% im und als Lösungsmittel vorliegt, ein wassermischbares Lösungsmittel im Sinne der vorliegenden Erfindung darstellt.

Weiterhin ist es bevorzugt, dass das wassermischbare Lösungsmittel zu mindestens 90 Gew.-%, vorzugsweise zu mindestens 95 Gew.-%, mehr bevorzugt zu mindestens 99 Gew.-% und noch weiter bevorzugt zu mindestens 99,9 Gew.-% aus Lösungsmitteln besteht, deren Dipolmoment größer als $3{,}5 - 10^{-30}$ Cm ist. Insbesondere ist es bevorzugt, dass das wassermischbare Lösungsmittel ein Dipolmoment von mindestens $4 - 10^{-30}$ Cm, weiter bevorzugt mindestens $4{,}5 - 10^{-30}$ Cm und noch weiter bevorzugt von mindestens $5 - 10^{-30}$ Cm aufweist, jeweils bezogen auf das Gesamtgewicht des wassermischbaren Lösungsmittels ohne Additive und Hilfsstoffe.

Erfindungsgemäß ist es bevorzugt, dass mindestens 90 Gew.-% , vorzugsweise mindestens 95 Gew.-%, weiter bevorzugt mindestens 99 Gew.-% und noch weiter bevorzugt mindestens 99,9 Gew.-% des wassermischbaren Lösungsmittels aus der Gruppe, die aus Wasser, Methanol, Ethanol, Propanol, Isopropanol, Butanol, t-Butanol, Isobutanol, Aceton, Ethylenglykol, Butylglykol und Mischungen davon besteht, ausgewählt werden. Weiterhin ist es bevorzugt, dass mindestens 95 Gew.-%, vorzugsweise mindestens 99 Gew.-% des wassermischbaren Lösungsmittels aus der Gruppe, die aus Wasser, Ethanol, Isopropanol, Aceton, Butylglykol und Mischungen davon besteht, ausgewählt werden, jeweils bezogen auf das Gesamtgewicht des wassermischbaren Lösungsmittels ohne Additive und Hilfsstoffe.

Gemäß einer weiteren bevorzugten Ausführungsform wird der Gehalt an organischem Lösungsmittel in den erfindungsgemäßen Suspensionen sehr gering gehalten, dass vorzugsweise nur noch Spuren enthalten sind.

Für die Verwendung in der Lebensmittelsindustrie, beispielsweise zur Herstellung gasdichter Verpackungen, ist es bevorzugt, dass keine Lösungsmittel verwendet werden, deren Einsatz in Lebensmitteln untersagt ist. Erfindungsgemäß wird das Lösungsmittel, insbesondere bei dieser Anwendung, aus der Gruppe, die aus Ethanol, Wasser und Mischungen davon besteht, ausgewählt.

Unter dem Begriff "wässrig" im Sinne der vorliegenden Erfindung wird verstanden, dass das in der erfindungsgemäßen Suspension enthaltene oder in dem erfindungsgemäßen Verfahren verwendete wässrige Lösungsmittel zu mindestens 70 Gew.-%, vorzugsweise zu mindestens 80 Gew.-%, weiter bevorzugt zu mindestens 90 Gew.-%, noch weiter bevorzugt zu mindestens 95 Gew.-% und noch weiter bevorzugt zu mindestens 99 Gew.-% aus Wasser, jeweils bezogen auf das Gesamtgewicht des wassermischbaren Lösungsmittels ohne Additive und Hilfsstoffe.

Neben den geringen Kosten für dieses Lösungsmittel sind beispielsweise auch die Vorteile bei Rückgewinnung, Sicherheitsaspekte und gesundheitliche Aspekte von Vorteil. Insbesondere ist es daher bevorzugt, dass das Lösungsmittel zu mindestens 99,9 Gew.-% aus Wasser besteht oder vorzugsweise nur Spuren anderer Lösungsmittel beinhaltet, bezogen auf das Gesamtgewicht des wassermischbaren Lösungsmittels ohne Additive und Hilfsstoffe.

Das erfindungsgemäß eingesetzte Additiv bleibt bei den vorgenannten Mengenangaben der Lösungsmittel außer Acht, selbst wenn das betreffende Additiv isoliert als Flüssigkeit vorliegt.

Bei weiteren erfindungsgemäßen Ausführungsformen ist es bevorzugt, dass das erfindungsgemäß eingesetzte Lösungsmittel mindestens 10 Gew.-%, vorzugsweise mindestens 20 Gew.-%, weiter bevorzugt mindestens 30 Gew.-% und noch weiter bevorzugt mindestens 35 Gew.-% Wasser umfasst, jeweils bezogen auf das Gesamtgewicht des wassermischbaren Lösungsmittels ohne Additive und Hilfsstoffe.

Bei einer weiteren Ausführungsform betrifft die vorliegende Erfindung eine Suspension, umfassend ein wassermischbares Lösungsmittel, Graphenplättchen und mindestens 1 Additiv gemäß Formel I

$$cR(\text{-}Sp\text{-}W)_x \qquad (I),$$

mit den Strukturelementen cR, Sp und W, wobei das Strukturelement cR ein kondensiertes, polycyclisches Ringsystem 2 bis 5 aromatischen Ringen ist, wobei neben (-Sp-W) optional vorhandene weitere Substituenten ausgewählt werden aus der Gruppe bestehend aus =O, $-NR^{cR}$, =NH, $-OR^{cR}$, -OH, $-R^{cR}$, $-NR^{cR}_2$, $-NHR^{cR}$, - $NH_2$, $-(N(R^{cR})_3)^+$, $-C(=O)-OR^{cR}$, $-O-C(=O)-R^{cR}$ und -CN, vorzugsweise aus der Gruppe bestehend aus unsubstituierten, verzweigten und unverzweigten C1-C3 Alkylgruppen wie Methyl, Ethyl, n-Propyl und iso-Propyl,
das Strukturelement Sp ein eine lineare Kette aufweisender Abstandshalter ist, bei dem in der linearen Kette 2 bis 7 Atome angeordnet sind, wobei die 2 bis 7 Atome ausgewählt werden aus der Gruppe bestehend aus Kohlenstoff, Sauerstoff, Stickstoff und Silicium und wenigstens eine Einfachbindung in der linearen Kette enthalten ist,
und das Strukturelement W die Löslichkeit des Additivs in Wasser erhöht und Strukturelement W eine Struktur gemäß Formel (II) darstellt

$$-R_k((-E^{bo})_w-E^{th}-O-R^{th})_y(-F)_z \qquad (II)$$

wobei R aus der Gruppe, die aus verzweigten und unverzweigten C1-C6 Alkylresten wie Methyl, Ethyl, n-Propyl, iso-Propyl, n-Butyl, n-Pentyl und n-Hexyl, verzweigten und unverzweigten C2-C6 Alkenylresten, verzweigten und unverzweigten C2-C6 Alkinylresten, Phenylresten, Heteroarylresten mit 4 bis 5 Kohlenstoffatomen, C5-C7 Cycloalkylresten, nichtaromatischen heterocyclischen Resten mit 4 bis 6 Kohlenstoffatomen und Mischungen davon besteht, ausgewählt wird, wobei vorgenannte Reste substituiert und unsubstituiert sein können, und
wobei k 0 oder 1 ist,

$E^{bo}$ eine aus 1 bis 3 Atomen bestehende lineare Kette ist, wobei die Atome aus der Gruppe, die aus C, N und O besteht, ausgewählt werden, mit der Maßgabe, dass die Kette maximal nur 1 O oder N enthält, und wobei w 0 oder 1 ist,
$E^{th}$ eine Polyalkylenoxidkette mit 5 bis 75 Alkylenoxideinheiten, wobei die Alkylenoxideinheiten aus der Gruppe, die aus Ethoxyeinheiten, Propoxyeinheiten und Mischungen davon besteht, ausgewählt wird, ist,
$R^{th}$ aus der Gruppe, die aus H, unsubstituiertem, verzweigtem und unverzweigtem C1-C4 Alkyl wie wie Methyl, Ethyl, n-Propyl, iso-Propyl und n-Butyl und unsubstituiertem -C(=O)C1-C4-Alkyl besteht, ausgewählt wird,
F aus der Gruppe, die aus -COOH, $-(N(R^{cR})_3)^+$, $-O-P(=O)(OR^{cR})(OH)$, $-O-P(=O)(OH)_2$, $-P(=O)(OR^{cR})(OH)$, $-P(=O)(OH)_2$, $-O-S(=O)_2OH$, $-S(=O)_2OH$, Monosaccharidresten, Disaccharidresten, Oligosaccharidresten mit 3 bis 10 Saccharideinheiten und Polyoxazolinresten mit 3 bis 10 Oxazolineinheiten, ausgewählt wird,
$R^{cR}$ eine unsubstituierte, verzweigte oder unverzweigte C1 bis C3 Alkylgruppe, vorzugsweise Methyl, Ethyl, Prop-1-yl oder Prop-2-yl, ist, und wobei y und z jeweils unabhängig voneinander eine ganze Zahl von 0 bis 3 bedeuten, mit der Maßgabe, dass y + z mindestens 1 ist, wobei,
wenn kein Strukturelement W wenigstens eine Gruppe, die aus der Gruppe, die aus Polyoxyalkylengruppen mit wenigstens 3 Alkylenoxideinheiten, $-S(=O)_2OH$, $-S(=O)_2NH_2$, $-O-P(=O)(OR^{cR})(OH)$, $-O-P(=O)(OH)_2$, $-P(=O)(OR^{cR})(OH)$, $-P(=O)(OH)_2$, $-O-S(=O)_2OH$ und $-S(=O)_2OH$ besteht, ausgewählt wird, aufweist, die Strukturelemente W insgesamt mindestens zwei identische oder unterschiedliche funktionelle protonierbare, protonierte, deprotonierbare oder deprotonierte Gruppen aufweisen, welche ausgewählt werden aus der Gruppe bestehend aus -COOH, $-NH_2$, $-NHR^{cR}$, $-N(R^{cR})_2$, $-(N(R^{cR})_3)^+$, $-O-P(=O)(OR^{CR})(OH)$, $-O-P(=O)(OH)_2$, $-P(=O)(OR^{cR})(OH)$, $-P(=O)(OH)_2$, $-O-S(=O)_2OH$ und $-S(=O)_2OH$, wobei x eine ganze Zahl aus einem Bereich von 1 bis 4 ist, und wobei das wassermischbare Lösungsmittel zu mindestens 95 Gew.-% aus Lösungsmitteln besteht deren Dipolmoment größer als $3,5 \cdot 10^{-30}$ Cm ist und das wassermischbare Lösungsmittel ein wässriges Lösungsmittel ist, welches zu mindestens 90 Gew.-% aus Wasser besteht, jeweils bezogen auf das Gesamtgewicht des wassermischbaren Lösungsmittels ohne Additive und Hilfsstoffe.

Bei einer Weiterbildung der Erfindung ist es ferner bevorzugt, eine Graphenplättchensuspension bereitzustellen, die nach Einbringung von Energie, beispielsweise nach thermischer Einwirkung oder einer Einwirkung von UV-Strahlung weiterhin eine flexible Ausrichtbarkeit der Graphenplättchen gewährleistet. Dabei ist es bevorzugt, dass die Strukturelemente Sp und W des erfindungsgemäßen Additivs, vorzugsweise das komplette Additiv, keine Gruppen aufweisen, die polymerisierbar sind, insbesondere unter der Einwirkung von Hitze oder UV-Strahlung.

Insbesondere ist es bevorzugt, dass das erfindungsgemäße Additiv keine Polymere oder Monomere darstellt, wobei jedoch das Strukturelement W auch Alkylenoxidketten bestehend aus Ethoxyeinheiten, Propoxyeinheiten und Mischungen davon umfassen kann. Bei einer bevorzugten Ausführungsform umfasst auch das Strukturelement W keine polymeren Bestandteile.

Unter dem Begriff "UV-Strahlung" im Sinne der vorliegenden Erfindung wird elektromagnetische Strahlung verstanden, deren Wellenlänge im Bereich von 380 nm bis 10 nm, vorzugsweise im Bereich von 380 nm bis 100 nm, liegt. Dies kann für die erfindungsgemäßen Suspensionen von besonderer Bedeutung sein, da diese in überraschend hohen Konzentrationen an Graphenplättchen stabil sind und eine langfristige Lagerung bei Beständigkeit gegenüber einem Energieeintrag erleichtert wird. Beispielsweise können die erfindungsgemäßen Suspensionen durchaus Konzentrationen von 50 mg Graphenplättchen pro Liter Lösungsmittelmenge und höher aufweisen.

Das erfindungsgemäße Verfahren umfasst bei einer Variante folgende Schritte:

a) Bereitstellen einer Suspension von Graphit und einem Additiv gemäß Formel (I):

$$cR(\text{-}Sp\text{-}W)_x \qquad (I),$$

in einem wassermischbaren, vorzugsweise wässrigen, Lösungsmittel, und

b) Zerkleinern des Graphits unter Eintragen von Energie in die Suspension mittels Ultraschall, Kugelmühle, Rührwerkskugelmühle, Rotor-Stator-System, Homogenisator oder Kombinationen davon unter Erhalt von Graphenplättchen.

Gemäß einer weiteren Variante der Erfindung kann das Additiv gemäß Formel (I) auch erst im Verlauf des Zerkleinerungsschrittes b) zugesetzt werden. Bei dieser Verfahrensvariante umfasst dass erfindungsgemäße Verfahren folgende Schritte:

a) Bereitstellen einer Suspension von Graphit in einem wassermischbaren, vorzugsweise wässrigen, Lösungsmittel, und

b) Zerkleinern des Graphits unter Eintragen von Energie in die Suspension mittels Ultraschall, Kugelmühle, Rührwerkskugelmühle, Rotor-Stator-System, Homogenisator oder Kombinationen davon unter Erhalt von Graphenplättchen, unter Zugabe eines Additivs gemäß Formel (I):

$$cR(\text{-}Sp\text{-}W)_x \qquad (I).$$

Bei dieser Verfahrensvariante scheint weniger Additiv gemäß Formel (I) erforderlich zu sein, um eine qualitativ vergleichbare Graphensuspension zu erhalten. Es hat sich lediglich gezeigt, dass die Dauer des Zerkleinerungsschritt b) sich verlängern kann. Es wird vermutet, dass bei dieser Verfahrensvariante das Additiv besonders effizient zwischen die Graphenschichten im Graphit eindringen und diese spalten kann, so dass sehr wenig Additiv erforderlich ist. Dies ist beispielsweise dann vorteilhaft, wenn eine möglichst geringe Menge an Additiv in Relation zu den Graphenplättchen in der erfindungsgemäßen Suspension enthalten sein soll.

Bei einer weiteren bevorzugten Verfahrensvariante wird ein Additiv gemäß Formel (I) sowohl in Schritt a) als auch in Schritt b) zugegeben.

Bei dem Zerkleinerungsschritt b) des erfindungsgemäßen Verfahrens handelt es sich nicht um eine Dispergierung von Graphenplättchen oder einen Mischungsvorgang von Graphenplättchen in ein Medium. Beim Zerkleinerungsschritt b) erfolgt eine Spaltung in Graphenplättchen, wodurch auch bis zu monolagige Graphenplättchen vorzugsweise direkt aus kommerziell erhältlichem Graphit hergestellt werden.

Gemäß einer Verfahrensvariante des erfindungsgemäßen Verfahrens wird der kommerziell erhältliche Graphit zunächst klassiert, sodann zerkleinert, optional erneut klassiert und nachfolgend der erfindungsgemäße Zerkleinerungsschritt b) in Gegenwart von Additiv gemäß Formel (I) durchgeführt.

Beim vorliegenden Verfahren erfolgt die Trennung der Graphenschichten infolge der Einwirkung von Kräften, insbesondere Scherkräften. Zwar können unterschiedliche Verfahren miteinander kombiniert werden, jedoch beruht die Trennung der Graphenschichten im erfindungsgemäßen Verfahren hauptsächlich oder vollständig auf der Ausübung von Kräften auf die miteinander verbundenen Graphenschichten unter Einwirkung des Additivs und optional des Hilfsstoffes.

Unter dem Begriff "Zerkleinern" wird im Sinne der Erfindung verstanden, dass von dem Graphit bzw. den Graphitpartikeln Graphenplättchen delaminiert werden. Diese Delamination kann auch als Exfoliation bezeichnet werden. In Gegenwart des erfindungsgemäß zu verwendenden Additivs mit der Formel (I) werden unter Energieeintrag von dem Graphit bzw. von Graphitpartikeln Graphenplättchen abgetrennt.

Das erfindungsgemäße Verfahren ist auf die Herstellung einer Graphenplättchensuspension aus Graphit gerichtet, wobei natürlicher oder synthetischer Graphit verwendet werden kann. Die in den erfindungsgemäßen Graphenplättchensuspensionen enthaltenen Graphenplättchen weisen eine ausgezeichnete Stabilität in der Suspension auf und lassen sich beispielsweise überraschend gut in hochkonzentrierter Form lagern oder isolieren und je nach Bedarf weiterverarbeiten. Als Graphit werden Stoffe verstanden, die eine große Zahl an Graphenschichten aufweisen, die über van-der-Waals-Kräfte miteinander verbunden sind. Unter Graphit werden erfindungsgemäß weder Kohlenstoffnanoröhren noch Fullerene verstanden.

Die zur Ablösung der Graphenschichten bzw. zur Zerkleinerung des Graphits eingesetzten physikalischen Verfahren im Sinne der vorliegenden Erfindung und wie beispielsweise in Schritt (b) des erfindungsgemäßen Verfahrens verwendet umfassen grundsätzlich alle dem Fachmann bekannten Zerkleinerungsverfahren. Beispiele für erfindungsgemäß im Schritt b) zu verwendende Zerkleinerungsverfahren sind die Verwendung von Ultraschall, Kugelmühle, Rührwerkskugelmühle, Rotor-Stator-System oder Homogenisator.

Gemäß einer Variante wird in Schritt b) des erfindungsgemäßen Verfahrens Ultraschall verwendet. Die Verwendung von Ultraschall bei der Herstellung der erfindungsgemäßen Graphensuspensionen hat beispielsweise den Vorteil, dass dieses Zerkleinerungsverfahren und entsprechende Vorrichtungen bereits Einzug in heutige Produktionsverfahren gefunden haben und vielfältig anzutreffen sind. Unter Verwendung von Ultraschall können vorteilhafterweise sehr einfach in einem Batchbetrieb kleinere Produktmengen hergestellt werden, die flexibel für weitere Abtestungen zur Verfügung gestellt werden. Das Ultraschallverfahren eignet sich daher besonders für Einsatzzwecke, bei denen beispielsweise eine genaue Abstimmung des Additivs gemäß Formel (I) und gegebenenfalls auch des Hilfsstoffs gemäß Formel H1 an eine weiterführende Formulierung besonders wichtig ist.

Die Zerkleinerung mittels Ultraschall kann kontinuierlich und diskontinuierlich betrieben werden. Kontinuierliche Zerkleinerungsverfahren mittels Ultraschall nutzen beispielsweise eine Durchflusszelle in Kombination mit einem Ultraschallfinger wie dem UP50H (50 Watt, 30 kHz) der Firma Hielscher. Derartige Ultraschallfinger können auch für stationäre Beschallungsverfahren verwendet werden. Ein weiteres Gerät, welches beispielsweise für die Zerkleinerung mittels Ultraschall eingesetzt werden kann, ist die UIP1000hd (20kHz, 1000W) der Firma Hielscher. Bei dem erfindungsgemäß in Schritt b) verwendeten Zerkleinerungsverfahren unter Einsatz von Ultraschall wird typischerweise eine Amplitude von 20-80 % und ein Zyklus von 0,2 bis 1 eingestellt. Die Beschallungsdauer beträgt beispielsweise 0,5 bis 6 Stunden. Hierbei kann der Graphit beispielsweise in einer Konzentration im Bereich von 0,5 bis 7 g pro Liter eingesetzt werden.

Gemäß einer weiteren Variante wird in Schritt b) des erfindungsgemäßen Verfahrens eine Kugelmühle verwendet. Die Vermahlung von Graphit in einer Kugelmühle kann in einem einzigen Schritt erfolgen, um das Herstellungsverfahren möglichst einfach zu gestalten und die Kosten zu minimieren. Bei dem erfindungsgemäßen Verfahren ist es bei Verwendung einer Kugelmühle in Schritt b) bevorzugt, bei der Herstellung der erfindungsgemäßen Graphensuspensionen mehrere Mahlstufen zu verwenden. Hierbei kann die Graphitsuspension umfassend Lösungsmittel und erfindungsgemäß zu verwendendes Additiv bei unterschiedlichen Mahlbedingungen, wie beispielsweise Mühlendrehgeschwindigkeit, Kugelgröße, Mahlkörperfüllgrad, Mahldauer, Mahlkörpermaterial bzw. -dichte, wie z. B. Stahlkugeln, Keramikkugeln, etc., vermahlen werden. Nach der Vermahlung kann das Vermahlungsprodukt je nach Wunsch direkt abgefüllt, verdünnt oder konzentriert werden.

Für die Verarbeitung in einer Kugelmühle ist ein wichtiger zu beachtender Faktor die kritische Drehzahl $n_{krit}$. Die kritische Drehzahl gibt den Zeitpunkt an, zu dem die eingesetzten Kugeln infolge der Zentrifugalkräfte an die Wände der Mühlen gepresst werden, wodurch die Vermahlung praktisch zum Stillstand kommt.

$$n_{krit} = \sqrt{\frac{g}{2\pi^2 D}}$$

D: Trommeldurchmesser
G: Gravitationskonstante

Die Umdrehungsgeschwindigkeiten einer Kugelmühle betragen vorzugsweise 25% bis 68%, weiter vorzugsweise 28 % bis 60 % und besonders bevorzugt 30 % bis unter 50 % und weiterhin besonders bevorzugt 35 % bis 45 % der kritischen Drehzahl $n_{krit}$.

Insbesondere hat es hat sich als vorteilhaft erwiesen, wenn bei dem erfindungsgemäß in Schritt b) zu verwendenden Zerkleinerungsverfahren große Scherkräfte auf die Graphitpartikel ausgeübt werden. Gemäß einer weiteren Variante wird in Schritt b) des erfindungsgemäßen Verfahrens eine Rührwerkskugelmühle verwendet. Die Zerkleinerung unter Einsatz einer Rührwerkskugelmühle erfolgt typischerweise in einem kontinuierlichen Betrieb. Je nach eingesetztem Graphit, Additiv und gegebenenfalls dem Einsatz eines Hilfsstoffes kann die Vermahlung unter Einsatz verschiedener Mahlkörper, beispielsweise hinsichtlich ihres Materials oder ihrer Größe, und Vermahlungsbedingungen, beispielsweise

Drehzahl oder Dauer der Vermahlung, durchgeführt werden.

Gemäß einer weiteren Variante wird in Schritt b) des erfindungsgemäßen Verfahrens ein Homogenisator verwendet. Unter einem Homogenisator werden verschiedene Vorrichtungen verstanden, welche eine Homogenisierwirkung erzielen. Bei Homogenisatoren kann zwischen Homogenisatoren auf Rotor-Stator-Basis und basierend auf Pumpvorgängen unterschieden werden. Rotor-Stator-Homogenisatoren basieren meist in erster Linie auf einer starken Verwirbelung infolge der Bewegungsenergie des Rotors. Alternativ kann das zu homogenisierende Gut mittels Pumpen in Bewegung versetzt werden und die erzielte Zerkleinerungswirkung nur in geringem Maße auf Verwirbelung beruhen. Dazwischen existieren verschiedenste Mischtypen.

Homogenisatoren basierend auf einem Rotor-Stator-System erzeugen eine Dispergierwirkung mittels einer Verwirbelung infolge der Bewegungsenergie des Rotors. Hiermit wird typischerweise nur eine geringe Pumpwirkung erzielt, so dass hohe Antriebsenergien erforderlich sind. Als Variation kann beispielsweise ein Umwälzrührwerk verwendet werden, das die Bewegungsenergie des Rotors in erster Linie in eine Pumpwirkung und damit in Bewegungsenergie des zu homogenisierenden Guts umsetzt. Ferner können beispielsweise Zusatzflügel am Rotor einer Rotor-Stator-Dispergiermaschine angebracht werden, um eine Zwischenstufe der vorgenannten Ausführungsformen zu erzielen. Beispiele derartiger Systeme beispielsweise für den Laborbetrieb sind der ULTRA-TURRAX Dispergierer der Firma IKA und der L5 Mischer der Firma Silverson.

Bei der Verwendung von Pumpvorgängen zur Homogenisierung wird das zu homogenisierende Gut primär mittels einer Pumpe in Bewegung versetzt und anschließend beispielsweise durch eine Düse geleitet, wobei starke Kräfte einwirken. Beispielsweise wird in den erfindungsgemäß eingesetzten Homogenisatoren die Graphitdispersion unter einem Druck von 500 bar bis 900 bar, vorzugsweise unter einem Druck von 700 bar bis 800 bar, durch eine zylindrische Homogenisierdüse mit einem Durchmesser von 0,1 mm bis 0,5 mm, vorzugsweise 0,1 mm bis 0,2 mm, gepumpt. Unter diesen Bedingungen werden sehr gute Delaminationen von Graphitpartikeln unter Erhalt von Graphenplättchen erzielt. Erfindungsgemäß ist es bevorzugt, die zu homogenisierende Dispersion zunächst durch eine größere zylindrische Homogenisierdüse mit einem Durchmesser von 0,3 bis 0,7 mm zu führen, um eine Vordispergierung zu erzielen.

Der vorgenannte Homogenisator wird vorzugsweise in einem Kreislaufsystem betrieben, um eine gleichförmige Zerkleinerung der Partikel zu erzielen. Insbesondere ist es bevorzugt die Dispersion mit den zu zerkleinernden Graphitpartikeln 5 bis 40 mal, vorzugsweise 10 bis 30 mal, durch das vorgenannte Düsensystem zu pumpen.

Um eine gleichbleibende Temperatur in der Homogenisatordüse zu gewährleisten ist es erfindungsgemäß bevorzugt, dass die Dispersion vor der Homogenisatordüse durch einen Wärmetauscher geführt wird, um eine Temperatur von 30 °C bis 70 °C einzustellen. Ferner kann es insbesondere bei hohen Drücken bevorzugt sein, die Dispersion nach der Homogenisatordüse durch einen Wärmetauscher zu führen, um ein schnelles Abkühlen der Dispersion zu ermöglichen und negative Temperatureffekte zu vermeiden.

Vorzugsweise wird eine Hochdruck-Membranpumpe verwendet, um eine Kontamination des Produkts mit Abrieb oder Schmiermitteln zu vermeiden. Die Homogenisatordüse kann beispielsweise aus einem in einen Stahlkörper eingepressten hartkeramischen Material gefertigt sein. Als hartkeramisches Material kann beispielsweise Zirkonoxid und Siliciumcarbid verwendet werden.

Gemäß einer bevorzugten Weiterbildung des Verfahrens schließt sich an Schritt b) ein Schritt c) an:

c) Isolieren der in Schritt b) erhaltenen Graphenplättchen durch Zentrifugieren der Suspension unter Erhalt einer Mischung von Graphenplättchen und Additiv im Überstand.

Gemäß einer bevorzugten Weiterbildung des Verfahrens wird bei Schritt a) wenigstens ein Hilfsstoff gemäß Formel H1, vorzugsweise wenigstens zwei voneinander verschiedene Hilfsstoffe mit der Formel H1, verwendet.

Gemäß einer bevorzugten Weiterbildung des Verfahrens wird in Schritt b) die Energie in die Suspension mittels Rührwerkskugelmühle eingetragen.

Gemäß einer bevorzugten Weiterbildung des Verfahrens wird der wenigstens eine Hilfsstoff mit der Formel H1 in einer Konzentration von mindestens 30 Gew.-%, vorzugsweise mindestens 70 Gew.-%, jeweils bezogen auf das Gewicht des Graphits, verwendet.

Gemäß einer weiteren Ausführungsform betrifft die vorliegende Erfindung Graphenplättchen sowie Suspensionen, welche gemäß dem erfindungsgemäßen Verfahren und dessen Ausführungsformen und Weiterbildungen hergestellt wurden.

Gemäß einer bevorzugten Weiterbildung der erfindungsgemäßen Verwendung wird das Additiv gemäß Formel (I) in Kombination mit einem Hilfsstoff gemäß Formel H1 verwendet.

Es hat sich überraschend gezeigt, dass durch das erfindungsgemäße Verfahren ein Wechsel des Lösungsmittels vermieden werden kann. Ein Lösungsmittelwechsel ist bei Graphenplättchen höchst problematisch, da es zu Adhäsion und/oder Agglomeration der Graphenplättchen kommen kann.

Unter Verwendung des erfindungsgemäßen Verfahrens werden bessere Ergebnisse als mit den aus der Literatur bekannten Verfahren erzielt. Mittels Gasphasenabscheidung hergestelltes Graphen ist hochgradig dünnlagig, jedoch sehr aufwendig, teuer in der Herstellung und schwierig in der Handhabung. Bei mittels Vermahlung in einem unpolaren Lösungsmittel hergestellten Graphenplättchen muss das Lösungsmittel ausgetauscht werden, wobei zum Einen der Aufwand und die Kosten drastisch ansteigen und zum Anderen die Eigenschaften der Graphenplättchensuspension, beispielsweise aufgrund der Agglomeration von Graphenplättchen, deutlich verschlechtert werden.

Bei nach dem Oxidations-Reduktions-Verfahren hergestellten Graphenplättchen weisen diese infolge der unvollständigen Reduktion oxidierte Stellen auf der Oberfläche der Graphenplättchen auf, wodurch eine feste Aneinanderlagerung zumindest verhindert wird. Aufgrund des Oxidgehaltes weisen die Graphenoxidplättchen sowie die daraus hergestellten Produkte nicht die bei Graphenplättchen hervorragenden Eigenschaften, beispielsweise elektrische Leitfähigkeit, auf.

Mit dem erfindungsgemäßen Verfahren ist es insbesondere möglich, stabile Suspensionen zu erhalten, die sehr große Konzentrationen an Graphenplättchen enthalten. Hierbei ist mit der Stabilität der Suspensionen nicht nur deren Beständigkeit gegen das Absetzen von Graphenplättchen gemeint, sondern auch, dass die erfindungsgemäßen Suspensionen eine geringe Neigung zur Agglomeration von Graphenplättchen aufweisen. Eine Agglomeration von Graphenplättchen würde zu einer drastischen Verschlechterung der Produkteigenschaften der Graphenplättchen und der Graphenplättchen-haltigen Suspension führen.

Bei höheren Konzentrationen an Graphenplättchen in der Suspension kann es bevorzugt sein, höhere Konzentrationen an Additiv(en) gemäß Formel (I) und optional an Hilfsstoff gemäß Formel H1 zuzugeben, um eine erwünschte Stabilität der Suspensionen zu gewährleisten. Erfindungsgemäß ist es bevorzugt, hochkonzentrierte Graphenplättchensuspensionen bereitzustellen.

Das erfindungsgemäß zu verwendende Additiv gemäß Formel (I) und optional wenigstens einem Hilfsstoff gemäß Formel H1 haben sich als bedeutsam für die Herstellung der qualitativ hochwertigen erfindungsgemäßen Graphenplättchen erwiesen. Die qualitativ hochwertigen erfindungsgemäßen Graphenplättchen bzw. die Suspension mit den qualitativ hochwertigen Graphenplättchen ist von großer Bedeutung für die Eigenschaften von unter Verwendung von Graphenplättchen hergestellter Produkte. Durch die Aufbringung des erfindungsgemäß zu verwendenden Additivs auf Graphenplättchen können vorteilhafterweise hohe Langzeitstabilitäten entsprechender Suspensionen, auch bei einer starken Konzentrierung erhalten werden.

Die erfindungsgemäßen Graphenplättchen und deren erfindungsgemäße Suspensionen eignen sich beispielsweise für die Verwendung in und/oder bei der Herstellung von Supercaps (Superkondensatoren), Batterien, elektrisch leitfähigen Schichten, insbesondere transparenten elektrisch leitfähigen Schichten, Kompositmaterialien für elektrisch leitfähige Kunststoffe, insbesondere elektrisch ableitfähige Kunststoffe, elektrisch leitfähige Beschichtungszusammensetzungen, insbesondere elektrisch ableitfähige Beschichtungszusammensetzungen, Brennstoffzellen und zur Erzielung spezifischer Barriereeffekte. Die gute technische Zugänglichkeit in Verbindung mit den bereits sehr guten Eigenschaften in Relation zu monolagigen Graphenplättchen eröffnet hierbei neue Einsatzmöglichkeiten, die bislang aufgrund der hohen Produktionskosten monolagiger Graphenplättchen mit bekannten Verfahren unattraktiv waren. Auch ist insbesondere der Einsatz erfindungsgemäßer Graphenplättchen in einem Kompositmaterial zur Erzielung einer mechanischen Verstärkung eine bevorzugte erfindungsgemäße Verwendung.

Im Hinblick auf die spezifischen Barriereeigenschaften von Graphenplättchen ist die Verwendung der erfindungsgemäßen Graphenplättchen oder deren Suspensionen bei der Herstellung von Membranen zur großtechnischen Konzentrierung von Lösungen durch Abtrennung von Wasser eine bevorzugte Ausführungsform der Erfindung. Die hohe elektrische Leitfähigkeit der Graphenplättchen in Verbindung mit der hohen Transparenz macht beispielsweise die Verwendung von Graphenplättchen oder einer Suspension davon in oder bei der Herstellung von Flüssigkristalldisplays, Touchscreens, organischer Photovoltaik und organischen LEDs zu einer weiteren bevorzugten Ausführungsform der Erfindung. Gemäß einer weiteren bevorzugten Verwendung werden erfindungsgemäße Graphenplättchen mit Antikörpern oder Antikörperfragmenten belegt, um diese beispielsweise in Diagnoseverfahren oder Analyseverfahren zu verwenden. Eine weitere bevorzugte Verwendung, die auf die Halbleitereigenschaften von Graphenplättchen zurückgeht, betrifft die Verwendung von Graphenplättchen oder einer Suspension davon in der Elektronik. Noch eine weitere bevorzugte Verwendung basiert auf Veränderungen des Widerstands von Graphenplättchen infolge einer Absorption von Gas auf der Graphenplättchenoberfläche. Mithin ist die Verwendung von Graphenplättchen oder einer Suspension davon in oder bei der Herstellung von Detektoren eine bevorzugte erfindungsgemäße Verwendung.

Ferner betrifft die vorliegende Erfindung Graphenplättchen und Graphenplättchensuspensionen, welche gemäß den erfindungsgemäßen Verfahren hergestellt sind. Besonders bevorzugte Ausführungsformen finden sich in der Beschreibung der erfindungsgemäßen Graphenplättchen und deren Suspensionen. Die im Hinblick auf die erfindungsgemäße Suspension gegebenen Erläuterungen gelten entsprechend für die erfindungsgemäßen Graphenplättchen.

Beispiele bestimmter bevorzugter Ausführungsformen sind in den nachfolgenden Aspekten wiedergegeben.

Gemäß einem Aspekt 1 betrifft die vorliegende Erfindung eine Suspension, umfassend ein wassermischbares, vorzugsweise wässriges, Lösungsmittel, Graphenplättchen und mindestens 1 Additiv gemäß Formel I

$$cR(\text{-}Sp\text{-}W)_x \qquad (I),$$

mit den Strukturelementen cR, Sp und W, wobei
das Strukturelement cR ein 2 bis 7 aromatische Ringe umfassendes, kondensiertes, polycyclisches Ringsystem ist, das Strukturelement Sp ein eine lineare Kette aufweisender Abstandshalter ist, bei dem in der linearen Kette 2 bis 10 Atome angeordnet sind und wenigstens eine Einfachbindung in der linearen Kette enthalten ist, und das Strukturelement W die Löslichkeit des Additivs in Wasser erhöht, wobei,
wenn kein Strukturelement W wenigstens eine Gruppe, die aus der Gruppe, die aus Polyoxyalkylengruppe mit wenigstens 3 Alkylenoxideinheiten, Monosaccharidgruppen, Disaccharidgruppen, Oligosaccharidgruppen mit 3 bis 10 Saccharideinheiten, Polyoxazolingruppen mit 3 bis 10 Oxazolineinheiten, - $S(=O)_2OH$, $-S(=O)_2NH_2$, $-O-P(=O)(OR^{cR})(OH)$, $-O-P(=O)(OH)_2$, $-P(=O)(OR^{cR})(OH)$, $-P(=O)(OH)_2$, $-O-S(=O)_2OH$ und $-S(=O)_2OH$ besteht, ausgewählt wird, aufweist, die Strukturelemente W insgesamt mindestens zwei identische oder unterschiedliche funktionelle protonierbare, protonierte, deprotonierbare oder deprotonierte Gruppen aufweisen,
$R^{cR}$ eine unsubstituierte, verzweigte oder unverzweigte C1 bis C3 Alkylgruppe wie Methyl, Ethyl, n-Propyl und iso-Propyl ist und
wobei x eine ganze Zahl aus einem Bereich von 1 bis 4 ist. Hierbei sind die vorgenannten und die nachfolgenden Strukturelemente, soweit nicht anderslautend spezifiziert, unabhängig voneinander wählbar.

Gemäß einem Aspekt 2 betrifft die vorliegende Erfindung eine Suspension gemäß Aspekt 1, wobei die 2 bis 10 Atome der linearen Kette des Strukturelements Sp aus der Gruppe, die aus C, O, N, S, Si und P, vorzugsweise aus C, O, N und S, besteht, ausgewählt werden, mit der Maßgabe, dass in der linearen Kette, abgesehen von Kohlenstoffatomen, keine identischen Atome direkt zueinander benachbart angeordnet sind.

Gemäß einem Aspekt 3 betrifft die vorliegende Erfindung eine Suspension gemäß einem der vorhergehenden Aspekte, wobei das Strukturelement W eine Struktur gemäß Formel (II) aufweist:

$$\text{-}R_k((\text{-}E^{bo})_w\text{-}E^{m}\text{-}O\text{-}R^{th})_v(\text{-}F)_z \qquad (II),$$

wobei R aus der Gruppe, die aus verzweigten und unverzweigten C1-C6 Alkylresten wie Methyl, Ethyl, n-Propyl, iso-Propyl, n-Butyl, n-Pentyl und n-Hexyl, verzweigten und unverzweigten C2-C6 Alkenylresten, verzweigten und unverzweigten C2-C6 Alkinylresten, Phenylresten, Heteroarylresten mit 4 bis 5 Kohlenstoffatomen, C5-C7 Cycloalkylresten, nichtaromatischen heterocyclischen Resten mit 4 bis 6 Kohlenstoffatomen und Mischungen davon, wobei die vorgenannten Reste substituiert und unsubstituiert sein können, besteht, ausgewählt wird, wobei k 0 oder 1 ist,

$E^{bo}$ eine aus 1 bis 3 Atomen bestehende lineare Kette ist, wobei die Atome aus der Gruppe, die aus C, N und O besteht, ausgewählt werden, mit der Maßgabe, dass die Kette maximal nur 1 O oder N enthält, und wobei w 0 oder 1 ist,
$E^{th}$ eine Polyalkylenoxidkette mit 3 bis 100 Alkylenoxideinheiten, vorzugsweise 5 bis 75 Alkylenoxideinheiten, ist, wobei die Alkylenoxideinheiten aus der Gruppe, die aus Ethoxyeinheiten, Propoxyeinheiten und Mischungen davon besteht, ausgewählt wird, ist.
$R^{th}$ aus der Gruppe, die aus H, unsubstituiertem, verzweigtem und unverzweigtem C1-C4-Alkyl wie Methyl, Ethyl, n-Propyl, iso-Propyl und n-Butyl und unsubstituiertem -C(=O)C1-C4-Alkyl besteht, ausgewählt wird,
F aus der Gruppe, die aus -COOH, $-(N(R^{cR})_3)^+$, $-O-P(=O)(OR^{cR})(OH)$, $-O-P(=O)(OH)_2$, $-P(=O)(OR^{cR})(OH)$, $-P(=O)(OH)_2$, $-O-S(=O)_2OH$, $-S(=O)_2OH$, Monosaccharidgruppen, Disaccharidgruppen, Oligosaccharidgruppen mit 3 bis 10 Saccharideinheiten und Polyoxazolingrupppen mit 3 bis 10 Oxazolineinheiten, ausgewählt wird,
$R^{cR}$ eine unsubstituierte, verzweigte oder unverzweigte C1 bis C3 Alkylgruppe wie Methyl, Ethyl, n-Propyl und iso-Propyl ist, und
wobei y und z jeweils unabhängig voneinander eine ganze Zahl von 0 bis 3 bedeuten, mit der Maßgabe, dass y + z mindestens 1 ist.

Gemäß einem Aspekt 4 betrifft die vorliegende Erfindung eine Suspension gemäß einem der vorhergehenden Aspekte, wobei mindestens 3 Atome, vorzugsweise mindestens 4 Atome, der linearen Kette des Strukturelements Sp eine Einfachbindung entlang der Kette aufweisen

Gemäß einem Aspekt 5 betrifft die vorliegende Erfindung eine Suspension gemäß einem der vorhergehenden Aspekte, wobei der molare Anteil an Ethoxyeinheiten in Kettenstrukturen, bestehend aus mindestens 3 Einheiten, welche ausgewählt werden aus der Gruppe bestehend aus Ethylenoxideinheiten und Propylenoxideinheiten, in den Strukturelementen Sp und W, mindestens 50 mol-%, vorzugsweise mindestens 60 mol-%, beträgt.

Gemäß einem Aspekt 6 betrifft die vorliegende Erfindung eine Suspension gemäß einem der vorhergehenden Aspekte, wobei F ein Mono- oder Polyglycosid mit 2 bis 10 Pyranose- oder Furanoseresten, oder ein Alkylglycosid oder Alkylpolyglycosid mit 2 bis 10 Pyranose- oder Furanoseresten, wobei Alkyl ein verzweigtes oder unverzweigtes C1-C4-

Alkyl wie Methyl, Ethyl, n-Propyl, iso-Propyl und n-Butyl ist, ist.

Gemäß einem Aspekt 7 betrifft die vorliegende Erfindung eine Suspension gemäß einem der vorhergehenden Aspekte, wobei das Polyoxazolin ausgewählt wird aus der Gruppe bestehend aus monohydroxyterminierten oder monoaminoterminierten Poly-2-alkyl-2-oxazolinen oder Poly-2-alkyl-2-oxazinen, wobei die Alkylgruppe eine verzweigte oder unverzweigte C1-C24 wie Methyl, Ethyl, n-Propyl, iso-Propyl, n-Butyl, tert-Butyl, n-Pentyl, n-Hexyl, n-Heptyl und n-Octyl gruppe, vorzugsweise verzweigte oder unverzweigte C2-C12 Alkylgruppe, mehr bevorzugt eine verzweigte oder unverzweigte C2-C6-Alkylgruppe wie Ethyl, n-Propyl, iso-Propyl, n-Butyl, n-Pentyl und n-Hexyl, ist.

Gemäß einem Aspekt 8 betrifft die vorliegende Erfindung eine Suspension gemäß einem der vorhergehenden Aspekte, wobei R und die lineare Kette des Strukturelements Sp unabhängig voneinander mit Substituenten substituiert sind, wobei die Substituenten von R und Sp unabhängig voneinander aus der Gruppe, die aus =O, $=NR^{cR}$ =NH, -CN, -SH, $-OR^{cR}$, -OH, $-R^{cR}$, $-N(R^{cR})_2$, $-NHR^{cR}$, $-NH_2$ - $(N(R^{cR})_3)^+$, $-C(=O)OR^{cR}$, $-O-C(=O)-R^{cR}$, $-O-P(=O)(O(R^{cR})_2$, $-P(=O)(O(R^{cR})_2$, $-O-S(=O)_2-OR^{Et}$, $-S(=O)_2-OR^{Et}$, $-S(=O)_2R^{Et}$ und $-S(=O)_2N(R^{cR})_2$ ausgewählt werden, und $R^{cR}$ eine unsubstituierte, verzweigte oder unverzweigte C1 bis C3 Alkylgruppe wie Methyl, Ethyl, n-Propyl und iso-Propyl ist, wobei $R^{Et}$ eine verzweigte oder unverzweigte C1-C12 Alkylgruppe wie Methyl, Ethyl, n-Propyl, iso-Propyl, n-Butyl, tert-Butyl, n-Pentyl, n-Hexyl, n-Heptyl und n-Octyl, verzweigte oder unverzweigte C2-C12 Alkenylgruppe, verzweigte oder unverzweigte C2-C12 Alkinylgruppe, C6-C10 Arylgruppe, Heteroarylgruppe mit 4-9 Kohlenstoffatomen, C5-C12 Cycloalkylgruppe oder nichtaromatische heterocyclische Gruppe mit 4-11 Kohlenstoffatomen ist, wobei die vorgenannten Reste substituiert oder unsubstituiert sein können, und die Substituenten von $R^{Et}$ unabhängig voneinander aus der Gruppe, die aus -COOH, -OH, $-N(R^{cR})_2$, $-O-P(=O)(OR^{cR})(OH)$, $-O-P(=O)(OH)_2$, $-P(=O)(OR^{cR})(OH)$, $-P(=O)(OH)_2$, $-O-S(=O)_2OH$ und $-S(=O)_2OH$ besteht, ausgewählt werden.

Gemäß einem Aspekt 9 betrifft die vorliegende Erfindung eine Suspension gemäß einem der vorhergehenden Aspekte, wobei das Strukturelement cR einfach oder mehrfach substituiert ist, wobei die Substituenten von cR aus der Gruppe, die aus =O, $-NR^{cR}$, =NH, $-OR^{cR}$, -OH, $-R^{cR}$, $-NR^{cR}{}_2$, $-NHR^{cR}$, $-NH_2$, $-(N(R^{cR})_3)^+$, $-C(=O)-OR^{cR}$, $-O-C(=O)-R^{cR}$ und -CN besteht ausgewählt wird.

Gemäß einem Aspekt 10 betrifft die vorliegende Erfindung eine Suspension gemäß einem der vorhergehenden Aspekte, wobei das Strukturelement cR des mindestens einen Additivs ein kondensiertes, polycyclisches Ringsystem mit 2 bis 7 aromatischen Ringen und 0 bis 4 nichtaromatischen Heterocyclen ist, vorzugsweise ein kondensiertes, polycyclisches Ringsystem mit 3 bis 6 aromatischen Ringen und 0 bis 2 nichtaromatischen Heterocyclen ist, mehr bevorzugt ein kondensiertes, polycyclisches Ringsystem mit 3 bis 5 aromatischen Ringen und 0 bis 2 nichtaromatischen Heterocyclen ist.

Gemäß einem Aspekt 11 betrifft die vorliegende Erfindung eine Suspension gemäß einem der vorhergehenden Aspekte, wobei das kondensierte, polycyclische Ringsystem des Strukturelements cR von mindestens einem Additiv mindestens einen Heterocyclus umfasst, wobei der Heterocyclus vorzugsweise mindestens 1 Atom, das aus der Gruppe, die aus Stickstoff, Sauerstoff, Schwefel und Phosphor besteht, enthält.

Gemäß einem Aspekt 12 betrifft die vorliegende Erfindung eine Suspension gemäß einem der vorhergehenden Aspekte, wobei das Strukturelement cR vier aromatische Ringe, vorzugsweise Pyren, umfasst.

Gemäß einem Aspekt 13 betrifft die vorliegende Erfindung eine Suspension gemäß einem der vorhergehenden Aspekte, wobei das Strukturelement Sp in der linearen Kette 2 bis 8 Kohlenstoffatome, vorzugsweise 3 bis 7, umfasst.

Gemäß einem Aspekt 14 betrifft die vorliegende Erfindung eine Suspension gemäß einem der vorhergehenden Aspekte, wobei die Strukturelemente (-Sp-W) zusammengenommen die Struktur $-(CH_2)_m(-C(=O))_p-O-E^{AO}-CH_3$, wobei m in einem Bereich von 2 bis 10 liegt, p = 0 oder 1 ist, $E^{AO}$ aus n Ethoxyeinheiten und q Propoxyeinheiten besteht, n im Bereich von 3 bis 100 und q in einem Bereich von 0 bis 97 liegt, wobei n+q in einem Bereich von 3 bis 100 liegt, aufweisen.

Gemäß einem Aspekt 15 betrifft die vorliegende Erfindung eine Suspension gemäß einem der vorhergehenden Aspekte, wobei x aus einem Bereich von 1 bis 2 ausgewählt wird.

Gemäß einem Aspekt 16 betrifft die vorliegende Erfindung eine Suspension gemäß einem der vorhergehenden Aspekte, wobei y +z mindestens 2, vorzugsweise mindestens 3, ist.

Gemäß einem Aspekt 17 betrifft die vorliegende Erfindung eine Suspension gemäß einem der vorhergehenden Aspekte, wobei das Additiv folgende Struktur aufweist:

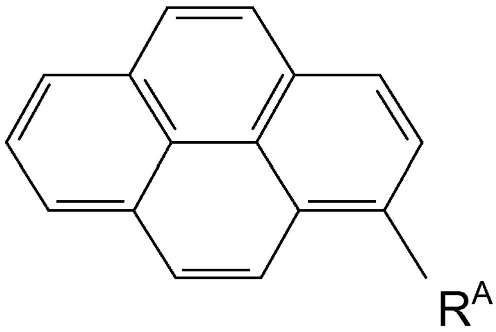

wobei $R^A$ = $-(CH_2)_m(-C(=O))_p-O-E^{AO}-CH_3$ ist und m in einem Bereich von 2 bis 10 liegt, p = 0 oder 1 ist, $E^{AO}$ aus n Ethoxyeinheiten und q Propoxyeinheiten besteht, n in einem Bereich von 5 bis 48 und q in einem Bereich von 0 bis 43 liegt, wobei n+q in einem Bereich von 5 bis 48 liegt.

Gemäß einem Aspekt 18 betrifft die vorliegende Erfindung eine Suspension gemäß einem der vorhergehenden Aspekte, wobei der Oxidgehalt der Graphenplättchen unter 1,5 Gew.-%, vorzugsweise unter 1,2 Gew.-%, liegt.

Gemäß einem Aspekt 19 betrifft die vorliegende Erfindung eine Suspension gemäß einem der vorhergehenden Aspekte, wobei die Graphenplättchen im Ramanspektrum die Halbwertsbreite des 2D-Peaks in einem Bereich von 35 bis 75 $cm^{-1}$ aufweisen.

Gemäß einem Aspekt 20 betrifft die vorliegende Erfindung eine Suspension gemäß einem der vorhergehenden Aspekte, wobei die Graphenplättchen im Ramanspektrum das Intensitätsverhältnis des 2D-Peaks zum G-Peak im Bereich von 0,5 bis 2 liegt und die Halbwertsbreite des 2D-Peaks in einem Bereich von 35 bis 65 $cm^{-1}$ aufweisen.

Gemäß einem Aspekt 21 betrifft die vorliegende Erfindung eine Suspension gemäß einem der vorhergehenden Aspekte, wobei das mindestens eine Additiv eine Wasserlöslichkeit bei einer Temperatur von 20°C von mindestens 0,05 g/l aufweist.

Gemäß einem Aspekt 22 betrifft die vorliegende Erfindung eine Suspension gemäß einem der vorhergehenden Aspekte, wobei die Suspension das mindestens eine Additiv gemäß Formel (I) in einer Gesamtmenge aus einem Bereich von 1 Gew.-% bis 50 Gew.-%, bezogen auf das Gewicht der Graphenplättchen, enthält.

Gemäß einem Aspekt 23 betrifft die vorliegende Erfindung eine Suspension gemäß einem der vorhergehenden Aspekte, wobei die Graphenplättchen eine mittlere Dicke aus einem Bereich von 0,5 und 5 nm, vorzugsweise von 0,6 bis 3 nm, aufweisen.

Gemäß einem Aspekt 24 betrifft die vorliegende Erfindung eine Suspension gemäß einem der vorhergehenden Aspekte, wobei die Graphenplättchen in der Suspension in einer Konzentration von mindestens 0,04 g/l, vorzugsweise mindestens 0,1 g/l, vorliegen.

Gemäß einem Aspekt 25 betrifft die vorliegende Erfindung eine Suspension gemäß einem der vorhergehenden Aspekte, wobei die Suspension mindestens 1 Hilfsstoff gemäß Formel H1 umfasst,

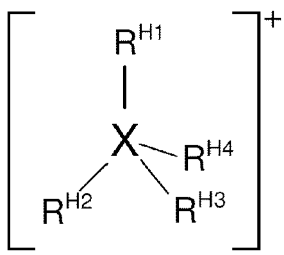

Formel H1,

wobei X aus der Gruppe, die aus N und P besteht, ausgewählt wird,

wobei $R^{H1}$, $R^{H2}$, $R^{H3}$, $R^{H4}$ unabhängig voneinander gleich oder verschieden sind und aus der Gruppe, die aus verzweigten und unverzweigten C1-C8 Alkylgruppen wie Methyl, Ethyl, n-Propyl, iso-Propyl, n-Butyl, n-Pentyl, n-Hexyl, n-Heptyl und n-Octyl, verzweigten und unverzweigten C2-C8 Alkenylgruppen, verzweigten und unverzweigten C2-C8 Alkinylgruppen, C5-C10 Arylgruppen, Heteroarylen mit 4 bis 9 Kohlenstoffatomen, C5-C12 Cycloalkylgruppen, nichtaromatischen Heterocyclen mit 3 bis 11 Kohlenstoffatomen, wobei die vorgenannten Gruppen substituiert und unsubstituiert sein können, $-N(R^{cR})_2$, $-NHR^{cR}$, $-NH_2$, $-(N(R^{cR})_3)^+$, -H, -OH, $-OR^{H*}$, - CN besteht, ausgewählt wird,

wobei $R^{H*}$ aus der Gruppe, die aus verzweigten und unverzweigten C1-C8 Alkylgruppen wie Methyl, Ethyl, n-Propyl, iso-Propyl, n-Butyl, n-Pentyl, n-Hexyl, n-Heptyl und n-Octyl, verzweigten und unverzweigten C2-C8 Alkenylgruppen, verzweigten und unverzweigten C2-C8 Alkinylgruppen, C5-C10 Arylgruppen, Heteroarylen mit 4 bis 9 Kohlenstoffatomen,

C5-C12 Cycloalkylgruppen, nichtaromatischen Heterocyclen mit 3 bis 11 Kohlenstoffatomen, wobei die vorgenannten Gruppen substituiert und unsubstituiert sein können, besteht, ausgewählt wird,
und wobei, sofern wenigstens eines von $R^{H1}$, $R^{H2}$, $R^{H3}$, $R^{H4}$ unabhängig voneinander aus der Gruppe, die aus substituierter und nichtsubstituierter Arylgruppe, Heteroarylgruppe, nichtaromatischer Cycloalkylgruppe und nichtaromatischer Heterocycloalkylgruppe besteht, ausgewählt wird, die Substituenten der substituierten Gruppe aus der Gruppe, die aus verzweigten und unverzweigten C1-C8 Alkylgruppen wie Methyl, Ethyl, n-Propyl, iso-Propyl, n-Butyl, n-Pentyl, n-Hexyl, n-Heptyl und n-Octyl, verzweigten und unverzweigten C2-C8 Alkenylgruppen und verzweigten und unverzweigten C2-C8 Alkinylgruppen, wobei die vorgenannten Gruppen substituiert und unsubstituiert sein können, besteht, ausgewählt werden,
wobei die Substituenten aus der Gruppe, die aus =O, $=NR^{cR}$, =NH, -CN, -SH, - $OR^{cR}$, -OH, $-R^{cR}$, $-N(R^{cR})_2$, $-NHR^{cR}$, $-NH_2$, $-(N(R^{cR})_3)^+$, $-C(=O)-OR^{cR}$, $-O-C(=O)-R^{cR}$, $-O-P(=O)(OR^{cR})_2$, $-P(=O)(OR^{cR})_2$, $-O-S(=O)_2-OR^{Et}$, $-S(=O)_2-OR^{Et}$, $-S(=O)_{2R}{}^{Et}$ und - $S(=O)_2N(R^{cR})_2$, besteht, ausgewählt werden,
wobei $R^{Et}$ eine verzweigte oder unverzweigte C1-C12 Alkylgruppe wie Methyl, Ethyl, n-Propyl, iso-Propyl, sec-Butyl, n-Butyl, tert-Butyl, n-Pentyl, n-Hexyl, n-Heptyl, n-Octyl, n-Nonyl und n-Decyl, verzweigte oder unverzweigte C2-C12 Alkenylgruppe, verzweigte oder unverzweigte C2-C12 Alkinylgruppe, C6-C10 Arylgruppe, Heteroarylgruppe mit 4 bis 9 Kohlenstoffatomen, C5-C12 Cycloalkylgruppe oder nichtaromatische heterocyclische Gruppe mit 4 bis 11 Kohlenstoffatomen, wobei die vorgenannten Gruppen substituiert und unsubstituiert sein können, ist,
und wobei $R^{cR}$ eine unsubstituierte C1-C3 Alkylgruppe ist wie Methyl, Ethyl, n-Propyl und iso-Propyl.

Gemäß einem Aspekt 26 betrifft die vorliegende Erfindung eine Suspension gemäß einem der vorhergehenden Aspekte, wobei $R^{H1}$, $R^{H2}$, $R^{H3}$ identisch sind und $R^{H4}$ identisch zu $R^{H1}$ bis $R^{H3}$ oder verschieden sein kann.

Gemäß einem Aspekt 27 betrifft die vorliegende Erfindung eine Suspension gemäß einem der vorhergehenden Aspekte, wobei die Suspension wenigstens zwei Hilfsstoffe gemäß Formel H1 umfasst, wobei die beiden Hilfsstoffe voneinander verschieden sind.

Gemäß einem Aspekt 28 betrifft die vorliegende Erfindung eine Suspension gemäß einem der vorhergehenden Aspekte, wobei die Suspension wenigstens einen Hilfsstoff gemäß Formel H1 enthält, wobei X= N ist und wobei $R^{H1}$, $R^{H2}$, $R^{H3}$, $R^{H4}$ unabhängig voneinander gleich oder verschieden sind und aus der Gruppe, die aus substituierten und nichtsubstituierten, verzweigten und unverzweigten C1-C8 Alkylgruppen wie Methyl, Ethyl, n-Propyl, iso-Propyl, n-Butyl, n-Pentyl, n-Hexyl, n-Heptyl und n-Octyl besteht, ausgewählt werden, wobei die Substituenten vorzugsweise aus der Gruppe, die aus =O, $=NR^{cR}$, =NH, -CN, -SH, $-OR^{cR}$, -OH, - $R^{cR}$, $-N(R^{cR})_2$, $-NHR^{cR}$, $-NH_2$, $-(N(R^{cR})_3)^+$, $-C(=O)-OR^{cR}$, $-O-C(=O)-R^{cR}$, $-O-P(=O)(OR^{cR})_2$,- $P(=O)(OR^{cR})_2$, $-O-S(=O)_2-OR^{Et}$, $-S(=O)_2-OR^{Et}$, $-S(=O)_{2R}{}^{Et}$ und - $S(=O)_2N(R^{cR})_2$, besteht, ausgewählt werden.

Gemäß einem Aspekt 29 betrifft die vorliegende Erfindung eine Suspension gemäß einem der vorhergehenden Aspekte, wobei die Suspension wenigstens einen Hilfsstoff gemäß Formel H1 enthält, wobei X= N ist und wobei $R^{H1}$, $R^{H2}$, $R^{H3}$, $R^{H4}$ gleich oder verschieden sind und aus der Gruppe, die aus nichtsubstituierten, verzweigten und unverzweigten C1-C6 Alkylgruppen wie wie Methyl, Ethyl, n-Propyl, iso-Propyl, n-Butyl, n-Pentyl und n-Hexyl, vorzugsweise C1-C4 Alkylgruppen wie Methyl, Ethyl, n-Propyl, iso-Propyl und n-Butyl, besteht, ausgewählt werden.

Gemäß einem Aspekt 30 betrifft die vorliegende Erfindung eine Suspension gemäß einem der vorhergehenden Aspekte, wobei das Additiv folgende Struktur aufweist:

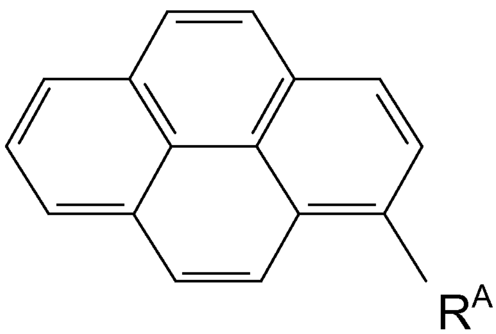

wobei $R^A = -(CH_2)_m(-C(=O))_p-O-(CH_2-CH_2-O)_n-(CH_{(2-a)}(CH_3)_a-CH_{(2-b)}(CH_3)_b-O)_q - CH_3$, wobei m in einem Bereich von 2 bis 10 liegt, p = 0 oder 1 ist, n in einem Bereich von 3 bis 100 und q in einem Bereich von 0 bis 97 liegt, wobei n+q in einem Bereich von 3 bis 100 liegt, und wobei a oder b entweder 0 oder 1 und a+b=1 ist, und
dass die Suspension wenigstens einen Hilfsstoff H1 enthält, wobei X= N ist und wobei $R^{H1}$, $R^{H2}$, $R^{H3}$, $R^{H4}$ gleich sind und aus der Gruppe, die aus substituierten und nichtsubstituierten, verzweigten und unverzweigten C1-C8Alkylgruppen wie Methyl, Ethyl, n-Propyl, iso-Propyl, n-Butyl, n-Pentyl, n-Hexyl, n-Heptyl und n-Octyl, vorzugsweise C2-C3 Alkylgruppen wie Ethyl, n-Propyl und iso-Propyl, besteht, ausgewählt werden.

Gemäß einem Aspekt 31 betrifft die vorliegende Erfindung eine Suspension gemäß einem der vorhergehenden Aspekte, wobei das wassermischbare Lösungsmittel zu mindestens 90 Gew.-% aus einem Lösungsmittel mit einem Dipolmoment von mindestens $3{,}5 \cdot 10^{-30}$ Cm besteht.

Gemäß einem Aspekt 32 betrifft die vorliegende Erfindung ein Verfahren, wobei das Verfahren die folgenden Schritte umfasst:

a) Bereitstellen einer Suspension von Graphit und einem Additiv gemäß Formel (I)

$$cR(\text{-}Sp\text{-}W)_x \qquad (I),$$

in einem wassermischbaren, vorzugsweise wässrigen, Lösungsmittel, und

b) Zerkleinern des Graphits unter Eintragen von Energie in die Suspension mittels Ultraschall, Kugelmühle, Rührwerkskugelmühle, Rotor-Stator-System, Homogenisator oder Kombinationen davon unter Erhalt von Graphenplättchen,

Gemäß einem Aspekt 33 betrifft die vorliegende Erfindung ein Verfahren gemäß Aspekt 32, wobei sich an Schritt b) ein Schritt c) anschließt:

c) Isolieren der in Schritt b) erhaltenen Graphenplättchen durch Zentrifugieren der Suspension unter Erhalt einer Mischung von Graphenplättchen und Additiv im Überstand.

Gemäß einem Aspekt 34 betrifft die vorliegende Erfindung ein Verfahren gemäß einem der Aspekte 32 bis 33, wobei bei Schritt a) und/oder b) wenigstens ein Hilfsstoff gemäß Formel H1, vorzugsweise wenigstens zwei voneinander verschiedene Hilfsstoffe mit der Formel H1, verwendet wird.

Gemäß einem Aspekt 35 betrifft die vorliegende Erfindung ein Verfahren gemäß einem der Aspekte 32 bis 34, wobei in Schritt b) die Energie in die Suspension mittels Rührwerkskugelmühle eingetragen wird.

Gemäß einem Aspekt 36 betrifft die vorliegende Erfindung ein Verfahren gemäß einem der Aspekte 32 bis 35, wobei der wenigstens eine Hilfsstoff mit der Formel H1 in einer Konzentration von mindestens 30 Gew.-%, vorzugsweise mindestens 70 Gew.-%, bezogen auf das Gewicht des Graphits, verwendet wird.

Gemäß einem Aspekt 37 betrifft die vorliegende Erfindung Graphenplättchen, wobei die Graphenplättchen gemäß einem Verfahren nach einem der Aspekte 32 bis 36 hergestellt sind.

Gemäß einem Aspekt 38 betrifft die vorliegende Erfindung eine Suspension umfassend Graphenplättchen, die gemäß einem Verfahren nach einem der Aspekte 32 bis 36 hergestellt sind.

Gemäß einem Aspekt 39 betrifft die vorliegende Erfindung die Verwendung eines Additivs gemäß Formel (I)

$$cR(\text{-}Sp\text{-}W)_x \qquad (I),$$

bei der Stabilisierung und/oder Herstellung von Graphenplättchen, vorzugsweise in einer Suspension, wobei das Additiv gemäß Formel (I) eine Struktur, wie in einem der Aspekte 1 bis 17 angegeben, aufweist.

Gemäß einem Aspekt 40 betrifft die vorliegende Erfindung die Verwendung gemäß Aspekt 39, wobei das Additiv gemäß Formel (I) in Kombination mit einem Hilfsstoff gemäß Formel H1, der eine Struktur, wie in einem der Ansprüche 26 bis 30 angegeben, aufweist, verwendet wird.

Gemäß einem Aspekt 41 betrifft die vorliegende Erfindung die Verwendung von Graphenplättchen gemäß Aspekt 37 oder die Verwendung von Suspensionen gemäß einem der Aspekte 1 bis 32 und 38 bei der Herstellung von elektronischen Materialien, elektronischen Gegenständen, wie elektronischen Schaltungen und Kondensatoren wie Supercaps, elektrisch leitfähigen Filmen, chemischen Sensoren, Kompositmaterialien, wie verstärkte und/oder ableitfähige Kunststoffe, Batterien und Membranen.

Die nachfolgenden Figuren und Beispiele dienen lediglich der Veranschaulichung der Erfindung, ohne dass die Erfindung auf die Beispiele zu beschränken ist.

## Figuren

Figur 1 zeigt ein Ramanspektrum der gemäß Beispiel 1-3 hergestellten Graphenplättchen.

Figur 2 zeigt ein Ramanspektrum der gemäß Beispiel 3-1 hergestellten Graphenplättchen.

Figur 3 zeigt ein Ramanspektrum der gemäß Beispiel 1-2 hergestellten Graphenplättchen.

Figur 4 zeigt ein Ramanspektrum von Graphit.

## Beispiele

Beispiel 1:

5 g Graphit Flocken (Sigma Aldrich, Produktnummer 332461) wurden in 1 Liter Additivlösung (Additiv in deionisiertem Wasser) dispergiert. Nach 10 h Rühren mittels Magnetrührer bei Raumtemperatur wurde die Suspension über 3 h in einer Perlmühle DISPERMAT® SL25 ($ZrO_2$-Kugeln mit einem Durchmesser von 0,6 bis 0,8 mm, Umfangsgeschwindigkeit 8 m/s, Temperatur am Mahlraumauslass 20°C) beansprucht. Der spezifische Energieeintrag betrug 216 · $10^4$ kJ/kg Graphit. Das Produkt wurde 10 min bei 15000 rpm in einer Hettich MIKRO200 Zentrifuge zentrifugiert.

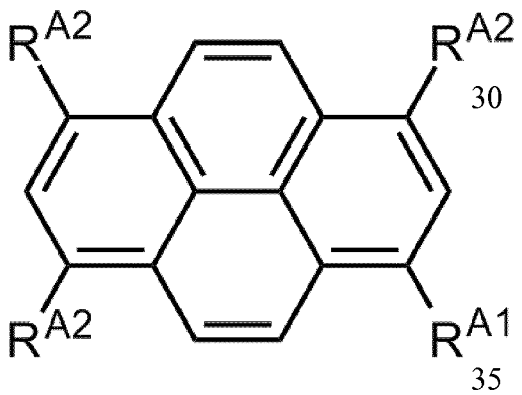

Additiv 1: $R^{A1}$ = $-(CH_2)_3-COOH$, $R^{A2}$ = H

Additiv 2: $R^{A1}$ = $-C(=O)-CH_2-N^+(CH_3)_3$, $R^{A2}$ = H, Gegenion: $Br^-$

Additiv 3: $R^{A1}$ = $-(CH_2)_3-C(=O)-O-(CH_2-CH_2-O)_n-CH_3$, $R^{A2}$ = H, n = 12 bis 13, mittlere Molmasse der Ethylenoxideinheit = 550 g/mol TPA: $R^{A1}$ = $R^{A2}$ = $SO_3^-$, Gegenion: $Na^+$

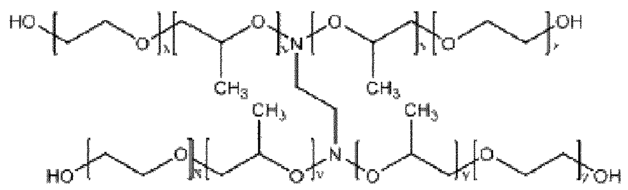

Tetronic 701

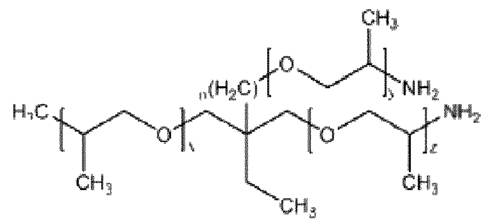

Jeffamine T-403

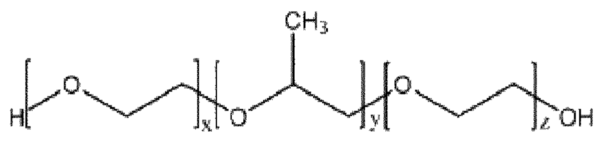

Pluronic P-123

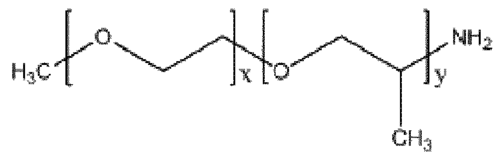

Jeffamine M2070

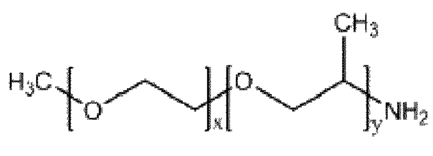

Surfonamine L-100

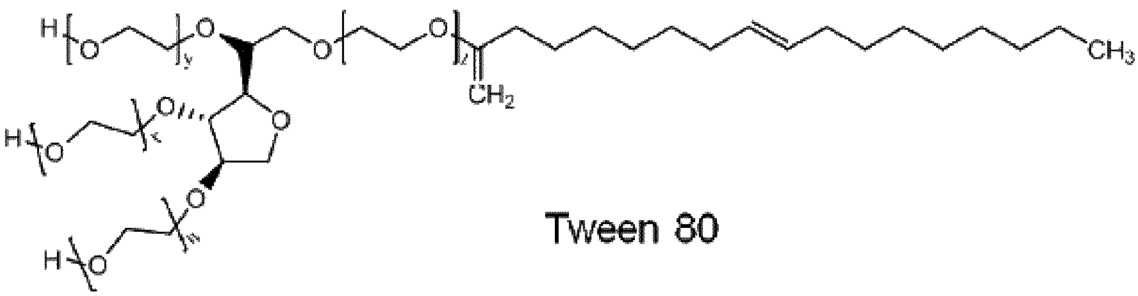

Tween 80

| | Additiv | Menge Additiv | zentrifugierte Proben | Mittleres PeakVerhältnis I(2D)/I(G) aus RamanMessungen |
|---|---|---|---|---|
| VB 1-1 | 1 | 3g | Transparente, mitteldunkle Graphenplättchensuspension, | |
| | | | jedoch schlechte Stabilität | |
| VB 1-2 | 2 | 3 g | Transparente, dunkle Graphenplättchensuspension, mäßig gute Stabilität | 0,60 |
| Beispiel 1-3 | 3 | 3 g | Transparente, dunkle Graphenplättchensuspension, herausragende Stabilität ohne merkliche Sedimentation auch nach 1 Monat | 0,70 |
| VB 1-4 | TPA | 3 g | Schlechte Stabilität | |
| VB 1-5 | Tetronic 701 | 50 g | Sehr schlechte Stabilität | |
| VB 1-6 | Jeffamine T-403 | 50 g | Sehr schlechte Stabilität | |
| VB 1-7 | Pluronic P-123 | 50 g | Transparente, dunkle Graphenplättchensuspension, gute Stabilität | 0,59 |
| VB 1-8 | Jeffamine M2070 | 50 g | Schlechte Stabilität | |
| VB 1-9 | Surfonamine L-100 | 50 g | Schlechte Stabilität | |
| VB 1-10 | Tween 80 | 50 g | Schlechte Stabilität | |

Das im Vergleichsbeispiel VB 1-4 erhaltene Produkt wies im Vergleich zu den in den Vergleichsbeispielen 1-1 und 1-2 erhaltenen Produkten und zu dem in Beispiel 1-3 erhaltenen Produkt einen schlechten Delaminierungsgrad auf.

Unter einem "schlechten Delaminierungsgrad" wurde verstanden, dass die erhaltenen Graphitplättchen im Durchschnitt mehr als 10 Graphenmonolagen aufweisen.

Unter einem "guten Delaminierungsgrad" wurde mithin verstanden, dass die erhaltenen Plättchen Graphenplättchen waren und im Durchschnitt 10 oder weniger Graphenmonolagen aufwiesen.

Unter einem "sehr guten Delaminierungsgrad" wurde verstanden, dass die Graphenplättchen im Durchschnitt 6 oder weniger Graphenmonolagen aufwiesen.

Unter einer sehr guten Stabilität der Graphenplättchen wurde verstanden, dass es auch nach einer Standzeit von 6 Monaten zu keiner Sedimentbildung kam.

Unter einer guten Stabilität einer Graphenplättchensuspension wurde verstanden, dass es auch nach einer Standzeit von 1 Monat zu keiner Sedimentbildung kam.

Unter einer mäßigen Stabilität einer Graphenplättchensuspension wurde verstanden, dass es erst nach einer Standzeit von 1 Woche zu einer Sedimentbildung kam.

Unter einer schlechten Stabilität einer Graphenplättchensuspension wurde verstanden, dass es bereits nach

einer Standzeit von 1 Tag zu einer Sedimentbildung kam.

Unter einer sehr schlechten Stabilität einer Graphenplättchensuspension wurde verstanden, dass es bereits nach einer Standzeit von 3 Stunden zu einer Sedimentbildung kam.

Die Standzeit wurde bestimmt, indem 4 ml Graphenplättchensuspension in einem verschlossenen Röhrchen mit einem Durchmesser von 14 mm senkrecht bei einer Temperatur von 25 °C ohne Schütteln gelagert wurde.

Der Delaminierungsgrad wurde über die Halbwertsbreitenbestimmung des 2D-Peaks der Ramanspektren von mindestens 50 Graphenplättchen bestimmt. Gleichzeitig zeigten sich innerhalb der Gruppe der Vergleichsbeispiele 1-1 und 1-2 und des Beispiels 1-3 deutlich bessere Eigenschaften bei dem Produkt von Beispiel 1-3. Hierbei wurden beispielsweise hochsymmetrische 2D-Peaks beobachtet, wodurch auf einen sehr hohen Delaminierungsgrad geschlossen werden konnte. Ein hochsymmetrischer Peak wurde erhalten, wenn im Wesentlichen Graphenplättchen mit einer Graphenmonolage vorlagen. Ferner zeigte sich bei Beispiel 1-3 eine besonders hohe Langzeitstabilität. Es wurden keine Ramanmessungen bei instabilen Proben durchgeführt.

Beispiel 2: Synthese Additiv 3

20 g 4-(1-Pyrenyl)buttersäure, 41,2 g Polyethylenglycolmonomethylether MPEG 500 (OHZ = 112 mg KOH/g) und 0,4 g para-Toluolsulfonsäure wurden in 30 g Xylol gelöst auf 160°C erhitzt. Hierbei wurde freigesetztes Wasser kontinuierlich unter Einsatz eines Wasserabscheiders abgetrennt. Nach 6 h wurde das Lösemittel abdestilliert. Das erhaltene Produkt wies eine Säurezahl von 1 mg KOH/g auf.

Beispiel 3:

5 g Graphit Flocken (Sigma Aldrich, Produktnummer 332461) wurden in 1 Liter 1 Gew.-%iger wässriger Tetraethylammoniumchlorid-Lösung (Sigma Aldrich, Reinheit ≥ 98,0%) dispergiert und 10 h bei Raumtemperatur (RT) mittels Magnetrührer gerührt. Danach wurde der Überstand verworfen und das Sediment in 1 l Additivlösung (Additiv in deionisiertem Wasser) redispergiert. Nach 10 h Rühren mittels Magnetrührer bei RT wurde die Suspension über 3 h in einer Perlmühle DISPERMAT® SL25 ($ZrO_2$-Kugeln mit einem Durchmesser von 0,6 bis 0,8 mm, Umfangsgeschwindigkeit 8 m/s, Temperatur am Mahlraumauslass 20 °C) beansprucht. Der spezifische Energieeintrag betrug 216 · $10^4$ kJ/kg Graphit. Das Produkt wurde 10 min bei 15000 rpm in einer Hettich MIKRO200 Zentrifuge zentrifugiert.

| | Additiv | Menge Additiv | Beobachtung | Mittleres PeakVerhältnis I(2D)/I(G) aus RamanMessungen |
|---|---|---|---|---|
| Beispiel | 3 | 50 mg | Transparente, dunkle | 0,78 |
| 3-1 | | | Graphenplättchensuspension, sehr guter Delaminierungsgrad, herausragende Stabilität | |
| VB 3-2 | Pluronic P-123 | 1 g | Transparente, dunkle Graphenplättchensuspension, jedoch schlechter Delaminierungsgrad, schlechte Stabilität | Nicht vermessen, da instabil |

Ein Vergleich der Parameter von Beispiel 2-3 und von Beispiel 3-1 zeigte, dass bei zusätzlicher Verwendung eines Hilfsstoffes (Tetraethylammoniumchlorid) in Beispiel 3-1 der Anteil an erfindungsgemäß zu verwendendem Additiv von 3 g auf 50 mg pro Liter Additivlösung gesenkt werden konnte.

Beispiel 4:

200 mg Graphit Flocken (Sigma Aldrich, Produktnummer 332461) wurden in 40 g 1 Gew.-%iger wässriger Tetraethylammoniumchlorid-Lösung (von Sigma Aldrich) dispergiert und 10 h mittels Magnetrührer bei Raumtemperatur (RT) gerührt. Danach wurde der Überstand verworfen und das Sediment in 40 g Additivlösung (Additiv in deionisiertem Wasser) redispergiert. Nach 10 h Rühren mittels Magnetrührer bei RT wurde die Suspension über 6 h in einem Laborhomogenisator UP50H der Fa. Hielscher (Amplitude: 60 %; Cycle: 0,5) beansprucht. Die Temperatur der Suspension wurde mithilfe eines Eisbades auf 20 °C eingestellt. Der spezifische Energieeintrag betrug 12,95 · $10^6$ kJ/kg Graphit. Das Produkt wurde 10 min bei 15000 rpm in einer Hettich MIKRO200 Zentrifuge zentrifugiert.

| | Additiv | Menge Additiv | zentrifugierte Proben |
|---|---|---|---|
| Beispiel 4-1 | 3 | 2 mg | Transparente, dunkle Graphenplättchensuspension, hohe Ausbeute an Graphenplättchen, sehr guter Delaminierungsgrad, herausragende Stabilität |

Vergleichsbeispiel 5:

200 mg Graphit Flocken (Sigma Aldrich, Produktnummer 332461) wurden in 40 g deionisiertem Wasser dispergiert und mit 500 mg Tetraethylammoniumchlorid gemischt. Die Suspension wurde für 10 h bei Raumtemperatur gerührt. Danach wurde die Suspension über 6 h in einem Laborhomogenisator UP50H der Fa. Hielscher (Amplitude: 60 %; Cycle: 0,5) beansprucht. Die Temperatur der Suspension wurde mithilfe eines Eisbades auf 20 °C eingestellt. Der spezifische Energieeintrag betrug $12{,}95 \cdot 10^6$ kJ/kg Graphit. Das Produkt wurde 10 min bei 15000 rpm in einer Hettich MIKRO200 Zentrifuge zentrifugiert.

Hierbei wurde beobachtet, dass der Graphit nicht vollständig vom Lösungsmittel benetzt wurde und das Material aufschwamm. Ferner zeigte sich eine sehr schlechte Stabilität, bei der sich der Graphit nach wenigen Minuten absetzte. Es erfolgte keine Delaminierung. Die zentrifugierte Probe enthielt keine Graphenplättchen.

Vergleichsbeispiel 6:

200 mg Graphit Flocken (Sigma Aldrich, Produktnummer 332461) wurden in 40 g deionisiertem Wasser dispergiert. Die Suspension wurde über 6 h in einem Laborhomogenisator UP50H der Fa. Hielscher (Amplitude: 60 %; Cycle: 0,5) bei Raumtemperatur beansprucht. Die Temperatur der Suspension wurde mithilfe eines Eisbades auf 20 °C eingestellt. Der spezifische Energieeintrag betrug $12{,}95 \cdot 10^6$ kJ/kg Graphit. Das Produkt wurde 10 min bei 15000 rpm in einer Hettich MIKRO200 Zentrifuge zentrifugiert.

Hierbei wurde beobachtet, dass der Graphit nur teilweise vom Lösungsmittel benetzt wurde und das Material aufschwamm. Ferner zeigte sich eine sehr schlechte Stabilität, bei der sich der Graphit nach wenigen Minuten absetzte. Es erfolgte keine Delaminierung. Die zentrifugierte Probe enthielt keine Graphenplättchen.

## Patentansprüche

1. Suspension, umfassend ein wassermischbares Lösungsmittel, Graphenplättchen und mindestens 1 Additiv gemäß Formel I

$$cR(\text{-}Sp\text{-}W)_x \qquad (I),$$

mit den Strukturelementen cR, Sp und W,
wobei
das Strukturelement cR ein 2 bis 7 aromatische Ringe umfassendes, kondensiertes, polycyclisches Ringsystem ist,
das Strukturelement Sp ein eine lineare Kette aufweisender Abstandshalter ist, bei dem in der linearen Kette 2 bis 10 Atome angeordnet sind und wenigstens eine Einfachbindung in der linearen Kette enthalten ist,
und das Strukturelement W die Löslichkeit des Additivs in Wasser erhöht, wobei,
wenn kein Strukturelement W wenigstens eine Gruppe, die aus der Gruppe, die aus Polyoxyalkylengruppen mit wenigstens 3 Alkylenoxideinheiten, Monosaccharidgruppen, Disaccharidgruppen, Oligosaccharidgruppen mit 3 bis 10 Saccharideinheiten, Polyoxazolingruppen mit 3 bis 10 Oxazolineinheiten,
$-S(=O)_2OH$, $-S(=O)_2NH_2$, $-O-P(=O)(OR^{cR})(OH)$, $-O-P(=O)(OH)_2$, $-P(=O)(OR^{cR})(OH)$, $-P(=O)(OH)_2$, $-O-S(=O)_2OH$ und $-S(=O)_2OH$ besteht, ausgewählt wird, aufweist,
die Strukturelemente W insgesamt mindestens zwei identische oder unterschiedliche funktionelle protonierbare, protonierte, deprotonierbare oder deprotonierte Gruppen aufweist,
$R^{cR}$ eine unsubstituierte, verzweigte oder unverzweigte C1 bis C3 Alkylgruppe ist und
wobei x eine ganze Zahl aus einem Bereich von 1 bis 4 ist.

2. Suspension gemäß Anspruch 1,
**dadurch gekennzeichnet,**
**dass** die 2 bis 10 Atome der linearen Kette des Strukturelements Sp aus der Gruppe, die aus C, O, N, S, Si und P

besteht, ausgewählt werden, mit der Maßgabe, dass in der linearen Kette, abgesehen von Kohlenstoffatomen, keine identischen Atome direkt zueinander benachbart angeordnet sind.

3. Suspension gemäß einem der vorhergehenden Ansprüche, **dadurch gekennzeichnet,** **dass** das Strukturelement W eine Struktur gemäß Formel (II) aufweist:

$$-R_k((-E^{bo})_w-E^{th}-O-R^{th})_y(-F)_z \qquad (II)$$

wobei
R aus der Gruppe, die aus verzweigten und unverzweigten C1-C6 Alkylresten, verzweigten und unverzweigten C2-C6 Alkenylresten, verzweigten und unverzweigten C2-C6 Alkinylresten, Phenylresten, Heteroarylresten mit 4 bis 5 Kohlenstoffatomen, C5-C7 Cycloalkylresten, nichtaromatischen heterocyclischen Resten mit 4 bis 6 Kohlenstoffatomen und Mischungen davon besteht, ausgewählt wird, wobei vorgenannte Reste substituiert und unsubstituiert sein können, und wobei k 0 oder 1 ist,
$E^{bo}$ eine aus 1 bis 3 Atomen bestehende lineare Kette ist, wobei die Atome aus der Gruppe, die aus C, N und O besteht, ausgewählt werden, mit der Maßgabe, dass die Kette maximal nur 1 O oder N enthält, und wobei w 0 oder 1 ist,
$E^{th}$ eine Polyalkylenoxidkette mit 3 bis 100 Alkylenoxideinheiten, wobei die Alkylenoxideinheiten aus der Gruppe, die aus Ethoxyeinheiten, Propoxyeinheiten und Mischungen davon besteht, ausgewählt wird, ist,
$R^{th}$ aus der Gruppe, die aus H, unsubstituiertem, verzweigtem und unverzweigtem C1-C4-Alkyl und unsubstituiertem -C(=O)C1-C4-Alkyl besteht, ausgewählt wird,
F aus der Gruppe, die aus -COOH, $-(N(R^{cR})_3)^+$, $-O-P(=O)(OR^{cR})(OH)$, $-O-P(=O)(OH)_2$, $-P(=O)(OR^{cR})(OH)$, $-P(=O)(OH)_2$, $-O-S(=O)_2OH$, $-S(=O)_2OH$, Monosaccharidgruppen, Disaccharidgruppen, Oligosaccharidgruppen mit 3 bis 10 Saccharideinheiten und Polyoxazolingruppen mit 3 bis 10 Oxazolineinheiten, besteht, ausgewählt wird,
$R^{cR}$ eine unsubstituierte, verzweigte oder unverzweigte C1 bis C3 Alkylgruppe ist, und
wobei y und z jeweils unabhängig voneinander eine ganze Zahl von 0 bis 3 bedeuten, mit der Maßgabe, dass y + z mindestens 1 ist.

4. Suspension gemäß einem der vorhergehenden Ansprüche,
**dadurch gekennzeichnet,**
**dass** die Strukturelemente (-Sp-W) zusammengenommen die Struktur $-(CH_2)_m(-C(=O))_p-O-E^{AO}-CH_3$, wobei m in einem Bereich von 2 bis 10 liegt, p = 0 oder 1 ist, $E^{AO}$ aus n Ethoxyeinheiten und q Propoxyeinheiten besteht, n in einem Bereich von 3 bis 100 und q in einem Bereich von 0 bis 97 liegt, wobei n+q in einem Bereich von 3 bis 100 liegt, aufweisen.

5. Suspension gemäß einem der vorhergehenden Ansprüche,
**dadurch gekennzeichnet,**
**dass** das Additiv folgende Struktur aufweist:

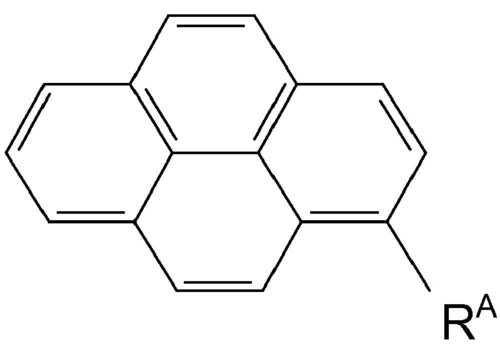

wobei $R^A = -(CH_2)_m(-C(=O))_p-O-E^{AO}-CH_3$ ist und m in einem Bereich von 2 bis 10 liegt, p = 0 oder 1 ist, $E^{AO}$ aus n Ethoxyeinheiten und q Propoxyeinheiten besteht, n in einem Bereich von 5 bis 48 und q in einem Bereich von 0 bis 43 liegt, wobei n+q in einem Bereich von 5 bis 48 liegt.

6. Suspension gemäß einem der Ansprüche 3 bis 5,
**dadurch gekennzeichnet,**

**dass** der molare Anteil an Ethoxyeinheiten in Kettenstrukturen, die aus mindestens 3 Einheiten bestehen, welche ausgewählt werden aus der Gruppe bestehend aus Ethylenoxideinheiten und Propylenoxideinheiten, in den Strukturelementen Sp und W mindestens 50 mol-% beträgt.

**7.** Suspension gemäß einem der vorhergehenden Ansprüche,
**dadurch gekennzeichnet,**
**dass** der Oxidgehalt der Graphenplättchen unter 1,5 Gew.-% liegt.

**8.** Suspension gemäß einem der vorhergehenden Ansprüche,
**dadurch gekennzeichnet,**
**dass** die Graphenplättchen im Ramanspektrum ein Intensitätsverhältnis des 2D-Peaks zum G-Peak in einem Bereich von 0,5 bis 2 und eine Halbwertsbreite des 2D-Peaks in einem Bereich von 35 bis 65 $cm^{-1}$ aufweisen.

**9.** Suspension gemäß einem der vorhergehenden Ansprüche,
**dadurch gekennzeichnet,**
**dass** das mindestens eine Additiv gemäß Formel (I) eine Wasserlöslichkeit bei einer Temperatur von 20°C von mindestens 0,05 g/l aufweist.

**10.** Suspension gemäß einem der vorhergehenden Ansprüche,
**dadurch gekennzeichnet,**
**dass** die Suspension mindestens 1 Hilfsstoff gemäß Formel H1 umfasst,

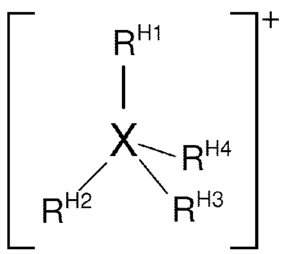

Formel H1,

wobei X aus der Gruppe, die aus N und P besteht, ausgewählt wird,
wobei $R^{H1}$, $R^{H2}$, $R^{H3}$, $R^{H4}$ unabhängig voneinander gleich oder verschieden sind und aus der Gruppe, die aus verzweigten und unverzweigten C1-C8 Alkylgruppen, verzweigten und unverzweigten C2-C8 Alkenylgruppen, verzweigten und unverzweigten C2-C8 Alkinylgruppen, C5-C10 Arylgruppen, Heteroarylen mit 4 bis 9 Kohlenstoffatomen, C5-C12 Cycloalkylgruppen, nichtaromatischen Heterocyclen mit 3 bis 11 Kohlenstoffatomen, wobei die vorgenannten Gruppen substituiert und unsubstituiert sein können, $-N(R^{cR})_2$, $-NHR^{cR}$, $-NH_2$, $-(N(R^{cR})_3)^+$, -H, -OH, -$OR^{H*}$ und -CN besteht, ausgewählt wird,
wobei $R^{H*}$ aus der Gruppe, die aus verzweigten und unverzweigten C1-C8 Alkylgruppen, verzweigten und unverzweigten C2-C8 Alkenylgruppen, verzweigten und unverzweigten C2-C8 Alkinylgruppen, C5-C10 Arylgruppen, Heteroarylen mit 4 bis 9 Kohlenstoffatomen, C5-C12 Cycloalkylgruppen und nichtaromatischen Heterocyclen mit 3 bis 11 Kohlenstoffatomen besteht, wobei die vorgenannten Gruppen substituiert und unsubstituiert sein können, ausgewählt wird,
und wobei, sofern wenigstens eines von $R^{H1}$, $R^{H2}$, $R^{H3}$, $R^{H4}$ unabhängig voneinander aus der Gruppe, die aus substituierter und nichtsubstituierter Arylgruppe, Heteroarylgruppe, nichtaromatischer Cycloalkylgruppe und nichtaromatischer Heterocycloalkylgruppe besteht, ausgewählt wird, die Substituenten der substituierten Gruppe aus der Gruppe, die aus verzweigten und unverzweigten C1-C8 Alkylgruppen, verzweigten und unverzweigten C2-C8 Alkenylgruppen und verzweigten und unverzweigten C2-C8 Alkinylgruppen besteht, wobei die vorgenannten Gruppen substituiert und unsubstituiert sein können, ausgewählt werden,
wobei die Substituenten aus der Gruppe, die aus =O, $=NR^{cR}$, =NH, -CN, -SH, $-OR^{cR}$, -OH, $-R^{cR}$, $-N(R^{cR})_2$, $-NHR^{cR}$, $-NH_2$, $-(N(R^{cR})_3)^+$, $-C(=O)-OR^{cR}$, $-O-C(=O)-R^{cR}$, $-O-P(=O)(OR^{cR})_2$, $-P(=O)(OR^{cR})2$, $-O-S(=O)_2-OR^{Et}$, $-S(=O)_2-OR^{Et}$, $-S(=O)_2R^{Et}$ und $-S(=O)_2N(R^{cR})_2$, besteht, ausgewählt werden,
wobei $R^{Et}$ eine verzweigte oder unverzweigte C1-C12 Alkylgruppe, verzweigte oder unverzweigte C2-C12 Alkenylgruppe, verzweigte oder unverzweigte C2-C12 Alkinylgruppe, C6-C10 Arylgruppe, Heteroarylgruppe mit 4 bis 9 Kohlenstoffatomen, C5-C12 Cycloalkylgruppe oder nichtaromatische heterocyclische Gruppe mit 4 bis 11 Kohlenstoffatomen ist, wobei die vorgenannten Gruppen substituiert oder unsubstituiert sein können,
und wobei $R^{cR}$ eine unsubstituierte, verzweigte oder unverzweigte C1-C3 Alkylgruppe ist.

**11.** Suspension gemäß Anspruch 10,
**dadurch gekennzeichnet,**
**dass** die Suspension wenigstens einen Hilfsstoff gemäß Formel H1 enthält, wobei X= N ist und wobei $R^{H1}$, $R^{H2}$, $R^{H3}$, $R^{H4}$ unabhängig voneinander gleich oder verschieden sind und aus der Gruppe, die aus substituierten und nichtsubstituierten, verzweigten und unverzweigten C1-C8 Alkylgruppen besteht, ausgewählt werden.

**12.** Suspension gemäß einem der Ansprüche 10 oder 11,
**dadurch gekennzeichnet,**
**dass** die Suspension wenigstens einen Hilfsstoff gemäß Formel H1 enthält, wobei X N ist und wobei $R^{H1}$, $R^{H2}$, $R^{H3}$, $R^{H4}$ gleich oder verschieden sind und aus der Gruppe, die aus nichtsubstituierten, verzweigten und unverzweigten C1-C6 Alkylgruppen, besteht, ausgewählt werden.

**13.** Verfahren zur Herstellung einer Suspension gemäß einem der vorhergehenden Ansprüche,
**dadurch gekennzeichnet,**
**dass** das Verfahren die folgenden Schritte umfasst:

a) Bereitstellen einer Suspension von Graphit in einem wassermischbaren Lösungsmittel, und
b) Zerkleinern des Graphits unter Eintragen von Energie in die Suspension mittels Ultraschall, Kugelmühle, Rührwerkskugelmühle, Rotor-Stator-System, Homogenisator oder Kombinationen davon unter Erhalt von Graphenplättchen,

wobei in Schritt a) und/oder b) ein Additiv gemäß Formel (I)

$$cR(-Sp-W)_x \qquad (I)$$

zugegeben wird.

**14.** Verfahren gemäß Anspruch 13,
**dadurch gekennzeichnet,**
**dass** bei Schritt a) und/oder b) wenigstens ein Hilfsstoff gemäß Formel H1 verwendet wird.

**15.** Graphenplättchen,
**dadurch gekennzeichnet,**
**dass** die Graphenplättchen gemäß einem Verfahren nach einem der Ansprüche 13 bis 14 hergestellt sind.

**16.** Verwendung eines Additivs gemäß Formel (I)

$$cR(-Sp-W)_x \qquad (I),$$

bei der Stabilisierung und/oder Herstellung von Graphenplättchen, wobei das Additiv gemäß Formel (I) eine Struktur, wie in einem der Ansprüche 1 bis 12 angegeben, aufweist.

Figur 1:

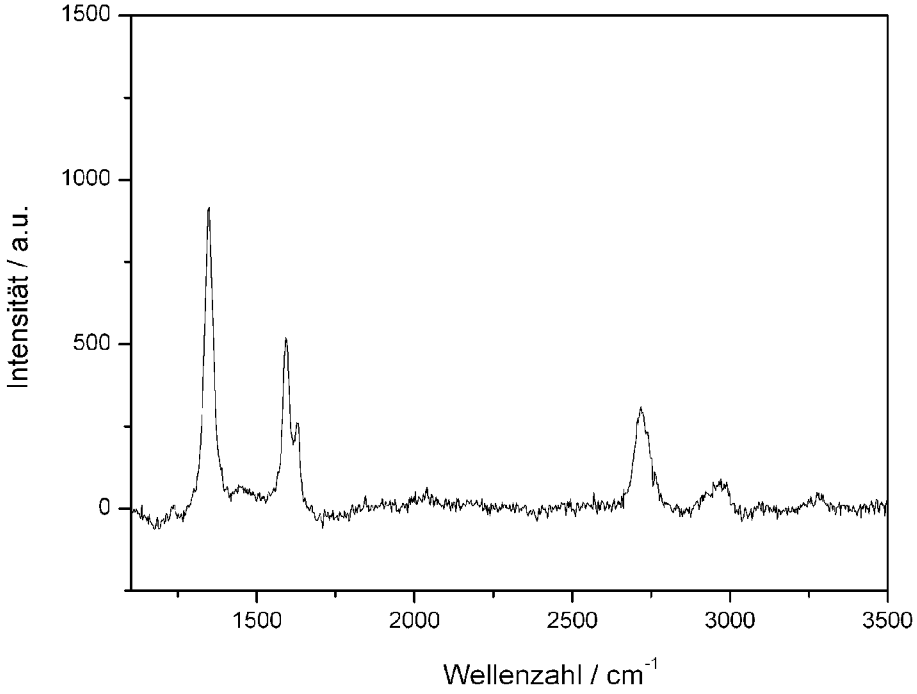


Figur 2:

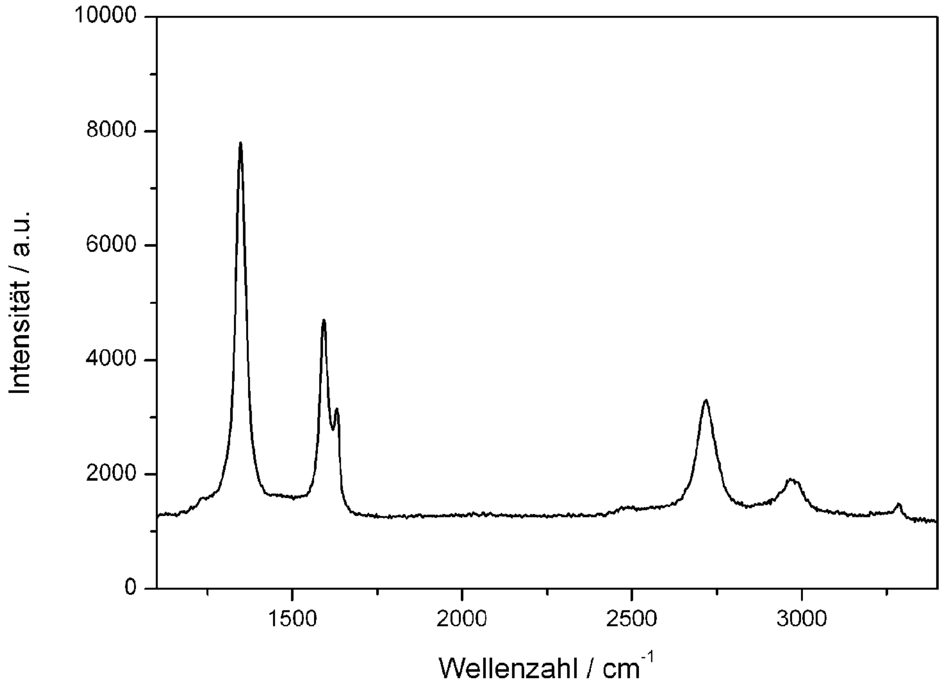

Figur 3:

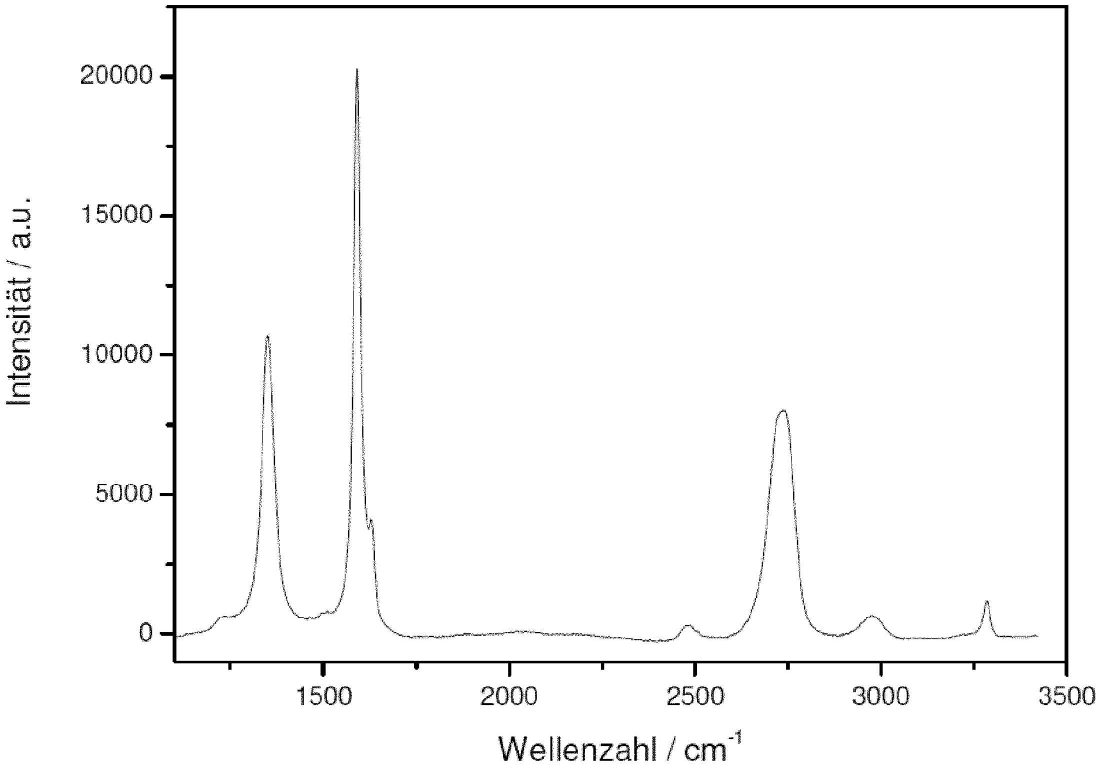


Figur 4:

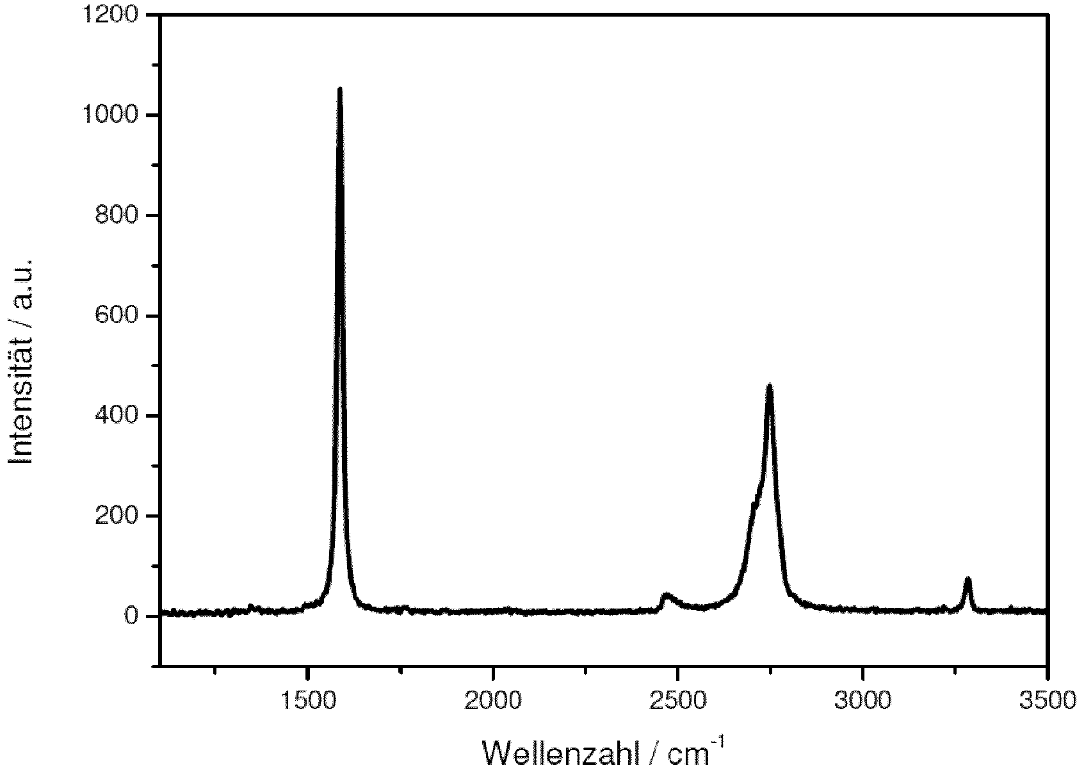

Europäisches Patentamt
European Patent Office
Office européen des brevets

# EUROPÄISCHER RECHERCHENBERICHT

Nummer der Anmeldung
EP 12 19 0142

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2011/066332 A2 (RENSSELAER POLYTECH INST [US]; AN XIAOHONG [US]; KAR SWASTIK [US]; SIM) 3. Juni 2011 (2011-06-03)<br>* Ansprüche 14-40 *<br>* Absätze [0006], [0023], [0024], [0031] - [0034] *<br>----- | 1-16 | INV.<br>C09C1/44<br>C01B31/04 |
| X | US 2012/116094 A1 (SWAGER TIMOTHY M [US] ET AL) 10. Mai 2012 (2012-05-10)<br>* Ansprüche 1-4,25-28,38,64,68 *<br>* Absätze [0048] - [0067], [0143] *<br>----- | 1-16 | |
| X | FR 2 940 965 A1 (CENTRE NAT RECH SCIENT [FR]; UNIV PASTEUR [FR])<br>16. Juli 2010 (2010-07-16) | 15 | |
| A | * Ansprüche 1-16 *<br>----- | 1-14 | |

| RECHERCHIERTE SACHGEBIETE (IPC) |
|---|
| C09C<br>C01B |

Der vorliegende Recherchenbericht wurde für alle Patentansprüche erstellt

1

| Recherchenort | Abschlußdatum der Recherche | Prüfer |
|---|---|---|
| Den Haag | 3. Januar 2014 | Gerwann, Jochen |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 12 19 0142

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-01-2014

| Im Recherchenbericht angeführtes Patentdokument | Datum der Veröffentlichung | Mitglied(er) der Patentfamilie | Datum der Veröffentlichung |
|---|---|---|---|
| WO 2011066332 A2 | 03-06-2011 | KEINE | |
| US 2012116094 A1 | 10-05-2012 | EP 2635525 A2 | 11-09-2013 |
| | | US 2012116094 A1 | 10-05-2012 |
| | | US 2012171093 A1 | 05-07-2012 |
| | | WO 2012061603 A2 | 10-05-2012 |
| | | WO 2012061607 A2 | 10-05-2012 |
| FR 2940965 A1 | 16-07-2010 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 7892514 B2
- US 20090028777 A1
- US 7914844 B2
- US 7824651 B2
- WO 2011070026 A2
- US 20100022422 A1
- US 6444776 B


### In der Beschreibung aufgeführte Nicht-Patentliteratur


- **ANINDYA DAS et al.** Raman spectroscopy of graphene on different substrates and influence of defects. *Bull. Mater. Sci.,* Juni 2008, vol. 31 (3), 579-584